# EUROPEAN PATENT APPLICATION

(11) **EP 4 664 851 A1**
(43) Date of publication of application: **17.12.2025**
(21) Application number: 24759644.8
(22) Date of filing: 19.02.2024
(51) Int. Cl.: H04L 45/28

(54) **PACKET FORWARDING METHOD, DEVICE AND SYSTEM**

(30) Priority: 25.02.2023 CN 202310206316; 12.06.2023 CN 202310696717
(71) Applicant: Huawei Technologies Co., Ltd., Shenzhen, Guangdong 518129 (CN)
(72) Inventor: HU, Zhibo, Shenzhen, Guangdong 518129 (CN); LIU, Shuying, Shenzhen, Guangdong 518129 (CN); XU, Guoqi, Shenzhen, Guangdong 518129 (CN); FANG, Sheng, Shenzhen, Guangdong 518129 (CN)
(74) Representative: Thun, Clemens
(86) International application number: PCT/CN2024/077622
(87) International publication number: WO 2024/174967

(57) **Abstract**

A packet forwarding method, apparatus, and system are provided, and belong to the field of network technologies. A destination address field of a first packet received by a first network node includes a compressed segment identifier corresponding to a first outbound interface or a next-hop node of the first network node; based on the first outbound interface being faulty or the next-hop node being faulty, the first network node determines a second segment identifier based on segment identifier planning information of the node corresponding to the compressed segment identifier, and forwards the first packet based on the second segment identifier, where the second segment identifier is a segment identifier in a segment list of the first packet or a segment identifier in the destination address field. In this application, when an outbound interface or a next-hop node of a network node is faulty, the network node determines a next segment identifier based on segment identifier planning information of the network node or segment identifier planning information of the next-hop node, so that a packet is forwarded by bypassing the faulty interface or the faulty node.

## Description

This application claims priority to Chinese Patent Application No. 202310206316.5, filed with the China National Intellectual Property Administration on February 25, 2023 and entitled "DISCLOSURE OF SRV6 EXTENSION HEADER COMPRESSION METHOD", and claims priority to Chinese Patent Application No. 202310696717.3, filed on June 12, 2023 and entitled "PACKET FORWARDING METHOD, APPARATUS, AND SYSTEM", both of which are incorporated herein by reference in their entireties.

### TECHNICAL FIELD

This application relates to the field of network technologies, and in particular, to a packet forwarding method, apparatus, and system.

### BACKGROUND

A segment routing internet protocol version 6 (segment routing internet protocol version 6, SRv6) packet includes a segment list (segment list) and a segment left (segment left, SL) pointer. In conventional SRv6 technologies, the segment list includes multiple segment identifiers (segment identifiers, SIDs) each with a length of 128 bits (bits), and the SL pointer indicates a SID that is active (briefly referred to as active SID) in the segment list. In a process of forwarding the SRv6 packet, a network node determines the active SID in the segment list based on the SL pointer, updates a destination address (destination address, DA) of the SRv6 packet by using the active SID, and forwards the SRv6 packet based on an updated DA.

An SRv6 endpoint (endpoint) fault protection technology is a fault handling technology. In a process in which a network node with the SRv6 endpoint fault protection technology forwards an SRv6 packet, if the network node senses that a next-hop node of the network node is faulty, the network node replaces the next-hop node in handling the SRv6 packet. For example, the network node replaces the next-hop node in determining an active SID in a segment list of the SRv6 packet based on an SL pointer in the SRv6 packet, updates a DA of the SRv6 packet by using the active SID, and forwards the SRv6 packet based on an updated DA. This allows the SRv6 packet to bypass the faulty node.

To reduce redundant information in an SRv6 packet, the concept of compressed SID is proposed in the industry. A compressed SID has a length less than 128 bits, while a conventional SID has a length of 128 bits, which is thus be referred to as an uncompressed SID. In an SRv6 technology that supports the compressed SID, a segment list allows for hybrid encoding of both a compressed SID and an uncompressed SID. A space with a length of 128 bits in the segment list of the SRv6 packet may be defined as a SID container, and the segment list of the SRv6 packet includes multiple SID containers, where one SID container is used to carry one uncompressed SID or carry multiple compressed SIDs. An SL pointer in the SRv6 packet indicates an active SID container in the segment list. However, as one SID container may carry multiple compressed SIDs, the network node cannot replace a next-hop node in determining an active SID in the segment list based on the SL pointer when the next-hop node of a network node is faulty, and therefore cannot perform a proxy forwarding operation.

### SUMMARY

This application provides a packet forwarding method, apparatus, and system, to resolve a problem that a previous-hop node of a faulty node cannot replace the faulty node in performing a proxy forwarding operation in a compressed segment identifier scenario. The technical solutions of this application are as follows.

According to a first aspect, a packet forwarding method is provided. The method includes: A first network node receives a first packet, where a destination address field of the first packet includes a first segment identifier, the first segment identifier is a compressed segment identifier, the first segment identifier corresponds to a first outbound interface of the first network node or corresponds to a second network node, and the second network node is a next-hop node of the first network node; based on the first outbound interface being faulty or the second network node being faulty, the first network node determines a second segment identifier based on planning information, where the second segment identifier is a segment identifier in a segment list of the first packet or the second segment identifier is a segment identifier in the destination address field, and the planning information is segment identifier planning information of the node corresponding to the first segment identifier; and the first network node forwards the first packet based on the second segment identifier.

In the technical solution provided in this application, the destination address field of the first packet received by the first network node includes the first segment identifier, and the first segment identifier is the compressed segment identifier. When the first segment identifier corresponds to the first outbound interface of the first network node and the first outbound interface is faulty, or when the first segment identifier corresponds to the next-hop node of the first network node and the next-hop node is faulty, the first network node determines the second segment identifier based on the segment identifier planning information of the node corresponding to the first segment identifier, and forwards the first packet based on the second segment identifier, so that the first packet is forwarded by bypassing the faulty interface or the faulty node. Therefore, in this application, endpoint fault protection can be implemented, for example, SRv6 endpoint fault protection can be implemented, in a compressed segment identifier scenario.

Optionally, the planning information includes at least one of the following: a length of a block field, a length of a node identifier field, a length of a compress function field, a length of an uncompress function field, a length of an arguments field, and a node identifier range. Therefore, in this application, the first network node may determine the second segment identifier based on the at least one piece of information in the planning information.

Optionally, the second segment identifier is a compressed segment identifier or a standard segment identifier, the compressed segment identifier has a length less than 128 bits, and the standard segment identifier has a length of 128 bits. For example, the compressed segment identifier has a length of 32 bits or 16 bits.

Optionally, the first segment identifier and the second segment identifier are sequentially arranged in the segment list of the first packet, or the first segment identifier and the second segment identifier are sequentially arranged in the destination address field of the first packet. The second segment identifier is located after the first segment identifier.

Optionally, the second segment identifier corresponds to an outbound interface or a network node. For example, the second segment identifier is an END.X SID representing an interface, or the second segment identifier is an END SID representing a network node. The outbound interface or the network node corresponding to the second segment identifier is located downstream of the first network node.

Optionally, when the first segment identifier corresponds to the first outbound interface of the first network node, the node corresponding to the first segment identifier is the first network node; or when the first segment identifier corresponds to the second network node, the node corresponding to the first segment identifier is the second network node.

In other words, when the first segment identifier corresponds to the first outbound interface of the first network node and the first outbound interface is faulty, the first network node determines the second segment identifier based on the segment identifier planning information of the first network node; or when the first segment identifier corresponds to the next-hop node of the first network node and the next-hop node is faulty, the first network node determines the second segment identifier based on the segment identifier planning information of the next-hop node.

Optionally, that the first network node determines the second segment identifier based on the planning information includes: The first network node determines, based on the planning information, that the first segment identifier is the compressed segment identifier. In other words, it is determined that a type of the first segment identifier is the compressed segment identifier.

Optionally, that the first network node determines, based on the planning information, that the first segment identifier is the compressed segment identifier includes: The first network node determines the compress function field in the destination address field of the first packet based on the planning information; and the first network node determines, based on a value of the compress function field, that the first segment identifier is the compressed segment identifier.

Optionally, that the first network node determines, based on the value of the compress function field, that the first segment identifier is the compressed segment identifier includes: The first network node determines, based on the value of the compress function field being a non-null value, that the first segment identifier is the compressed segment identifier. The non-null value may be 0. In this application, a value of a compress function field of a compressed segment identifier is a non-null value, and a value of a compress function field of an uncompressed segment identifier is a null value. Therefore, in this application, a type of a segment identifier may be determined based on a value of a compress function field.

Optionally, that the first network node determines the second segment identifier based on the planning information includes: The first network node updates a value of a segment left (segment left, SL) field in the first packet, and the first network node determines the second segment identifier based on an updated value of the SL field; the first network node updates a value of a compression left (compression left, CL) field in the first packet, and the first network node determines the second segment identifier based on an updated value of the CL field; the first network node traverses the destination address field of the first packet to determine the second segment identifier; or the first network node updates a value of a target field in the first packet to determine the second segment identifier, where the target field is included in the destination address field of the first packet, and the target field is located after the block field in the destination address field.

Optionally, the planning information includes the node identifier range, and that the first network node determines the second segment identifier based on the planning information includes: The first network node determines, based on the node identifier range, that a node identifier included in the second segment identifier is in the node identifier range. By learning the node identifier range, the first network node can find, in the segment list or the DA field, a segment identifier that falls within the node identifier range, in other words, can find the node segment identifier by skipping an adjacent segment identifier in the segment list or the DA field, to replace the faulty node in performing a proxy forwarding operation. In an example, the segment list of the first packet includes a target container, the second segment identifier is in the target container, the SL field in the first packet indicates that the target container is an active container, and the first network node continuously updates the value of the CL field in the first packet to traverse content in the target container by a first length (for example, 16 bits), until determining, in the target container, that content of the first length is in the node identifier range. The first network node determines that a segment identifier of the determined content, of the first length, included in the target container is the second segment identifier, where the content of the first length in the second segment identifier is the node identifier included in the second segment identifier. In another example, the second segment identifier is in the destination address field of the first packet. The first network node traverses content in the destination address field by a first length, until determining, in the destination address field, that content of the first length is in the node identifier range. The first network node determines that a segment identifier of the determined content, of the first length, included in the destination address field is the second segment identifier, and the content of the first length in the second segment identifier is the node identifier included in the second segment identifier.

Optionally, the destination address field of the first packet is located in an internet protocol version 6 (internet protocol version 6, IPv6) header of the first packet.

Optionally, the method further includes: The first network node receives first routing information including the planning information.

According to the technical solution provided in this application, the first network node receives the first routing information including the planning information, so that the first network node can obtain the planning information, and determine the second segment identifier based on the planning information after receiving the first packet.

Optionally, the method further includes: The first network node generates a first routing table entry based on the first routing information, where the first routing table entry includes the planning information.

According to the technical solution provided in this application, the first network node generates the first routing table entry including the planning information, so that the first network node can determine the planning information based on the first routing table entry after receiving the first packet, and determine the second segment identifier based on the planning information.

Optionally, the method further includes: The first network node deletes the first routing table entry after preset duration based on the second network node being faulty. The behavior of deleting the first routing table entry by the first network node after the preset duration is also referred to as a slow deletion behavior.

According to the technical solution provided in this application, after the first network node determines that the second network node is faulty, the first network node needs to replace the second network node in performing the proxy forwarding operation to process the first packet. In a process of performing the proxy forwarding operation, the first network node needs to determine the second segment identifier based on the planning information in the first routing table entry. If the first network node immediately deletes the first routing table entry after determining that the second network node is faulty, the first network node cannot determine the second segment identifier. Therefore, in this application, after determining that the second network node is faulty, the first network node does not immediately delete the first routing table entry, but deletes the first routing table entry after the preset duration, so that after the second network node is faulty and before route convergence, the first network node determines the second segment identifier by using the planning information in the first routing table entry, to perform the proxy forwarding operation.

Optionally, the first routing information is locator (locator) routing information or block (block) routing information.

Optionally, the first routing information is carried in a target type-length-value (type-length-value, TLV) field, the target TLV field includes a first sub-TLV field and a second sub-TLV field, the first sub-TLV field is used to carry the planning information, and the second sub-TLV field is used to carry a segment identifier. The first sub-TLV field and the second sub-TLV field may be located at a same level.

According to a second aspect, a packet forwarding method is provided. The method includes: A second network node advertises first routing information including planning information, where the planning information is segment identifier planning information of the second network node.

According to the technical solution provided in this application, the second network node advertises the first routing information, so that the first network node can obtain the planning information included in the first routing information, and determine a second segment identifier based on the planning information after receiving the first packet.

Optionally, the planning information includes a node identifier range.

Optionally, the planning information includes a length of a compress function field.

Optionally, the planning information includes a length of a compress function field and a length of an uncompress function field.

Optionally, the planning information further includes at least one of the following: a length of a block field, a length of a node identifier field, and a length of an arguments field.

Optionally, the first routing information is locator routing information or block routing information.

Optionally, the first routing information is carried in a target TLV field including a first sub-TLV field and a second sub-TLV field, the first sub-TLV field is used to carry the planning information, and the second sub-TLV field is used to carry a segment identifier.

According to a third aspect, a packet forwarding apparatus is provided. The apparatus includes at least one module. The at least one module is configured to perform the method provided in any one of the first aspect or the optional manners of the first aspect, or the at least one module is configured to perform the method provided in any one of the second aspect or the optional manners of the second aspect. The at least one module may be implemented based on software, hardware, or a combination of software and hardware, and the at least one module may be randomly combined or divided based on a specific implementation.

According to a fourth aspect, a packet forwarding apparatus is provided. The apparatus includes a memory and a processor. The memory is configured to store a computer program. The processor is configured to execute the computer program stored in the memory, to cause the packet forwarding apparatus to perform the method provided in any one of the first aspect or the optional manners of the first aspect, or cause the packet forwarding apparatus to perform the method provided in any one of the second aspect or the optional manners of the second aspect.

According to a fifth aspect, a packet forwarding apparatus is provided. The apparatus includes a main control board and an interface board. The main control board and the interface board are configured to implement the method provided in any one of the first aspect or the optional manners of the first aspect, or the main control board and the interface board are configured to implement the method provided in any one of the second aspect or the optional manners of the second aspect.

According to a sixth aspect, a packet forwarding system is provided. The system includes a first network node and a second network node, where at least one of the first network node and the second network node includes the packet forwarding apparatus provided in the third aspect to the fifth aspect.

According to a seventh aspect, a computer-readable storage medium is provided. The computer-readable storage medium stores a computer program. When the computer program is executed, the method provided in any one of the first aspect or the optional manners of the first aspect is implemented, or the method provided in any one of the second aspect or the optional manners of the second aspect is implemented.

According to an eighth aspect, a computer program product is provided. The computer program product includes a program or code. When the program or the code is executed, the method provided in any one of the first aspect or the optional manners of the first aspect is implemented, or the method provided in any one of the second aspect or the optional manners of the second aspect is implemented.

According to a ninth aspect, a chip is provided. When the chip runs, the method provided in any one of the first aspect or the optional manners of the first aspect is implemented, or the method provided in any one of the second aspect or the optional manners of the second aspect is implemented.

Optionally, the chip includes a programmable logic circuit and/or program instructions.

For technical effects of the third aspect to the ninth aspect, refer to the technical effects of the first aspect and the second aspect. Details are not described herein again.

### BRIEF DESCRIPTION OF DRAWINGS

FIG. 1 is a diagram of an SRv6 packet;
FIG. 2 is a format diagram of an SRv6 SID;
FIG. 3 is a diagram of GSRv6 compression;
FIG. 4 is a diagram of other GSRv6 compression;
FIG. 5 is a diagram of still other GSRv6 compression;
FIG. 6 is a diagram of a GSID container;
FIG. 7 is a diagram of another GSID container;
FIG. 8 is a diagram of a GSRH;
FIG. 9 is a diagram of a destination address field;
FIG. 10 is a diagram of a GSRv6 packet;
FIG. 11 is a diagram of another GSRv6 packet;
FIG. 12 is a diagram of GSRv6 forwarding;
FIG. 13 is a diagram of other GSRv6 forwarding;
FIG. 14 is a diagram of still other GSRv6 forwarding;
FIG. 15 is a diagram of a SID container;
FIG. 16 is a diagram of a SID container;
FIG. 17 is a diagram of a USID packet;
FIG. 18 is a diagram of another USID packet;
FIG. 19 is a diagram of USID forwarding;
FIG. 20 is a diagram of other USID forwarding;
FIG. 21 is a diagram of TI-LFA forwarding;
FIG. 22 is a diagram of SRv6 endpoint fault protection;
FIG. 23 is a diagram of an application scenario according to an embodiment of this application;
FIG. 24 is a format diagram of an SRv6 SID in a compression scenario according to an embodiment of this application;
FIG. 25 is a format diagram of an SRv6 SID in another compression scenario according to an embodiment of this application;
FIG. 26 is a flowchart of a packet forwarding method according to an embodiment of this application;
FIG. 27 is a diagram of a first packet according to an embodiment of this application;
FIG. 28 is a diagram of another first packet according to an embodiment of this application;
FIG. 29 is a diagram of still another first packet according to an embodiment of this application;
FIG. 30 is a diagram of yet another first packet according to an embodiment of this application;
FIG. 31 is a diagram of yet another first packet according to an embodiment of this application;
FIG. 32 is a diagram of yet another first packet according to an embodiment of this application;
FIG. 33 is a flowchart of another packet forwarding method according to an embodiment of this application;
FIG. 34 is a diagram of a packet forwarding method according to an embodiment of this application;
FIG. 35 is a diagram of another packet forwarding method according to an embodiment of this application;
FIG. 36 is a diagram of still another packet forwarding method according to an embodiment of this application;
FIG. 37 is a diagram of yet another packet forwarding method according to an embodiment of this application;
FIG. 38 is a diagram of a structure of a packet forwarding apparatus according to an embodiment of this application;
FIG. 39 is a diagram of another packet forwarding apparatus according to an embodiment of this application;
FIG. 40 is a diagram of still another packet forwarding apparatus according to an embodiment of this application; and
FIG. 41 is a diagram of yet another packet forwarding apparatus according to an embodiment of this application.

### DESCRIPTION OF EMBODIMENTS

The following further describes implementations of this application with reference to the accompanying drawings.

The technical solutions of this application relate to an SRv6 technology, a generalized SRv6 (generalized SRv6, GSRv6) technology, a USID-related technology, a topology independent-loop free alternate (topology independent-loop free alternate, TI-LFA) technology, and an SRv6 endpoint fault protection technology. Before the technical solutions of this application are described, the SRv6 technology, the GSRv6 technology, the USID-related technology, the TI-LFA technology, and the SRv6 endpoint fault protection technology are first described.

### 1. SRv6 technology

A data plane packet in the SRv6 technology is an SRv6 packet, where the SRv6 packet includes a segment routing header (segment routing header, SRH) and an internet protocol version 6 (internet protocol version 6, IPv6) header. The SRH includes a segment list (segment list) and a segment left (segment left, SL) pointer, and the segment list includes multiple segment identifiers (segment identifiers, SIDs). In a conventional SRv6 technology, each SID has a length of 128 bits, and the SL pointer indicates an active SID in the segment list. The IPv6 header includes a destination address (destination address, DA) field, and the destination address field is used to carry a destination address of the SRv6 packet. In a process of forwarding the SRv6 packet, the network node determines the active SID in the segment list based on the SL pointer, updates the destination address of the SRv6 packet by using the active SID, and forwards the SRv6 packet based on an updated destination address. For example, after the network node receives an SRv6 packet, if a destination address of the SRv6 packet hits my local SID table (my local SID table) of the network node, the network device performs SL-- (decreasing a value of an SL field by 1) to offset the SL pointer, and the network node updates an active SID indicated by an offset SL pointer to a destination address of the SRv6 packet, and forwards the SRv6 packet based on an updated destination address.

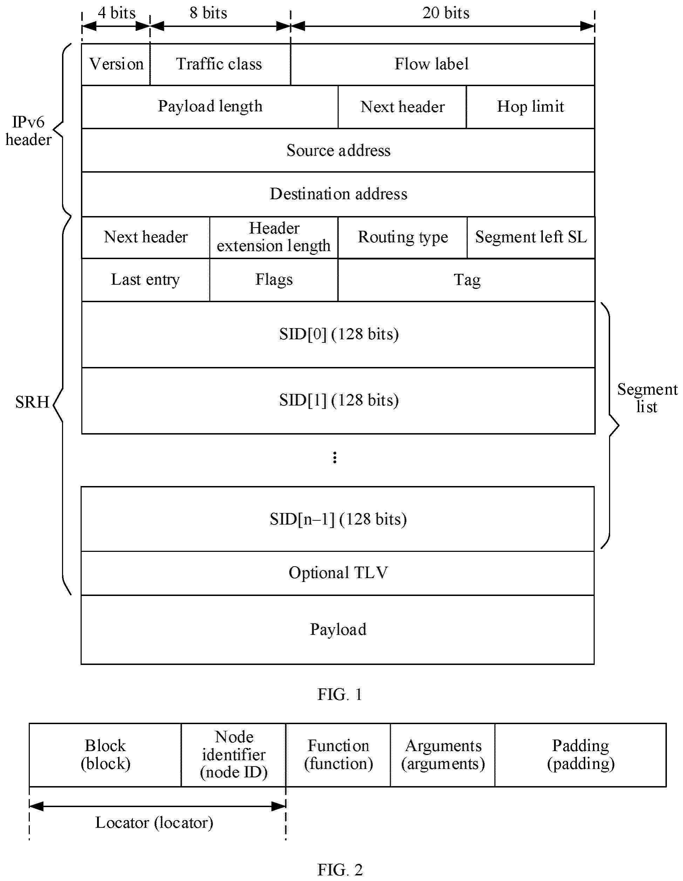

For example, FIG. 1 is a diagram of a conventional SRv6 packet. The SRv6 packet includes a payload (payload), an SRH, and an IPv6 header. The SRH includes the following fields: next header (next header, NH), header extension length (header extension length, Hdr Ext Len), routing type (routing type, RT), segment left (segment left, SL), last entry (last entry), flags (flags), tag (tag), segment list (segment list), and optional type-length-value (type-length-value, TLV). The segment list includes n SIDs (n is a positive integer), a length of each SID is 128 bits, the SL field is used to carry an SL pointer, and the SL pointer indicates an active SID in the segment list. The IPv6 header includes the following fields: version (version), traffic class (traffic class, TC), flow label (flow label), payload length (payload length), next header, hop limit (hop limit), source address (source address, SA), and destination address (destination address, DA). The source address field is used to carry a source address of the SRv6 packet, and the destination address field is used to carry a destination address of the SRv6 packet. For meanings of the fields in the IPv6 header, refer to a related document of the IPv6 header. For meanings of the fields in the SRH, refer to a related document of the SRH (for example, request for comments (request for comments, RFC) 8754). Details are not described herein. In the related document of the SRH, each SID in FIG. 1 may be described as a segment list. For example, SID[0] is described as segment list[0], SID[1] is described as segment list[1], SID[n-1] is described as segment list[n-1], and the segment list in FIG. 1 may be represented as <segment list[1], segment list[2]..., segment list[n]>, where each segment list in segment list[1], segment list[2]..., and segment list[n] is a SID with a length of 128 bits. This is not limited in embodiments of this application.

### 2. GSRv6 technology

The GSRv6 technology is developed based on the conventional SRv6 technology. The core idea of the GSRv6 technology is "redundancy elimination". In the GSRv6 technology, a SID in the conventional SRv6 technology (namely, a SID with a length of 128 bits) is compressed to reduce redundant information in a segment list. It may be understood that the SID in the conventional SRv6 technology is an uncompressed SID. For ease of description, the SID in the conventional SRv6 technology is referred to as a conventional SID, a conventional SRv6 SID, a standard SID, or a standard SRv6 SID. In other words, the conventional SID, the conventional SRv6 SID, the standard SID, or the standard SRv6 SID described below is the SID in the conventional SRv6 technology.

The GSRv6 technology relates to three aspects: a format of the standard SRv6 SID, compression of the standard SRv6 SID, and GSRv6 forwarding. The following describes the GSRv6 technology from the three aspects.

### (1) Format of the standard SRv6 SID

The standard SRv6 SID is an IPv6 address with a length of 128 bits. FIG. 2 is a format diagram of a standard SRv6 SID. As shown in FIG. 2, the standard SRv6 SID includes a block (block) field, a node identifier (node ID) field, a function (function) field, an arguments (arguments) field, and a padding (padding) field. The block field is used to carry a common prefix (common prefix) of the standard SRv6 SID. The common prefix is an address block (address block) for allocating the standard SRv6 SID, and is also referred to as an address space. The node identifier field is used to carry an identifier of a network node that advertises the standard SRv6 SID, to indicate the network node. The node identifier is unique in an SRv6 domain (domain). The block field and the node identifier field form a locator (locator) field. The common prefix carried in the block field and the node identifier carried in the node identifier field form a routable locator, to guide packet forwarding to the network node that advertises the standard SRv6 SID. The function field is used to carry a local function identifier of the network node that advertises the standard SRv6 SID. The function identifier is used to map a local segment endpoint behavior (segment endpoint behavior) of the network node to indicate a local forwarding behavior of the network node. The function identifier is locally unique on the network node. The arguments field is used to carry an argument related to the function field. Currently, in most cases, the arguments field is not used and can be set to 0. The padding field is used to pad the standard SRv6 SID, making the length of the standard SRv6 SID be 128 bits, to prevent a byte processing error on the network node. Usually, when a sum of lengths of the block field, the node identifier field, the function field, and the arguments field does not reach 128 bits, the padding field is set to pad the standard SRv6 SID. In an example, the length of the block field is 48 bits, the length of the node identifier field is 16 bits, and the length of the function field is 16 bits.

Usually, in one SRv6 domain, all standard SRv6 SIDs are allocated from a same address block. Therefore, all the standard SRv6 SIDs include a same address prefix. Arguments (arguments) of standard SRv6 SIDs with different behaviors (behaviors) may be different. Because of single meanings of an End SID representing a node and an End.X SID representing a link or an interface, an arguments field is usually set to 0 by default, and the padding field is also set to 0. Therefore, currently, in different standard SRv6 SIDs, only node identifier fields are different and function fields are different. When a segment list of an SRv6 packet carries multiple standard SRv6 SIDs, the segment list carries multiple same address prefixes, and multiple unused arguments fields and padding fields. As a result, multiple pieces of redundant information are generated. Therefore, a segment list of a conventional SRv6 packet carries multiple pieces of redundant information.

### (2) Compression of the standard SRv6 SID

In the GSRv6 technology, the redundant information is deleted from the segment list, so that the segment list carries only a different node identifier field and/or a different function field, to implement compression of the standard SRv6 SID. In a GSRv6 forwarding process, a network node does not need to update, as indicated by the conventional SRv6 technology, an entire standard SRv6 SID to a destination address field, but only needs to update a node identifier field and/or a function field to a corresponding part of the destination address field to form a new destination address. This is the basic idea of GSRv6 compression.

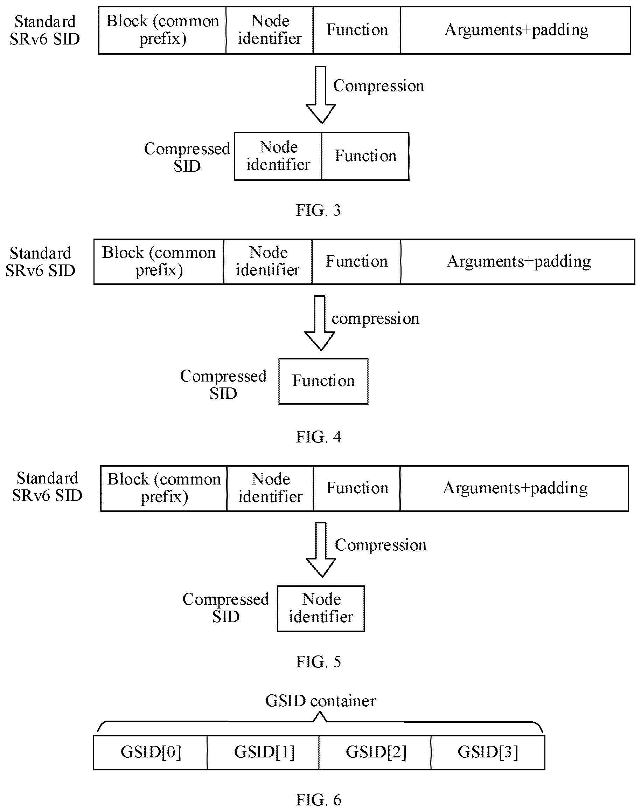

For example, FIG. 3 to FIG. 5 are diagrams illustrating three compression ideas of GSRv6 (each of FIG. 3 to FIG. 5 shows one compression idea). As shown in FIG. 3 to FIG. 5, a SID before compression (namely, a standard SRv6 SID) includes a block field, a node identifier field, a function field, an arguments field, and a padding field (whether the padding field exists depends on whether a sum of lengths of four fields reaches 128 bits: the block field, the node identifier field, the function identifier, and the arguments field). The standard SRv6 SID has a length of 128 bits. As shown in FIG. 3, in a compression process, the block field, the arguments field, and the padding field are deleted from the standard SRv6 SID to obtain a compressed SID (compressed SID, CSID), where the compressed SID includes the node identifier field and the function field. As shown in FIG. 4, in a compression process, the block field, the node identifier field, the arguments field, and the padding field are deleted from the standard SRv6 SID to obtain a compressed SID, where the compressed SID includes the function field. As shown in FIG. 5, in a compression process, the block field, the function field, the arguments field, and the padding field are deleted from the standard SRv6 SID to obtain a compressed SID, where the compressed SID includes the node identifier field. In an example, the block field has a length of 48 bits, the node identifier field has a length of 16 bits, the function field has a length of 16 bits, the compressed SID shown in FIG. 3 has a length of 32 bits, and the compressed SIDs shown in FIG. 4 and FIG. 5 each have a length of 16 bits. In comparison with the standard SRv6 SID, the length of the compressed SID shown in FIG. 3 is reduced by 128-32=96 bits, and the lengths of the compressed SIDs shown in FIG. 4 and FIG. 5 are reduced by 128-16=112 bits.

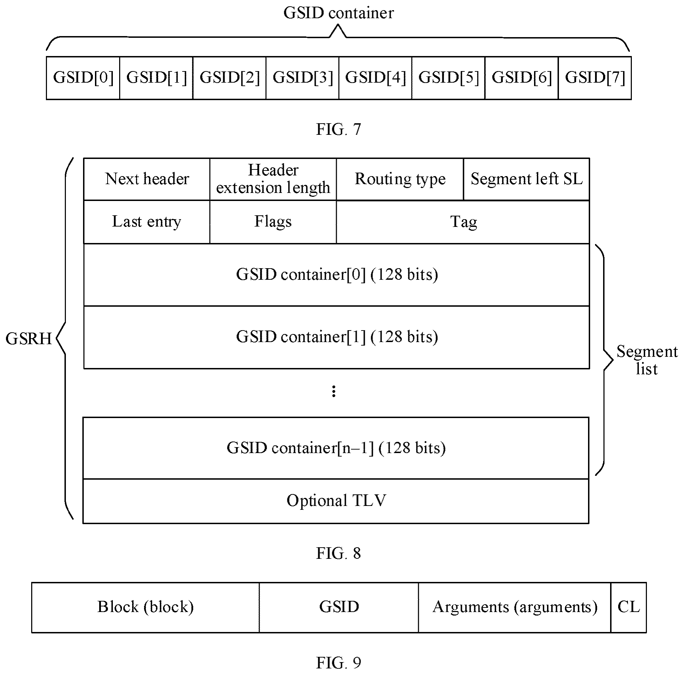

To ensure that the compressed SID is compatible with the standard SRv6 SIDs, the concepts of GSID and GSID container (container) are introduced in the GSRv6 technology. One GSID may be a compressed 32-bit SID, a compressed 16-bit SID, or a standard SRv6 SID (namely, an uncompressed SID). The GSID container is a space with a length of 128 bits. One GSID container is used to carry at least one GSID, and the at least one GSID may be one standard SRv6 SID, or may be one or more compressed SIDs. When one GSID container carries multiple GSIDs, the multiple GSIDs are all compressed SIDs, and the multiple GSIDs are arranged in the GSID container in reversed order from a least significant bit to a most significant bit. If the multiple GSIDs cannot fully fill the GSID container, most significant bits in the GSID container are padded to make up to 128 bits. In an example, FIG. 6 is a diagram of a GSID container. The GSID container has a length of 128 bits, and carries four GSIDs each being a compressed 32-bit SID. The four GSIDs are arranged in reversed order from a least significant bit to a most significant bit, where GSID[3] is a 1^{st} GSID, GSID[2] is a 2^{nd} GSID, GSID[1] is a 3^{rd} GSID, and GSID[0] is a 4^{th} GSID. In another example, FIG. 7 is a diagram of another GSID container. The GSID container has a length of 128 bits, and carries eight GSIDs each being a compressed 16-bit SID. The eight GSIDs are arranged in reversed order from a least significant bit to a most significant bit, where GSID[7] is a 1^{st} GSID, GSID[6] is a 2^{nd} GSID, and by analogy, GSID[1] is a 7^{th} GSID, and GSID[0] is an 8^{th} GSID.

### (3) GSRv6 forwarding

After the concept of GSID is introduced, multiple types of SIDs (for example, an uncompressed SID with a length of 128 bits, a compressed 32-bit SID, and a compressed 16-bit SID) may be encoded into an SRH. Therefore, the concept of GSRH is further introduced in the GSRv6 technology. A format of the GSRH is the same as a format of a conventional SRH, and a difference lies in that a segment list in the GSRH supports hybrid encoding using a compressed SID and an uncompressed SID. For example, the segment list in the GSRH includes at least one GSID container, and each GSID container is used to carry one standard SRv6 SID (a SID with a length of 128 bits) or carry multiple compressed SIDs, to implement hybrid encoding using a compressed SID and an uncompressed SID. For example, FIG. 8 is a diagram of a GSRH. A segment list in the GSRH includes n GSID containers, a length of each GSID container is 128 bits, the n GSID containers are arranged in reversed order in the segment list, and an arrangement order of the n GSID containers is GSID container[n-1], GSID container[n-2], ..., GSID container[1], and GSID container[0], in other words, GSID container[n-1] is a 1^{st} GSID container, GSID container[n-2] is a 2^{nd} GSID container. By analogy, GSID container[1] is an (n-1)^{th} GSID container, and GSID container[0] is an n^{th} GSID container. As shown in FIG. 8, the GSRH further includes an SL field, where the SL field is used to carry an SL pointer, and the SL pointer indicates an active GSID container in the segment list. When SL=n-1, the SL pointer indicates the 1^{st} GSID container (namely, GSID container[n-1]) in the n GSID containers. When SL=n-2, the SL pointer indicates the 2^{nd} GSID container (namely, GSID container[n-2]) in the n GSID containers. By analogy, when SL=1, the SL pointer indicates the (n-1)^{th} GSID container (namely, GSID container[1]) in the n GSID containers. When SL=0, the SL pointer indicates the n^{th} GSID container (namely, GSID container[0]) in the n GSID containers.

In the GSRv6 technology, one segment of path may include a compressed sub-path and/or an uncompressed sub-path. The uncompressed sub-path is represented by multiple 128-bit GSIDs (namely, standard SRv6 SIDs) for encoding. The compressed sub-path is represented by multiple GSIDs for encoding that support compression. A 1^{st} GSID in the multiple GSIDs is a compressible SRv6 SID with a length of 128 bits. The 1^{st} GSID includes complete 128-bit information such as a common prefix, and is used to construct a complete routable standard SRv6 SID. All remaining GSIDs in the multiple GSIDs are compressed SIDs each with a length less than 128 bits (for example, all the remaining GSIDs are compressed SIDs each with a length of 32 bits, all the remaining GSIDs are compressed SIDs each with a length of 16 bits, or the remaining GSIDs include a compressed SID with a length of 32 bits and a compressed SID with a length of 16 bits). In the segment list included in the GSRH, the GSIDs are arranged based on 128 bits. If the GSIDs cannot fully fill a GSID container, the GSID container needs to be padded to make up to 128 bits.

All SIDs for encoding in a segment list of a conventional SRv6 packet are standard SRv6 SIDs each with a length of 128 bits. An SL pointer in the SRv6 packet indicates an active SID in the segment list. In a process in which a network node forwards the SRv6 packet, the network node updates the active SID indicated by the SL pointer to a destination address field of the SRv6 packet. However, not all GSIDs for encoding in a segment list included in a GSRv6 packet (for ease of description, a data plane packet in the GSRv6 technology is referred to as a GSRv6 packet) have a length of 128 bits, and a GSID that is updated by a network node to a destination address field of the GSRv6 packet may not be a standard SRv6 SID with a length of 128 bits, and may alternatively be a compressed SID with a length less than 128 bits (for example, a compressed SID with a length of 32 bits or 16-bits). Therefore, an update action corresponding to the compressed SID further needs to be defined in the GSRv6 technology.

To indicate the network node to process the compressed SID, a continuation of compression (continuation of compression, COC) flavor (flavor) is defined in the GSRv6 technology, and a GSID that supports compression carries the COC flavor. In a segment list of a GSRv6 packet, a GSID carrying a COC flavor indicates that a next GSID of the GSID is a compressed SID, a 1^{st} GSID and an intermediate GSID of a compressed path both carry a COC flavor, and a last GSID of the compressed path carries no COC flavor. In a process in which a network node forwards a GSRv6 packet, when the network node processes a GSID carrying a COC flavor, the network device updates, as indicated by the GSID, a next compressed SID located after the GSID in a segment list of the GSRv6 packet to a destination address field of the SRv6 packet. For ease of distinguishing, two COC flavors, for example, a first COC flavor and a second COC flavor, may be defined. The first COC flavor is used to define an update action corresponding to a compressed 32-bit SID, and the second COC flavor is used to define an update action corresponding to a compressed 32-bit SID. In a process in which a network node forwards a GSRv6 packet, when the network node processes a GSID carrying the first COC flavor, the network device updates, to a destination address field of the SRv6 packet, a next compressed 32-bit SID (namely, next 32-bit content) and that is located after the GSID in a segment list of the GSRv6 packet; and when the network node processes a GSID carrying the second COC flavor, the network device updates, to the destination address field of the SRv6 packet, a next compressed 16-bit SID (namely, next piece of 16-bit content) located after the GSID in the segment list of the GSRv6 packet.

One GSID container may carry multiple compressed SIDs. To locate a next compressed SID in the GSID container, a compression left (compression left, CL) pointer is introduced in the GSRv6 technology. The CL pointer indicates an active compressed SID in an active GSID container (the active compressed SID is a GSID). The CL pointer is meaningful only when a GSID in a destination address field of a GSRv6 packet is a compressed SID. In this case, an SL pointer in the GSRv6 packet indicates an active GSID container in a segment list of the GSRv6 packet, and the CL pointer indicates an active compressed SID in the active GSID container. The network node determines the active GSID container in the segment list of the GSRv6 packet based on the SL pointer, the network node determines the active compressed SID in the active GSID container based on the CL pointer, and then the network node updates the active compressed SID to the destination address field of the GSRv6 packet. The CL pointer is also referred to as a SID index (SID index, SI) pointer. The GSRv6 packet further includes a CL field. The CL field includes at least two least significant bits in an arguments field in the destination address field of the GSRv6 packet. For example, the CL field is two least significant bits or three least significant bits in the arguments field, and the CL pointer is carried in the CL field. For ease of hardware implementation and future extension, the destination address field uses an SRv6 SID with a length of 128 bits and includes no padding field. The at least two least significant bits in the arguments field are also at least two least significant bits in the destination address field. For example, the CL field is two least significant bits or three least significant bits in the destination address field. For example, FIG. 9 is a diagram of a destination address field. The destination address field includes a block field, a GSID field, an arguments field, and a CL field. The CL field is located at least significant bits of the destination address field. In a process of forwarding a GSRv6 packet, after a network device that processes a GSID carrying a COC flavor and executes SL-- offsets the SL pointer, the network node initializes a value of the CL field to m-1, and a downstream network node of the network node determines an active compressed GSID in an active GSID container by executing CL--, until the SL pointer is offset again (for example, the SL pointer is offset because the CL is decreased to 0, or the SL pointer is offset because an active compressed SID located by the CL pointer is a last GSID in the active GSID container). m is a quantity of compressed SIDs that can be carried in one GSID container. For example, if one GSID container can carry four 32-bit GSIDs, m is 4. For another example, if one GSID container can carry eight 16-bit GSIDs, m is 8. In other words, in a solution of encoding using a 32-bit GSID, the value of the CL field is initialized to 3, and in a solution of encoding using a 16-bit GSID, the value of the CL field is initialized to 7. In addition, in a solution of hybrid encoding using a 16-bit GSID and a 32-bit GSID, one GSID with a length of 32 bits may be considered as two 16-bit GSIDs. Therefore, the value of the CL field is also initialized to 7.

In multiple GSID containers included in a segment list of the GSRv6 packet, one GSID container may carry multiple compressed SIDs, and the multiple compressed SIDs are arranged in reversed order from a least significant bit to a most significant bit. For example, one GSID container carries m compressed SIDs, which are respectively GSID[0], GSID[1]...GSID[m-2], and GSID[m-1]. The m compressed SIDs are arranged in reversed order from a least significant bit to a most significant bit, and an arrangement order of the m compressed SIDs is GSID[m-1], GSID[m-2]...GSID[1], and GSID[0]. In other words, GSID[m-1] is a 1" compressed SID in the m compressed SIDs, and is arranged at least significant bits of the GSID container; and GSID[m-2] is a 2^{nd} compressed SID in the m compressed SIDs, and is arranged after GSID[m-1] and adjacent to GSID[m-1]. By analogy, GSID[1] is an (m-1)^{th} compressed SID in the m compressed SIDs, and is arranged after GSID[2] and adjacent to GSID[2]; and GSID[0] is an m^{th} compressed SID in the m compressed SIDs, and is arranged after GSID[1] and adjacent to GSID[1]. It is assumed that the GSID container is an active GSID container, and a CL pointer indicates an active compressed SID in the m compressed SIDs. When CL=m-1, the CL pointer indicates the 1^{st} compressed SID (namely, GSID[m-1]) in the m compressed SIDs, and a network node locates GSID[m-1] based on the CL pointer; when CL=m-2, the CL pointer indicates the 2^{nd} compressed SID (namely, GSID[m-2]) in the m compressed SIDs, and the network node locates GSID[m-2] based on the CL pointer. By analogy, when CL=1, the CL pointer indicates the (m-1)^{th} compressed SID (namely, GSID[1]) in the m compressed SIDs, and the network node locates GSID[1] based on the CL pointer; and when CL=0, the CL pointer indicates the m^{th} compressed SID (namely, GSID[0]) in the m compressed SIDs, and the network node locates GSID[0] based on the CL pointer.

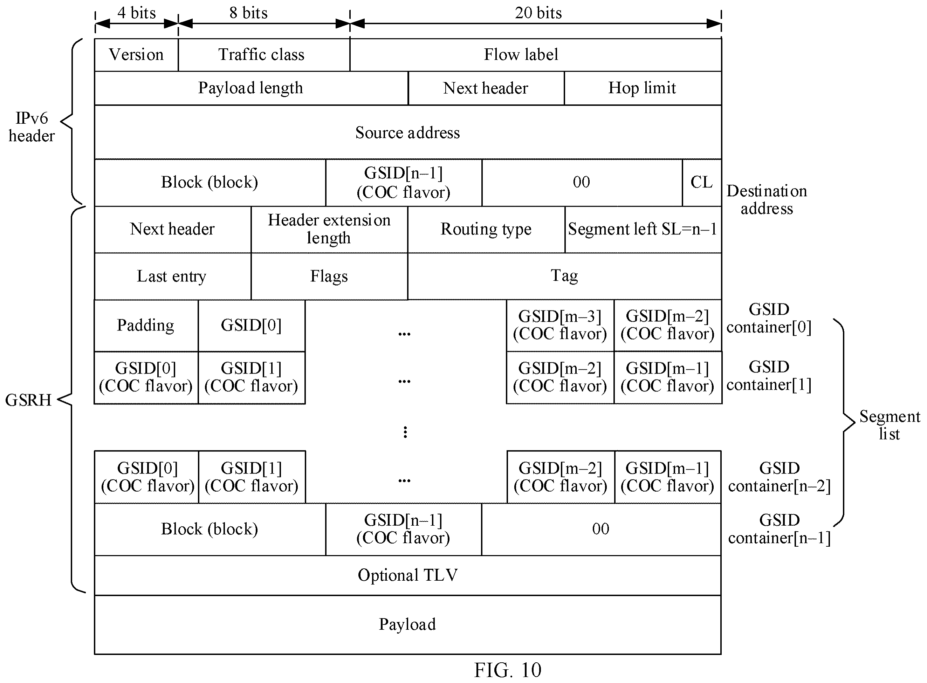

For example, FIG. 10 is a diagram of a GSRv6 packet. The GSRv6 packet includes a payload, a GSRH, and an IPv6 header. The GSRH includes an SL field and a segment list, where the segment list includes n GSID containers, and n is a positive integer. A length of each GSID container is 128 bits, the SL field is used to carry an SL pointer, and the SL pointer indicates an active GSID container in the segment list. The n GSID containers are arranged in the segment list in reversed order. GSID container[n-1] is a 1^{st} GSID container in the n GSID containers, and GSID container[n-2] is a 2^{nd} GSID container in the n GSID containers. By analogy, GSID container[0] is an n^{th} GSID container in the n GSID containers. GSID container[0], GSID container[1], ..., GSID container[n-2], and GSID container[n-1] correspond to a compressed path. GSID container[n-1] carries a 1^{st} GSID of the compressed path, where the 1^{st} GSID is a compressible SID with a length of 128 bits, the 1^{st} GSID includes a block field and compressed GSID[n-1], and the 1^{st} GSID carries a COC flavor to indicate that a next GSID of the 1^{st} GSID is a compressed SID. Each GSID container in GSID container[1], GSID container[2], ..., and GSID container[n-2] carries m compressed SIDs, which are respectively GSID[0], GSID[1]...GSID[m-2], GSID[m-1]. GSID[0], GSID[1]...GSID[m-2], and GSID[m-1] are arranged in the GSID container in reversed order from a least significant bit to a most significant bit, where GSID[0], GSID[1]...GSID[m-2], and GSID[m-1] are respectively intermediate GSIDs of the compressed path, and each GSID in GSID[0], GSID[1]...GSID[m-2], and GSID[m-1] carries a COC flavor to indicate that a next GSID of the GSID is a compressed SID. GSID container[0] carries m-1 compressed SIDs, which are respectively GSID[0], GSID[1]...GSID[m-3], GSID[m-2]. GSID[0], GSID[1]...GSID[m-3], and GSID[m-2] are arranged in GSID container[0] in reversed order from a least significant bit to a most significant bit. In GSID container[0], a remaining space other than the m-1 compressed SIDs is padded with 0. GSID[1], ..., GSID[m-3], and GSID[m-2] in the m-1 compressed SIDs are intermediate GSIDs of the compressed path, each GSID in GSID[1]...GSID[m-3], and GSID[m-2] carries a COC flavor to indicate that a next GSID of the GSID is a compressed SID, GSID[0] in the m-1 compressed SIDs is a last GSID of the compressed path, and GSID[0] carries no COC flavor. As shown in FIG. 10, the IPv6 header includes a destination address field, where the destination address field carries the 1^{st} GSID of the compressed path (namely, the GSID in GSID container[n-1]), least significant bits of the destination address field include a CL field, and a CL pointer carried in the CL field indicates an active compressed SID in an active GSID container. For example, at a moment, the SL pointer points to GSID container[1], and the CL pointer points to GSID[1] in GSID container[1]. In this case, GSID container[1] is an active GSID container, and GSID[1] in GSID container[1] is an active compressed SID. A network node replaces the GSID in the destination address field with GSID[1], to update GSID[1] in GSID container[1] to the destination address field. Meanings of other fields in the GSRH and meanings of other fields in the IPv6 header are the same as meanings of corresponding fields in the conventional SRv6 packet shown in FIG. 1.

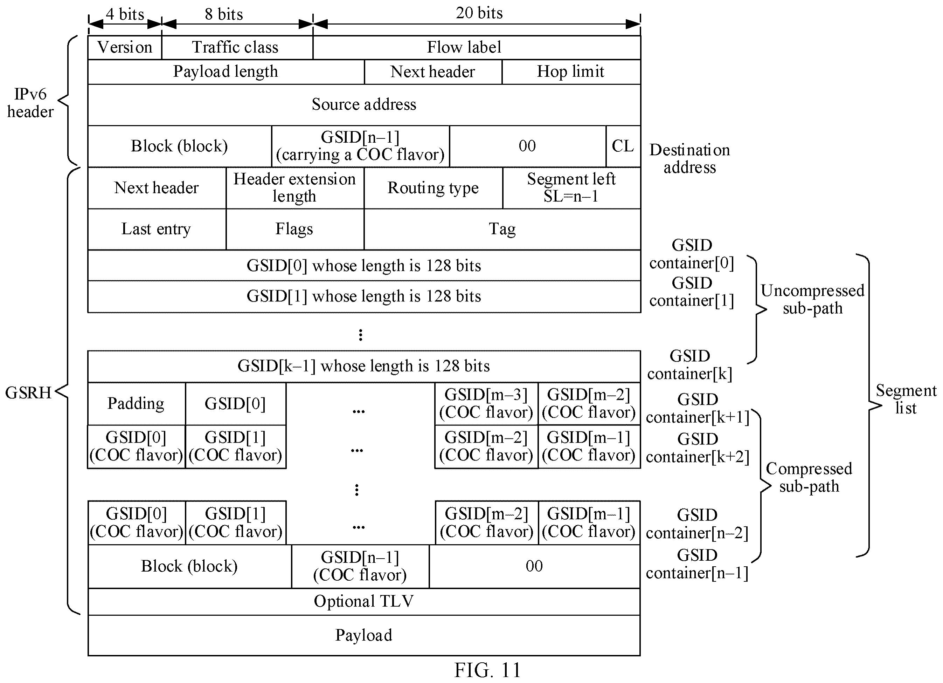

In FIG. 10, an example in which the segment list in the GSRH carries the 1^{st} GSID of the compressed path is used for description. Because the destination address field of the GSRv6 packet also includes the 1^{st} GSID, in some embodiments, the segment list may not carry the 1^{st} GSID. This can further reduce redundant information of the segment list. In addition, in FIG. 10, an example in which the GSRv6 packet carries path information of the compressed path is used for description. In the GSRv6 technology, one segment of path may include a compressed sub-path and an uncompressed sub-path, and the GSRv6 packet may carry both path information of the compressed sub-path and path information of the uncompressed sub-path. For example, FIG. 11 is a diagram of another GSRv6 packet. A structure of the GSRv6 packet is the same as a structure of the GSRv6 packet shown in FIG. 10, and a difference lies in that, in the GSRv6 packet shown in FIG. 11, GSID container[0], GSID container[1], ..., and GSID container[k] in a segment list correspond to an uncompressed sub-path, and GSID container[0], GSID container[1], ..., and GSID container[k] each carry a GSID with a length of 128 bits (namely, a standard SRv6 SID). GSID container[k+1], GSID container[k+2], ..., GSID container[n-2], and GSID container[n-1] correspond to a compressed sub-path. GSID container[n-1] carries a 1^{st} GSID of the compressed sub-path. Each GSID container in GSID container[n-2], GSID container[n-3], ..., and GSID container[k+2] carries m compressed SIDs, the m compressed SIDs are all intermediate GSIDs of the compressed sub-path, and GSID container[k+1] carries m-1 compressed SIDs. In the m-1 compressed SIDs, GSID[0] is a last GSID of the compressed sub-path, and GSID[1], GSID[2]...GSID[m-3], and GSID[m-2] of the compressed sub-path are intermediate GSIDs of the compressed sub-path.

In the GSRv6 packets shown in FIG. 10 and FIG. 11, the compressed SID has a length of 32 bits or 16 bits (in other words, the segment list is encoded by using the compressed 32-bit/16-bit SID), or the segment list of the GSRv6 packet includes a compressed 32-bit SID and a compressed 16-bit SID (in other words, the segment list is hybrid encoded by using the compressed 32-bit SID and the compressed 16-bit SID). In an example in which the segment list is encoded by using the compressed 32-bit SID, m is equal to 4. In an example in which the segment list is encoded by using the compressed 16-bit SID or hybrid encoded by using the compressed 32-bit SID and the compressed 16-bit SID, m is equal to 8. In the GSRv6 packet shown in FIG. 11, k is a positive integer less than n.

The following describes a GSRv6 forwarding process by using an example in which path encoding is performed by using a compressed 32-bit SID.

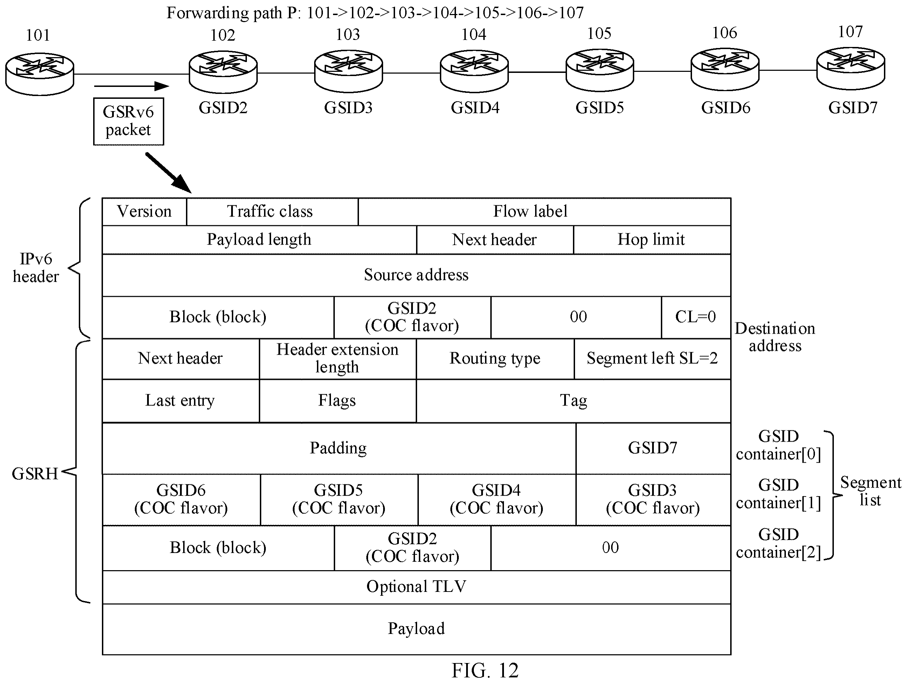

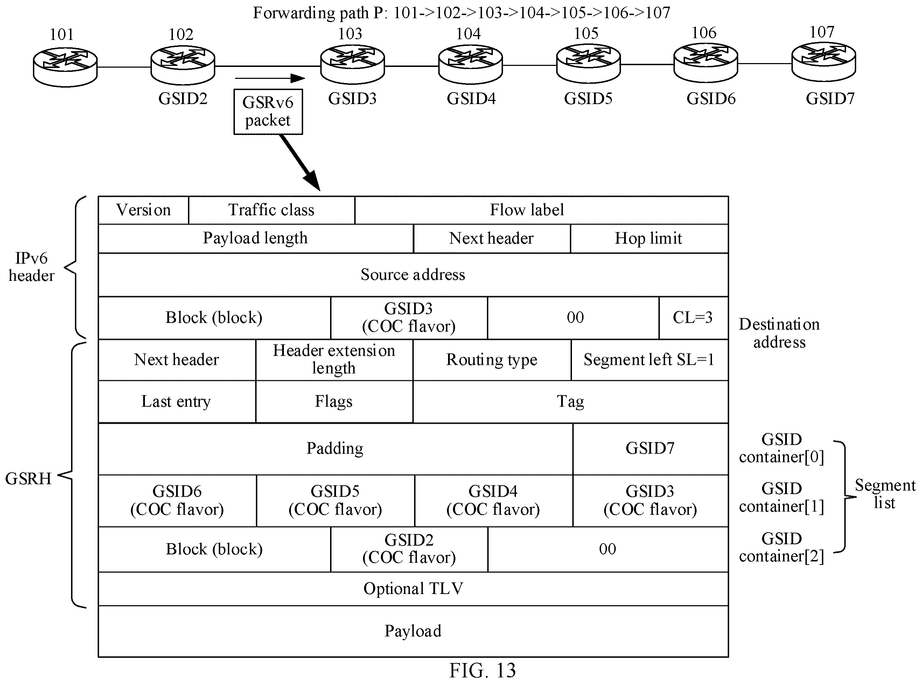

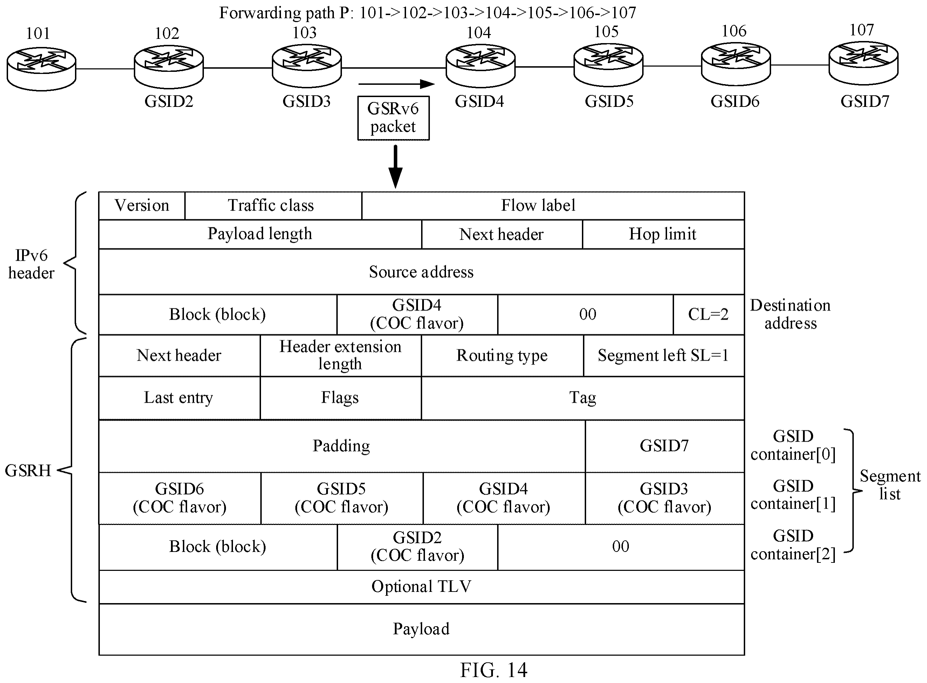

For example, FIG. 12 to FIG. 14 are diagrams of GSRv6 forwarding. As shown in FIG. 12 to FIG. 14, an SRv6 domain includes network nodes 101 to 107, SIDs of network nodes 102 to 107 are sequentially GSID2 to GSID7, and a forwarding path P is: the network node 101->the network node 102->...->the network node 107. The network node 101 is a head node (also referred to as an ingress node) of the forwarding path P. As shown in FIG. 12, the network node 101 generates a GSRv6 packet, where the GSRv6 packet includes a payload, a GSRH, and an IPv6 header. A segment list in the GSRH includes GSID container[0], GSID container[1], and GSID container[2], and the segment list carries path information GSID2 to GSID7 of the forwarding path P. The forwarding path P is a compressed path, and GSID2 is a 1^{st} GSID of the forwarding path P. GSID2 is carried in GSID container[2], and GSID2 carries a COC flavor (the 1^{st} GSID is a standard SRv6 SID with a length of 128 bits. For ease of description, in FIG. 12 to FIG. 14, the drawn GSID2 occupies only a part of a space of GSID container[2], and all content carried in GSID container[2] actually belongs to the 1^{st} GSID). GSID3 to GSID6 are intermediate GSIDs of the forwarding path P. GSID3 to GSID6 are carried in GSID container[1]. A length of each of GSID3 to GSID6 is 32 bits, and each of GSID3 to GSID6 carries a COC flavor. GSID7 is a last GSID on the forwarding path P. GSID7 is carried in GSID container[0]. GSID7 has a length of 32 bits, and GSID7 carries no COC flavor. In a process of generating the GSRv6 packet, the network node 101 initializes an SL to 2, copies content in GSID container[2] in the segment list to a destination address field of the GSRv6 packet, and the network node 101 initializes a value of a CL field in the destination address field to 0. After the network node 101 generates the GSRv6 packet, the network node 101 searches a routing table of the network node 101 through longest mask matching based on a destination address of the GSRv6 packet (in this case, the destination address includes block+GSID2), and the network node 101 forwards the GSRv6 packet to the network node 102 based on a search result. With reference to FIG. 12 and FIG. 13, after the network node 102 receives the GSRv6 packet, the network node 102 searches my local SID table (my local SID table) of the network node 102 through longest mask matching based on the destination address of the GSRv6 packet (in this case, the destination address includes block+GSID2), and matches block+GSID2 in the destination address (in other words, block+GSID2 in the destination address hits the local SID table). The network node 102 performs a forwarding action corresponding to GSID2. Specifically, as shown in FIG. 13, the network node 102 executes SL-- to offset an SL pointer to GSID container[1], and the network node 102 initializes the CL to 3 (the COC flavor carried in GSID2 indicates that a next GSID is a GSID with a length of 32 bits, and one GSID container carries at most four 32-bit GSIDs, so that after executing SL--, the network node 102 initializes the CL to 4-1=3), to enable a CL pointer to indicate GSID3 in GSID container[1]; the network node 102 updates, to a GSID field in the destination address field of the GSRv6 packet, an active compressed SID (namely, GSID3) indicated by the CL pointer; the network node 102 searches a routing table of the network node 102 through longest mask matching based on an updated destination address (the updated destination address includes block+GSID3); and the network node 102 forwards the GSRv6 packet to the network node 103 based on a search result. With reference to FIG. 13 and FIG. 14, after the network node 103 receives the GSRv6 packet, the network node 103 searches a local SID table of the network node 103 through longest mask matching based on the destination address of the GSRv6 packet (in this case, the destination address includes block+GSID3), and matches block+GSID3 in the destination address (in other words, block+GSID3 in the destination address hits the local SID table). The network node 103 performs a forwarding action corresponding to GSID3. Specifically, as shown in FIG. 14, the network node 103 executes CL-- to offset the CL pointer to GSID4, the network node 103 updates, to the GSID field in the destination address field of the GSRv6 packet, an active compressed SID (namely, GSID4) indicated by the CL pointer, the network node 103 searches a routing table of the network node 103 through longest mask matching based on an updated destination address (the updated destination address includes block+GSID4), and the network node 103 forwards the GSRv6 packet to the network node 104 based on a search result. Processes in which the network nodes 104 to 106 forward the GSRv6 packet are the same as the process in which the network node 103 forwards the GSRv6 packet. Details are not described herein again. After the network node 107 receives the GSRv6 packet forwarded by the network node 106 (in this case, a destination address of the GSRv6 packet includes block+GSID7, SL=0, and CL=3), the network node 107 searches a local SID table of the network node 107 through longest mask matching based on the destination address of the GSRv6 packet, and matches block+GSID7 in the destination address (in other words, block+GSID7 in the destination address hits the local SID table). The network node 107 performs a forwarding action for GSID7. Because GSID7 carries no COC flavor, the network node 107 considers the destination address of the GSRv6 packet as a conventional SRv6 SID, and forwards the GSRv6 packet in a conventional SRv6 forwarding manner.

It can be learned from the foregoing descriptions that, in the GSRv6 technology, the start of a compressed path is indicated by a 128-bit GSID carrying a COC flavor. The GSID is a 1^{st} GSID of the compressed path, and the GSID carries complete SID information, including information such as a common prefix. All intermediate GSIDs of the compressed path are compressed SIDs carrying COC flavors, indicating that a next GSID of the GSID is a compressed SID. A last GSID of the compressed path is a compressed SID that carries no COC flavor. A common prefix in the 1^{st} GSID of the compressed path is used to restore a complete GSID (namely, a GSID with a length of 128 bits) by combining the common prefix with the intermediate GSID or the last GSID of the compressed path. A complete GSID (namely, a GSID with a length of 128 bits) including the last GSID of the compressed path and another part in the destination address field is processed by the network node as a conventional SRv6 SID (namely, the standard SRv6 SID). In this way, the compressed SID is converted to the conventional SRv6 SID, and interconnection between the compressed path and the uncompressed path is implemented. The idea of updating a destination address field in the GSRv6 technology is: A GSID carrying a COC flavor indicates to update a next compressed SID after the GSID in a segment list included in a GSRH to a destination address field for forwarding. A GSRv6 compression process is triggered by the COC flavor. An operation is also limited in a GSID carrying the COC flavor, without affecting processing of an SRv6 SID and an SRH that already exist. In addition, it can be learned from the foregoing descriptions that multiple compressed SIDs carried in a GSID container may form a sub-segment list. An encoding rule of the sub-segment list is the same as an encoding rule of a segment list including multiple GSID containers. A CL pointer may be a pointer of the sub-segment list, and indicates an active compressed SID in the sub-segment list. This is not limited in embodiments of this application.

The foregoing describes only some content related to the GSRv6 technology. For other content related to the GSRv6 technology, refer to a GSRv6-related technical document related to. In the related technical document, GSRv6 may be written as G-SRv6, GSID may be written as G-SID, and GSRH may be written as G-SRH. It may be understood that meanings of "GSRv6" and "G-SRv6" are the same, meanings of "GSID" and "G-SID" are the same, and meanings of "GSRH" and "G-SRH" are the same.

### 3. USID-related technology

A USID is a compressed SID obtained by compressing a standard SRv6 SID. A USID is also referred to as a micro segment (micro segment) identifier, an SRv6 micro segment identifier, or an SRv6 USID.

The USID-related technology also relates to three compression ideas. The three compression ideas are the same as those of the GSRv6 technology (as shown in FIG. 3 to FIG. 5), and a difference lies in that a compressed SID in the USID-related technology is referred to as a USID. It may be understood that the USID may have a length of 32 bits or 16 bits. A 32-bit USID includes a node identifier field and a function field (in other words, the 32-bit USID includes the node identifier field and the function field), and a 16-bit USID includes a node identifier field or a function field (in other words, the 16-bit USID includes only the node identifier field or the function field).

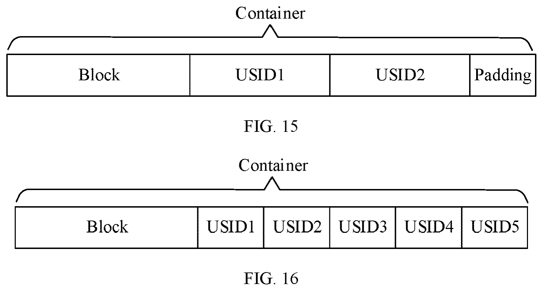

To ensure that the USID is compatible with the standard SRv6 SID, the concept of SID container may be introduced in the USID-related technology. A SID container is a space with a length of 128 bits. One SID container is used to carry one standard SRv6 SID, or carry one piece of block (block) information and at least one USID. When one SID container carries one piece of block information and at least one USID, the block information is located at most significant bits of the SID container, the at least one USID is located after the block information and adjacent to the block information, and the at least one USID is arranged in reversed order from a most significant bit to a least significant bit. If the block information and the at least one USID cannot fully fill the SID container, the least significant bit in the SID container is padded to make up to 128 bits. In an example, FIG. 15 is a diagram of a SID container. The SID container has a length of 128 bits, and carries one piece of block information with a length of 48 bits and two USIDs each with a length of 32 bits. The block information is located at most significant bits of the SID container, the two USIDs are arranged in the SID container in an order from a most significant bit to a least significant bit, and 16 least significant bits of the SID container are padded with 0s to make up to 128 bits. In another example, FIG. 16 is a diagram of another SID container. The SID container has a length of 128 bits, and carries one piece of block information and five USIDs each with a length of 16 bits. The block information is located at most significant bits of the SID container, and the five USIDs are arranged in the SID container in an order from a most significant bit to a least significant bit.

After the concept of USID is introduced, multiple types of SIDs (for example, an uncompressed SID with a length of 128 bits, a USID with a length of 32 bits, and a USID with a length of 16 bits) may be encoded into an SRH. For ease of description, an SRH encoded with a USID is referred to as a USRH. A format of the USRH is the same as a format of a conventional SRH, and a difference lies in that a segment list in the USRH supports hybrid encoding using a USID and an uncompressed SID. For example, the segment list in the USRH includes at least one SID container, and each SID container is used to carry one standard SRv6 SID (a SID with a length of 128 bits) or multiple USIDs, to implement hybrid encoding using a USID and an uncompressed SID. In the USID-related technology, one segment of path may include a compressed sub-path and/or an uncompressed sub-path. The uncompressed sub-path is represented by multiple 128-bit standard SRv6 SIDs for encoding. The compressed sub-path is represented by multiple USIDs for encoding, where the multiple USIDs each have a length of 32 bits, the multiple USIDs each have a length of 16 bits, or the multiple USIDs include a USID with a length of 32 bits and a USID with a length of 16 bits. The multiple USIDs may be encoded in one or more SID containers, and block information is further encoded in each SID container. The block information is located at most significant bits of the SID container, the USID is located after the block information and arranged in an order from a most significant bit to a least significant bit, and a 1^{st} USID after the block information is adjacent to the block information.

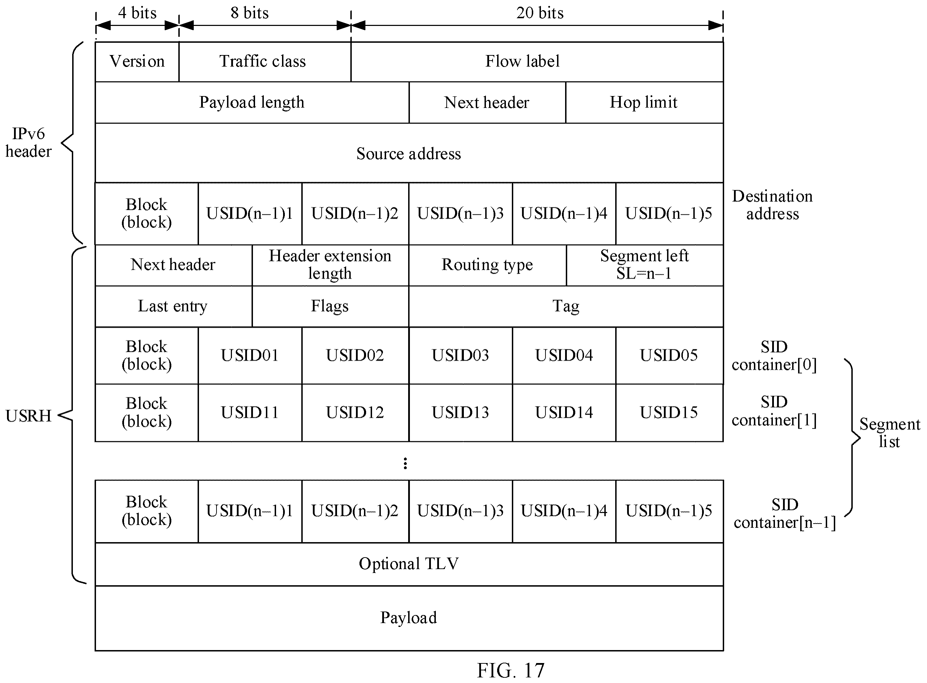

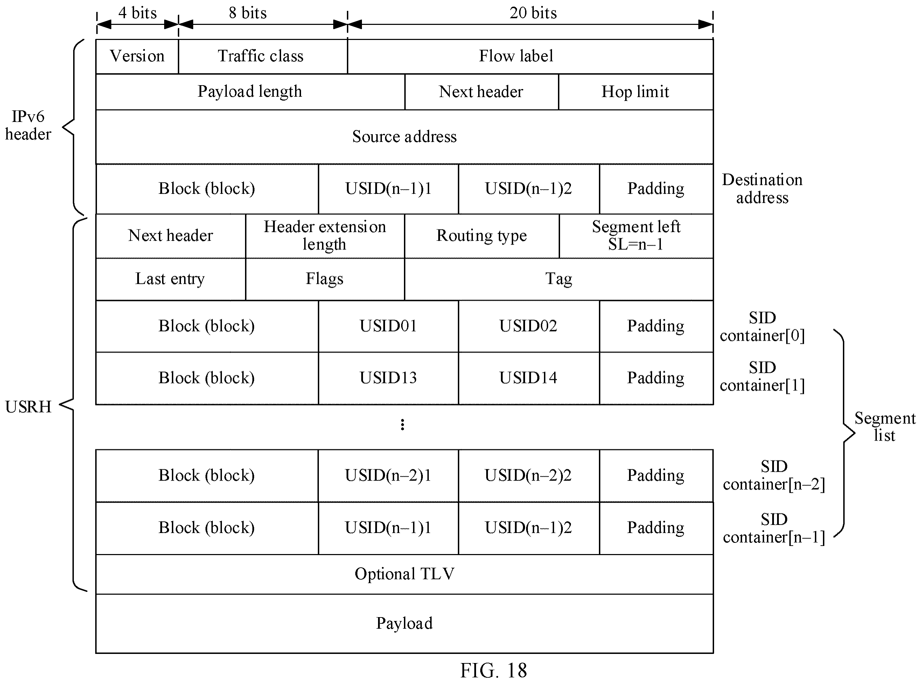

For ease of description, an SRv6 packet encoded with a USID is referred to as a USID packet. FIG. 17 and FIG. 18 are diagrams of two types of USID packets. As shown in FIG. 17 and FIG. 18, the USID packet includes a payload, a USRH, and an IPv6 header. The USRH includes an SL field and a segment list. The segment list includes n SID containers, a length of each SID container is 128 bits, the SL field is used to carry an SL pointer, and the SL pointer indicates an active SID container in the segment list. The n SID containers are arranged in reversed order in the segment list, and an arrangement order of the n GSID containers is GSID container[n-1], GSID container[n-2], ..., GSID container[1], and GSID container[0], in other words, GSID container[n-1] is a 1^{st} GSID container, GSID container[n-2] is a 2^{nd} GSID container. By analogy, GSID container[1] is an (n-1)^{th} GSID container, and GSID container[0] is an n^{th} GSID container. As shown in FIG. 17, each of the n SID containers carries one piece of block information and five USIDs, a length of each USID is 16 bits, the block information is located at most significant bits of the SID container, and the five USIDs are arranged in an order from a most significant bit to a least significant bit. As shown in FIG. 18, each of the n SID containers carries one piece of block information and two USIDs, a length of each USID is 32 bits, the block information is located at most significant bits of the SID container, the two USIDs are arranged in an order from a most significant bit to a least significant bit, and 16 least significant bits in each SID container are padded with 0s. For meanings of other fields in the USID packet, refer to meanings of related fields in a conventional SRv6 packet. Details are not described herein again. In FIG. 17, an example in which the segment list is encoded by using the 16-bit USID is used for description. In FIG. 18, an example in which the segment list is encoded by using the 32-bit USID is used for description. The segment list may alternatively be hybrid encoded by using a 16-bit USID and a 32-bit USID. In this embodiment, a maximum quantity of USIDs that can be carried in each SID container is greater than 2 and less than 5. In addition, FIG. 17 and FIG. 18 are described by using an example in which the USID packet carries path information of a compressed path. The USID packet may alternatively carry both path information of a compressed path and path information of an uncompressed path. This is not limited in embodiments of this application.

The following describes a USID forwarding process by using an example in which path encoding is performed by using a 16-bit USID.

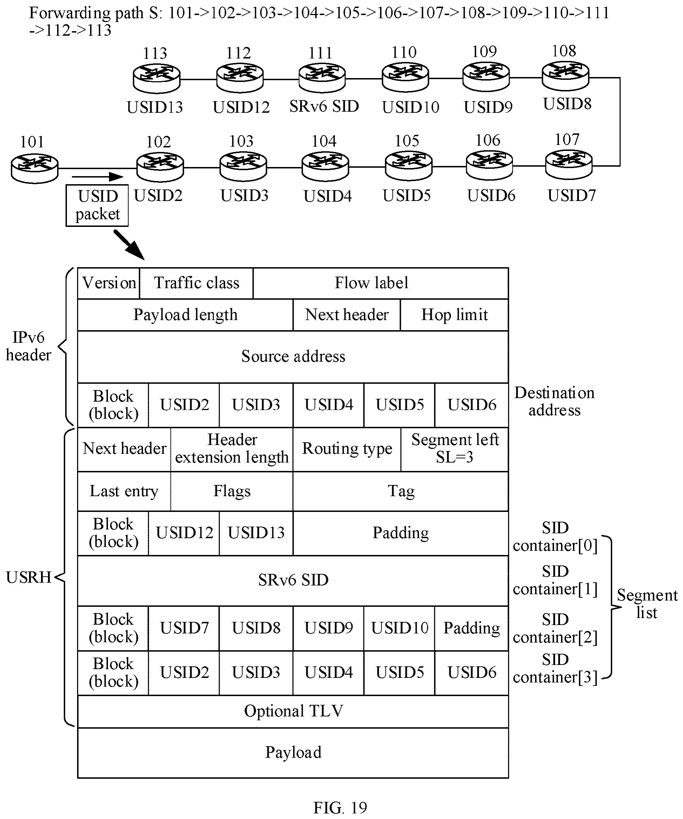

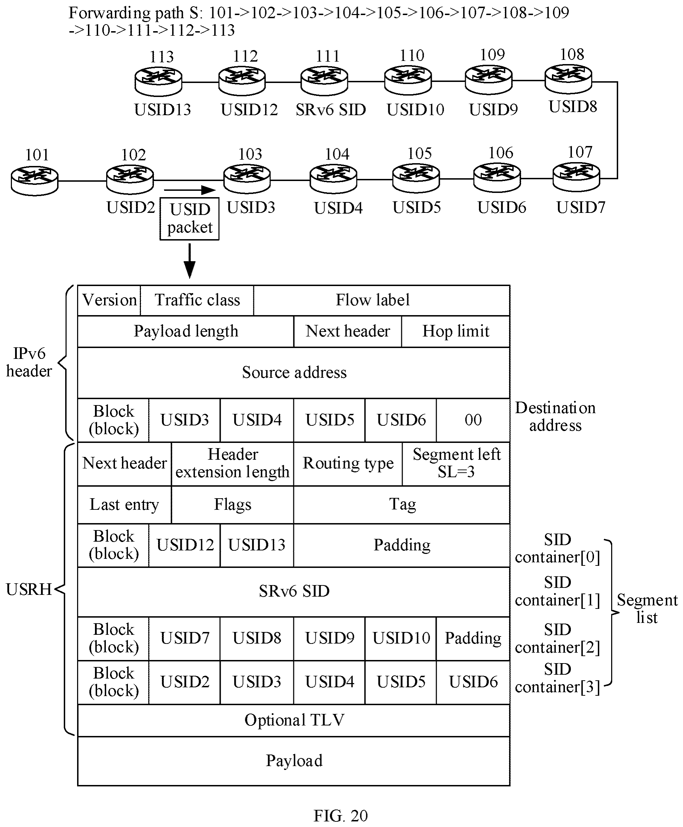

For example, FIG. 19 and FIG. 20 are diagrams of USID forwarding. As shown in FIG. 19 and FIG. 20, an SRv6 domain includes network nodes 101 to 113, SIDs of network nodes 102 to 113 are sequentially USID2 to USID10, an SRv6 SID (namely, a standard SRv6 SID), USID12, and USID13. A forwarding path S is: the network node 101->the network node 102->...->the network node 113. The network node 101 is a head node (also referred to as an ingress node) of the forwarding path S. As shown in FIG. 19, the network node 101 generates a USID packet. The USID packet includes a payload, a USRH, and an IPv6 header. The USRH includes an SL field and a segment list. The segment list includes SID container[0], SID container[1], SID container[2], and SID container[3], and a length of each SID container of SID container[0], SID container[1], SID container[2], and SID container[3] is 128 bits. The SL field is used to carry an SL pointer, and the SL pointer indicates an active SID container in the segment list. In this embodiment, the segment list carries path information of the forwarding path S: USID2 to USID10, the SRv6 SID, USID12, and USID13. Each USID of USID2 to USID10, USID12, and USID13 has a length of 16 bits, and the SRv6 SID has a length of 128 bits. USID2 to USID6 are arranged in SID container[3] in an order from a most significant bit to a least significant bit, and USID7 to USID10 are encoded in SID container[2] in an order from a most significant bit to a least significant bit. The SRv6 SID is encoded in SID container[1], and USID12 and USID13 are arranged in SID container[0] in an order from a most significant bit to a least significant bit. In addition, most significant bits of each SID container in SID container[0], SID container[2], and SID container[3] carries block information with a length of 48 bits, 16 least significant bits of SID container[2] are padded with 0s, and 48 least significant bits of SID container[0] are padded with 0s. In a process of generating the USID packet, the network node 101 initializes the SL to 3, and copies content of SID container[3] to a destination address field of the USID packet. The network node 101 searches a routing table of the network node 101 through longest mask matching based on a destination address of the USID packet (in this case, the destination address is block+USID2+USID3+USID4+USID5+USID6), and the network node 101 forwards the USID packet to the network node 102 based on a search result. With reference to FIG. 19 and FIG. 20, after the network node 102 receives the USID packet, the network node 102 searches a local SID table of the network node 102 through longest mask matching based on the destination address of the USID packet (in this case, the destination address is block+USID2+USID3+USID4+USID5+USID6), and matches block+USID2 in the destination address (in other words, block+USID2 in the destination address hits the local SID table). The network node 102 performs a forwarding action corresponding to USID2. Specifically, as shown in FIG. 20, the network node 102 offsets content that is after a block field and that is in the destination address field to the left by 16 bits (the length of the USID2), and pads 16 least significant bits in the destination address field with 0s. The network node 102 searches a routing table of the network node 102 through longest mask matching based on an updated destination address (the updated destination address is block+USID3+USID4+USID5+USID6), and the network node 102 forwards the USID packet to the network node 103 based on a search result. Subsequent processes in which the network node 103, the network node 104, and the network node 105 forward the USID packet are the same as the process in which the network node 102 forwards the USID packet. After the network node 106 receives the USID packet, the network node 106 searches a local SID table of the network node 106 through longest mask matching based on a destination address of the USID packet (in this case, the destination address is block+USID6), and matches block+USID6 in the destination address (in other words, block+USID6 in the destination address hits the local SID table). The network node 106 performs a forwarding action corresponding to USID6. Specifically, because USID6 is a last USID in the destination address field of the USID packet in this case, the network node 106 executes SL-- to offset the SL pointer to SID container[2], the network node 106 copies content in SID container[2] to the destination address field of the USID packet, the network node 106 searches a routing table of the network node 106 through longest mask matching based on an updated destination address (the updated destination address is block+USID7+USID8+USID9+USID10), and the network node 106 forwards the USID packet to the network node 107 based on a search result. For subsequent processes in which network nodes 107 to 112 forward the USID packet, refer to the processes in which network nodes 101 to 106 forward the USID packet. This process is repeated until the USID packet is forwarded to the network node 113, and the network node 113 decapsulates the USID packet and removes the USRH and the IPv6 header.

FIG. 19 and FIG. 20 are described by using an example in which the segment list in the USRH includes SID container[3] (namely, a 4^{th} SID container, for example, an n^{th} SID container). Because the destination address of the USID packet sent by the network node 101 includes the content in SID container[3], the segment list may alternatively be set without including SID container[3], so that a length of the segment list can be reduced, and redundant information of the segment list can be reduced. In addition, for a short forwarding path (for example, a forwarding path with a hop count less than 5), a destination address field of a USID packet may be capable of carrying complete path information of the forwarding path. In this way, the USID packet may be set without including a segment list, to improve compression efficiency, encapsulation efficiency, and forwarding efficiency of the USID packet.

The foregoing describes only some USID-related content. For other USID-related content, refer to a USID-related technical document (for example, the document " draft-filsfils-spring-net-pgm-extension-srv6-usid-14 "). In the related technical document, USID may be written as uSID, and meanings of "USID" and "uSID" are the same. In addition, for ease of description, the concept of SID container is introduced in the USID-related technology. In the USID-related technical document, the foregoing SID container may be referred to as a segment list. For example, SID container[0] is referred to as segment list[0], SID container[1] is referred to as segment list[1], and the rest is deduced by analogy.

### 4. TI-LFA technology

The TI-LFA technology is also referred to as a TI-LFA fast reroute (fast reroute, FRR) technology. When a node or a link on an active forwarding path of a packet fails, a standby forwarding path is immediately used to forward the packet. This implements fast route backup and minimizes traffic loss. In a traffic engineering (traffic engineering, TE) scenario, a node or a link that a packet needs to pass through often needs to be specified in the packet. For example, a SID of a node or a link is carried in a packet to specify that the packet needs to pass through the node or the link. However, in the TI-LFA technology, when a node or a link specified in a packet is faulty, and the node or the link is on both an active forwarding path and a standby forwarding path of the packet (in other words, both the active forwarding path and the standby forwarding path pass through the node or the link specified in the packet), a protection effect cannot be achieved based on the TI-LFA technology.

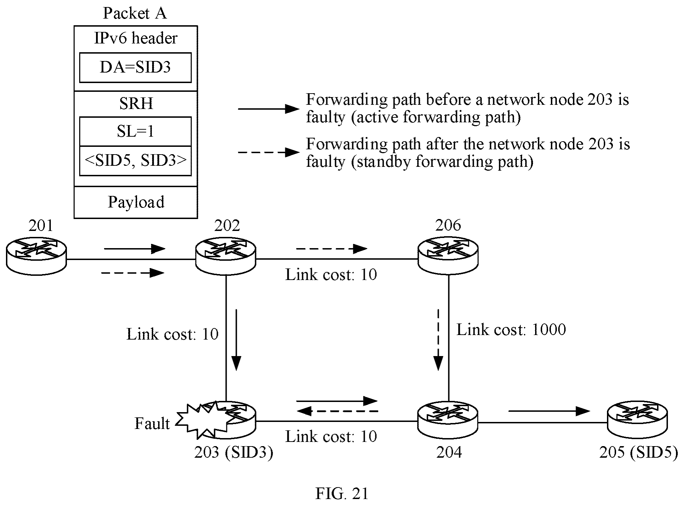

For example, FIG. 21 is a diagram of TI-LFA forwarding. As shown in FIG. 21, an SRv6 domain includes network nodes 201 to 206, a cost of a link between the network node 202 and the network node 203, a cost of a link between the network node 203 and the network node 204, and a cost of a link between the network node 202 and the network node 206 are all 10, and a cost of a link between the network node 206 and the network node 204 is 1000. A SID of the network node 203 is SID3, a SID of the network node 205 is SID5, and both SID3 and SID5 are standard SRv6 SIDs. The network node 201 is to send a packet A to the network node 205, and specifies, in an encoded segment list <SID5, SID3> in an SRH of the packet A, that the packet A needs to pass through the network node 203. When the network node 203 is not faulty, both the network node 201 and the network node 202 search for a route based on a destination address "SID3" of the packet A to forward the packet A. The network node 202 forwards the packet A to the network node 203. The network node 203 replaces the destination address of the packet A with "SID5", and forwards the packet A to the network node 204 based on the replaced destination address "SID5". The network node 204 searches for a route based on the destination address "SID5" of the packet A and forwards the packet A to the network node 205, where the packet A is forwarded to the network node 205 along a forwarding path (the network node 201->the network node 202->the network node 203->the network node 204->the network node 205) shown by solid-line arrows in FIG. 21. The forwarding path shown by the solid-line arrows is an active forwarding path of the packet A. When the network node 203 is faulty, both the network node 201 and the network node 202 search for a route based on the destination address "SID3" of the packet A to forward the packet A, the network node 202 forwards the packet A to the network node 206, both the network node 206 and the network node 204 search for a route based on the destination address "SID3" of the packet A to forward the packet A. The network node 204 forwards the packet A to the network node 203, where the packet A is forwarded to the network node 203 along a forwarding path (the network node 201->the network node 202->the network node 206->the network node 204->the network node 203) shown by dashed-line arrows in FIG. 21. The forwarding path shown by the dashed-line arrows is a standby forwarding path of the packet A, and is also referred to as a TI-LFA path or an FRR path. It can be learned that, because both the active forwarding path and the standby forwarding path pass through the network node 203 that is specified in the packet A, when the network node 203 is faulty, the packet A cannot bypass the network node 203. As a result, TI-LFA protection fails.

### 5. SRv6 endpoint fault protection technology

In a conventional SRv6 technology, a destination address of an SRv6 packet is a standard SRv6 SID. When forwarding the SRv6 packet, a network node needs to perform a forwarding operation including SL-- (namely, SL pointer offsetting), and updates an active SID indicated by an offset SL pointer to the destination address of the SRv6 packet. However, a faulty network node cannot perform the forwarding operation. Therefore, an SRv6 endpoint fault protection technology is proposed in the industry. In a process in which a network node with an SRv6 endpoint fault protection technology forwards an SRv6 packet, if the network node senses that a next-hop node of the network node is faulty, the network node performs a proxy (proxy) forwarding operation to replace the next-hop node in processing the SRv6 packet. For example, if the network node senses that the next-hop node is faulty, and the network node determines that a destination address of the SRv6 packet is a SID of the next-hop node, and an SL in the SRv6 packet is greater than 0, the network node replaces the next-hop node in processing the SRv6 packet. Specifically, the network node replaces the next-hop node in executing SL-- to offset an SL pointer, and the network node replaces the next-hop node in updating, to the destination address of the SRv6 packet, an active SID indicated by an offset SL pointer. The network node that performs the proxy forwarding operation may be referred to as a proxy node, a proxy forwarding (proxy forwarding) node, a proxy network node, or the like. After the proxy network node performs the proxy forwarding operation, the proxy network node forwards the SRv6 packet based on an updated destination address of the SRv6 packet. In this way, the SRv6 packet can bypass the faulty network node, to implement SRv6 endpoint fault protection.

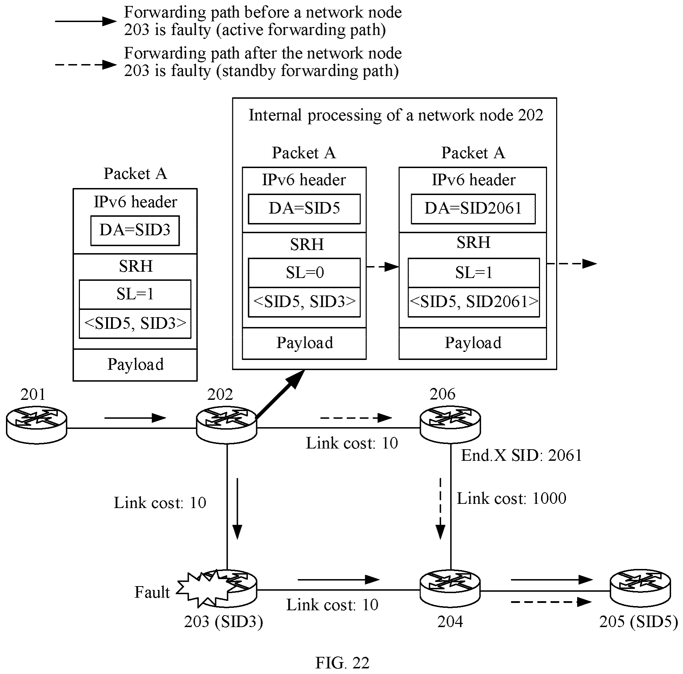

For example, FIG. 22 is a diagram of SRv6 endpoint fault protection. As shown in FIG. 22, an SRv6 domain includes network nodes 201 to 206, a cost of a link between the network node 202 and the network node 203, a cost of a link between the network node 203 and the network node 204, and a cost of a link between the network node 202 and the network node 206 are all 10, and a cost of a link between the network node 206 and the network node 204 is 1000. A SID of the network node 203 is SID3, a SID of the network node 205 is SID5, both SID3 and SID5 are standard SRv6 SIDs, and a SID of an interface that is of the network node 206 and that is connected to the network node 204 is SID2061. The network node 201 is to send a packet A to the network node 205, and specifies, in an encoded segment list <SID5, SID3> in an SRH of the packet A, that the packet A needs to pass through the network node 203. When the network node 203 is not faulty, the packet A is forwarded to the network node 205 along a forwarding path shown by solid-line arrows in FIG. 22, and the forwarding path shown by the solid-line arrows is an active forwarding path of the packet A. When the network node 203 is faulty, the network node 201 searches for a route based on a destination address "SID3" of the packet A, and forwards the packet A to the network node 202. The network node 202 searches for a route based on the destination address "SID3" of the packet A, and determines that a next-hop node of the network node 202 is the network node 203. However, because the network node 202 senses that the network node 203 is faulty, the network node 202 determines that the destination address "SID3" of the packet A is the SID of the network node 203 (in other words, the network node 202 determines that the network node 202 is a previous-hop node of the destination address "SID3" of the packet A), and an SL in the packet A is greater than 0. Therefore, the network node 202 performs a proxy forwarding operation to replace the network node 203 in processing the packet A. That the network node 202 performs the proxy forwarding operation includes: The network node 202 replaces the network node 203 in executing SL-- to offset an SL pointer (an active SID indicated by an offset SL pointer is "SID5" in the segment list), and the network node 202 replaces the network node 203 in updating, to a destination address field of the packet A (in this case, a destination address of the packet A is "SID5"), the active SID indicated by the offset SL pointer. After the network node 202 performs the proxy forwarding operation, the network node 202 searches for the route based on the updated destination address "SID5" and determines that a next-hop node of the network node 202 is still the network node 203. In this case, although the network node 202 senses that the network node 203 is faulty, the network node 202 determines that the destination address "SID5" of the packet A is not the SID of the network node 203 (in other words, the network node 202 determines that the network node 202 is not a previous-hop node of the destination address "SID5" of the packet A), and the SL in the packet A is equal to 0. Therefore, the network node 202 does not perform the proxy forwarding operation, and the network node 202 switches the packet A to a standby forwarding path for forwarding based on a normal forwarding procedure. In this embodiment, a repair list (repair list) of the standby forwarding path is < SIDS, SID2061>. Therefore, the network node 202 replaces the segment list in the packet A with the repair list of the standby forwarding path, and initializes the SL in the packet A to 1 based on the repair list; the network node 202 copies "SID2061" in the repair list to the destination address of the packet A based on the SL pointer; the network node 202 searches for the route based on the destination address "SID 2061" of the packet A and forwards the packet A to the network node 204; and after performing an SRv6 forwarding behavior to update the destination address of the packet A to "SID5", the network node 204 searches for a route based on an updated destination address "SID5" and forwards the packet A to the network node 205. Therefore, when the network node 203 is faulty, the packet A is forwarded to the network node 205 along a forwarding path (the network node 201->the network node 202->the network node 206->the network node 204->the network node 205) shown by dashed-line arrows in FIG. 22. The forwarding path shown by the dashed-line arrows is a standby forwarding path of the packet A, and is also referred to as an FRR path. It can be learned that, in the SRv6 endpoint fault protection technology, because a previous-hop node of a faulty node performs a proxy forwarding operation, a standby forwarding path of a packet may bypass the faulty node.

It can be learned from the foregoing descriptions of the TI-LFA technology and the SRv6 endpoint fault protection technology that a difference between the TI-LFA technology and the SRv6 endpoint fault protection technology is as follows: In the TI-LFA technology, a previous-hop node of a faulty node does not perform a proxy forwarding operation, and does not replace the faulty node in updating a destination address of a packet. The previous-hop node forwards the packet based on the original destination address of the packet (a SID of the faulty node). As a result, the packet cannot bypass the faulty node. In the SRv6 endpoint fault protection technology, a previous-hop node of a faulty node performs a proxy forwarding operation to update a destination address of a packet. The previous-hop node may offset a SID of the faulty node, and the previous-hop node forwards the packet based on an updated destination address, so that the packet reaches a destination node by bypassing the faulty node.

It can be learned from the foregoing descriptions of the SRv6 endpoint fault protection technology that, in the SRv6 endpoint fault protection technology, a previous-hop node of a faulty node replaces the faulty node in executing SL-- to locate, in a segment list of an SRv6 packet, a next SID that is after a SID of the faulty node. However, in an SRv6 technology that supports a compressed SID, a segment list includes at least one SID container, one SID container is used to carry one uncompressed SID or multiple compressed SIDs, and an SL pointer indicates an active SID container in the segment list instead of a specific SID. As a result, a previous-hop node of a faulty node cannot locate, in the segment list of an SRv6 packet by executing SL--, a next SID that is after a SID of the faulty node, and consequently cannot perform a proxy forwarding operation.

This application provides a packet forwarding solution, which may be applied to a compressed SID scenario, to resolve a problem that a previous-hop node of a faulty node cannot locate a next SID that is after a SID of the faulty node in the compressed SID scenario. The previous-hop node may locate the next SID that is after the SID of the faulty node, and forward a segment routing packet (for example, an SRv6 packet) based on the next SID, so that the segment routing packet is forwarded by bypassing the faulty node, to implement endpoint fault protection in the compressed SID scenario.

The following describes an application scenario of this application.

The application scenario of embodiments of this application provides a communication system. The communication system includes a segment routing network and a terminal-side device accessing the segment routing network. The segment routing network is used to forward a packet between different terminal-side devices accessing the segment routing network, to implement communication between the different terminal-side devices. The segment routing network may be a metropolitan area network, a wide area network, a campus network, a data center network (data center network, DCN), or a data center interconnection (data center interconnection, DCI) network formed by interconnecting at least two data centers (data centers, DCs). The segment routing network may be a segment routing (segment routing, SR) network, an SRv6 network, a segment routing multi-protocol label switching (segment routing multi-protocol label switching, SR-MPLS) network, or another segment routing network. The segment routing network is also referred to as a segment routing domain (domain) or a segment routing network domain. For example, an SRv6 network is referred to as an SRv6 domain or an SRv6 network domain.

The segment routing network includes multiple network nodes configured for packet forwarding. The network node may be a node configured for packet forwarding, for example, a physical switch, a physical router, a virtual switch created in a physical device, or a virtual router created in a physical device; or may be a terminal device. Types of the multiple network nodes may be the same or different. For example, the multiple network nodes are all switches or routers; or some of the multiple network nodes are switches, and the other network nodes are routers. Based on deployment positions, the multiple network nodes include an edge network node and a core network node. The edge network node is located at an edge of the segment routing network and is used by the terminal-side device to access the segment routing network. The core network node is located at a core position of the segment routing network and is configured for packet forwarding between different edge network nodes. For example, the edge network node is a provider edge (provider edge, PE) node, and the core network node is a provider (provider, P) node. The edge network node may include an ingress (ingress) node and an egress (egress) node. The ingress node is located at an entrance of the segment routing network, and is configured to import traffic to the segment routing network. The egress node is located at an exit of the segment routing network and is configured to export traffic from the segment routing network.

Optionally, the terminal-side device is connected to the edge network node in the segment routing network through an access node or an access network, to access the segment routing network, in other words, the access node or the access network is connected between the terminal-side device and the edge network node in the segment routing network. The access node may be a node configured for packet forwarding, for example, a physical switch, a physical router, a virtual switch, or a virtual router. For example, the access node is a customer edge (customer edge, CE) node. The access network includes multiple access nodes that are communicatively connected. The terminal-side device may be a host, a user terminal, a home gateway, an internet of things (internet of things, IoT) device, an industrial device, a server, or a virtual machine (virtual machine, VM) created in a server. The user terminal may be a mobile phone, a tablet computer, a notebook computer, a desktop computer, a television, a vehicle-mounted terminal, a personal digital assistant (personal digital assistant, PDA), or the like. The terminal-side device accessing the segment routing network includes a transmit end device and a receive end device, where the transmit end device is connected to an ingress node in the segment routing network, and the receive end device is connected to an egress node in the segment routing network.

In embodiments of this application, when the ingress node of the segment routing network imports a packet into the segment routing network, the ingress node encapsulates, in the packet, a segment identifier of a specified node or a specified link in the segment routing network, to specify that the packet needs to pass through the specified node or the specified link. For example, the segment routing network includes a forwarding path used to forward the packet, and the ingress node encapsulates, in the packet, a segment list indicating the forwarding path, to guide the packet to be forwarded along the forwarding path. The forwarding path includes an ingress node, an egress node, and at least one transit node (transit node) located between the ingress node and the egress node. A quantity of transit nodes varies based on a length of the forwarding path. The ingress node of the forwarding path and the ingress node of the segment routing network may be a same network node, and the egress node of the forwarding path and the egress node of the segment routing network may be a same network node. This is not limited in embodiments of this application.

In embodiments of this application, names of the network node, the ingress node, the transit node, the egress node, the forwarding path, and the like are merely examples. The network node may also be referred to as a network device, a forwarding node, a forwarding device, a gateway node, a gateway device, a routing node, a routing device, or the like. The ingress node may also be referred to as an ingress device, and the ingress node of the forwarding path may also be referred to as a head node (head node), a head node device, a first node, a first node device, or the like. The transit node may also be referred to as a transit device, an intermediate node, an intermediate device, or the like. The egress node may also be referred to as an egress device, and the egress node of the forwarding path may also be referred to as an end node (end node), an end node device, or the like. The forwarding path may also be referred to as a transmission path, a communication path, a communication tunnel, or the like. Optionally, the forwarding path in this application is a segment routing traffic engineering (segment routing traffic engineering, SR-TE) tunnel, a resource reservation protocol-traffic engineering (resource reservation protocol-traffic engineering, RSVP-TE) tunnel, an SR tunnel, or an SRv6 tunnel. For example, the forwarding path is an SRv6 TE policy (policy) tunnel.

In embodiments of this application, the network node in the segment routing network may enable a segment identifier compress function and an endpoint fault protection function, and the network node in the segment routing network supports packet forwarding based on a compressed segment identifier. In addition, the network node in the segment routing network may store segment identifier planning information of the network node. When advertising routing information to the segment routing network, the network node in the segment routing network includes the segment identifier planning information of the network node in the routing information. After receiving routing information advertised by another network node, each network node in the segment routing network may store segment identifier planning information of the another network node. In a process in which the network node in the segment routing network forwards a packet, if the network node senses that an outbound interface of the network node is faulty, the network node determines a next segment identifier in a segment list or a destination address field of the packet based on the segment identifier planning information of the network node, and forwards the packet based on the next segment identifier. If the network node senses that a next-hop node of the network node is faulty, the network node determines a next segment identifier in the segment list or the destination address field of the packet based on segment identifier planning information of the next-hop node, and forwards the packet based on the next segment identifier (in other words, the network node performs a proxy forwarding operation). In this way, the packet is forwarded by bypassing the faulty interface or the faulty node, to implement endpoint fault protection.

Segment identifiers differ based on different types of segment routing networks. For example, the segment identifier may be a SID in SR, a SID in SRv6, or a label in SR-MPLS. The following describes the application scenario of this application by using an example in which the segment routing network is an SRv6 network.

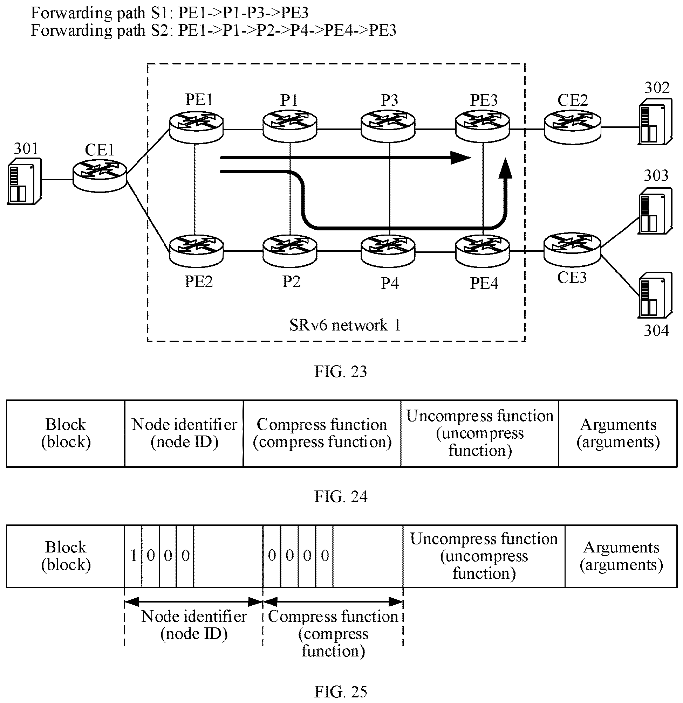

FIG. 23 is a diagram of an application scenario according to an embodiment of this application. A communication system provided in the application scenario includes an SRv6 network 1 and terminal-side devices 301 to 304. The terminal-side devices 301 to 304 access the SRv6 network 1 through three access nodes CE1 to CE3. The SRv6 network 1 includes eight network nodes: PE1 to PE4 and P1 to P4. PE1 to PE4 are edge network nodes in the SRv6 network 1, and P1 to P4 are core network devices in the SRv6 network 1. The terminal-side device 301 is separately connected to PE1 and PE2 through CE1, to access the SRv6 network 1. The terminal-side device 302 is connected to PE3 through CE2, to access the SRv6 network 1. Terminal-side devices 303 and 204 are connected to PE4 through CE3, to access the SRv6 network 1. Optionally, PE1 and PE2 are ingress nodes of the SRv6 network 1, PE2 and PE3 are egress nodes of the SRv6 network 1, the terminal-side device 301 is a transmit end device, and at least one of terminal-side devices 302 to 205 (for example, the terminal-side device 302) is a receive end device.

For example, an SRv6 SID compress function and an SRv6 endpoint fault protection function are enabled for PE1 to PE4 and P1 to P4, and each network node in PE1 to PE4 and P1 to P4 includes segment identifier planning information of the network node when advertising routing information to the SRv6 network 1. After receiving routing information advertised by the other network nodes in PE1 to PE4 and P1 to P4, each network node in PE1 to PE4 and P1 to P4 stores segment identifier planning information (namely, the segment identifier planning information of the other network nodes) carried in the routing information, and each network node in PE1 to PE4 and P1 to P4 stores the segment identifier planning information of the network node.

In an example, after PE1 receives a packet 1 sent from the terminal-side device 301 to the terminal-side device 302, PE1 performs SRv6 encapsulation on the packet 1 to obtain an SRv6 packet 1, where the SRv6 packet 1 carries a compressed SID of P3 to indicate that the SRv6 packet 1 needs to pass through P3. For example, a segment list of the SRv6 packet 1 includes the compressed SID of P3 and a SID of PE3, and a destination address of the SRv6 packet 1 includes the compressed SID of P3. PE1 forwards the SRv6 packet 1 to P1 based on the destination address of the SRv6 packet 1. After receiving the SRv6 packet 1, P1 searches for a route based on the destination address of the SRv6 packet 1, and determines that a next-hop node is P3. If P3 is not faulty, P1 forwards the SRv6 packet 1 to P3. After P3 receives the SRv6 packet 1 from P1, P3 modifies the destination address of the SRv6 packet 1 to the SID of PE3, and P3 forwards the SRv6 packet 1 to PE3 based on a modified destination address. If P3 is faulty, P1 replaces P3 in processing the SRv6 packet 1. Specifically, P1 determines a next segment identifier (in this example, the next segment identifier is the SID of PE3) in the SRv6 packet 1 based on the segment identifier planning information of P3, P1 modifies the destination address of the SRv6 packet 1 to the next segment identifier, and P1 forwards the SRv6 packet 1 to P2 based on a modified destination address. After P2 receives the SRv6 packet 1 from P1, P2 forwards the SRv6 packet 1 to P4 based on the destination address of the SRv6 packet 1. After P4 receives the SRv6 packet 1 from P2, P4 forwards the SRv6 packet 1 to PE4 based on the destination address of the SRv6 packet 1. After PE4 receives the SRv6 packet 1 from P4, PE4 forwards the SRv6 packet 1 to PE3 based on the destination address of the SRv6 packet 1. After receiving the SRv6 packet 1, PE3 performs SRv6 decapsulation on the SRv6 packet 1 to obtain the packet 1, and PE3 forwards the packet 1 to the terminal-side device 302. It can be learned that, when P3 is not faulty, the SRv6 packet 1 is forwarded along a forwarding path S1 in the SRv6 network 1; or when P3 is faulty, the SRv6 packet 1 is forwarded along a forwarding path S2 in the SRv6 network 1.

In another example, after PE1 receives a packet 1 sent from the terminal-side device 301 to the terminal-side device 302, PE1 performs SRv6 encapsulation on the packet 1 to obtain an SRv6 packet 1, where the SRv6 packet 1 carries a compressed SID of a first outbound interface (the first outbound interface corresponds to P3) of P1 to indicate that the SRv6 packet 1 needs to pass through the first outbound interface of P1. For example, a segment list of the SRv6 packet 1 includes the compressed SID of the first outbound interface of P1 and a SID of PE3, and a destination address of the SRv6 packet 1 includes the compressed SID of the first outbound interface of P1. PE1 forwards the SRv6 packet 1 to P1 based on the destination address of the SRv6 packet 1. After receiving the SRv6 packet 1, P1 searches a local SID table based on the destination address of the SRv6 packet 1, and determines that the destination address hits the local SID table. If the first outbound interface of P1 is not faulty, P1 performs a forwarding behavior corresponding to the destination address of the SRv6 packet 1 (namely, the compressed SID of the first outbound interface of P1). After modifying the destination address of the SRv6 packet 1 to the SID of PE3, P1 forwards the SRv6 packet 1 to P3 through the first outbound interface of P1. After P3 receives the SRv6 packet 1 from P1, P3 forwards the SRv6 packet 1 to PE3 based on a destination address of the SRv6 packet 1. If the first outbound interface of P1 is faulty, P1 determines a next segment identifier (in this example, the next segment identifier is the SID of PE3) in the SRv6 packet 1 based on the segment identifier planning information of P1, P1 modifies the destination address of the SRv6 packet 1 to the next segment identifier, and P1 forwards the SRv6 packet 1 to P2 based on a modified destination address. After P2 receives the SRv6 packet 1 from P1, P2 forwards the SRv6 packet 1 to P4 based on the destination address of the SRv6 packet 1. After P4 receives the SRv6 packet 1 from P2, P4 forwards the SRv6 packet 1 to PE4 based on the destination address of the SRv6 packet 1. After PE4 receives the SRv6 packet 1 from P4, PE4 forwards the SRv6 packet 1 to PE3 based on the destination address of the SRv6 packet 1. After receiving the SRv6 packet 1, PE3 performs SRv6 decapsulation on the SRv6 packet 1 to obtain the packet 1, and PE3 forwards the packet 1 to the terminal-side device 302. It can be learned that, when the first outbound interface of P1 is not faulty, the SRv6 packet 1 is forwarded along a forwarding path S1 in the SRv6 network 1; or when the first outbound interface of P1 is faulty, the SRv6 packet 1 is forwarded along a forwarding path S2 in the SRv6 network 1.

In the foregoing two examples, the forwarding path S1 is an active forwarding path of the SRv6 packet 1, the forwarding path S2 is a standby forwarding path of the SRv6 packet 1, and the standby forwarding path is also referred to as an FRR path. PE1 is the ingress node of the SRv6 network 1, and is an ingress node of the forwarding path S1 and the forwarding path S2. PE3 is the egress node of the SRv6 network 1, and is an egress node of the forwarding path S1 and the forwarding path S2. The forwarding path S1 further includes transit nodes P1 and P3, and the forwarding path S2 further includes transit nodes P1, P2, P4, and PE4.

The foregoing descriptions of the application scenario of this application are merely used as examples, and are not intended to limit the technical solutions of embodiments of this application. In an implementation process, a quantity of network nodes, a quantity of access nodes, a quantity of terminal-side devices, and relationships between the nodes and the devices in the application scenario may be configured based on a requirement. In another embodiment, the application scenario further includes a network management device. The network management device is connected to at least one network node, an access node, a terminal-side node, and the like, to manage and control the nodes and the devices. For example, the network management device controls the network node in the segment routing network to forward a packet. The network management device integrates functions such as network management, service control, and network analysis. The network management device may be a server, a server cluster formed by several servers, or a cloud computing service center. The network management device is also referred to as a network management device, a network control device, a network controller, a control device, or the like. This is not limited in embodiments of this application.

The foregoing describes the application scenario of this application, and the following describes the technical solutions of this application.

The technical solutions of this application are applied to a compressed SID scenario. To facilitate understanding of the technical solutions of this application, the following uses an SRv6 scenario as an example to describe a format of a standard SRv6 SID in a compression scenario.

FIG. 24 is a format diagram of a standard SRv6 SID in a compression scenario. The standard SRv6 SID includes a block (block) field, a node identifier (node ID) field, a compress function (compress function) field, an uncompress function (uncompress function) field, and an arguments (arguments) field. The block field is used to carry a common prefix (common prefix) of the standard SRv6 SID. The common prefix is an address block (address block) for allocating the standard SRv6 SID. The node identifier field is used to carry an identifier of a network node that advertises the standard SRv6 SID. The node identifier is unique in an SRv6 domain. The block field and the node identifier field form a locator field. The common prefix carried in the block field and the node identifier carried in the node identifier field form a routable locator, to guide packet forwarding to the network node that advertises the standard SRv6 SID. Each of the compress function field and the uncompress function field is used to carry a local function identifier of the network node that advertises the standard SRv6 SID (for ease of description, the function identifier carried in the compress function field is referred to as a compress function identifier, and the function identifier carried in the uncompress function field is referred to as an uncompress function identifier). The function identifier is used to map a local segment endpoint behavior (segment endpoint behavior) of the network node to indicate a local forwarding behavior of the network node. The function identifier is locally unique on the network node. The arguments field is used to carry an argument related to the function field (for example, the uncompress function field).

A value of a compress function field of a standard SRv6 SID that does not support compression (namely, an incompressible SRv6 SID with a length of 128 bits) is 0. A value of an uncompress function field of a standard SRv6 SID that supports compression (namely, a compressible SRv6 SID with a length of 128 bits) is 0. In an example, a length of a block field is 48 bits, a length of a node identifier field is 16 bits, a length of a compress function field is 16 bits, a length of an uncompress function field is 24 bits, and a length of an arguments field is 24 bits. A length of a compressed SID obtained by compressing a standard SRv6 SID that supports compression is 32 bits or 16 bits. The compressed 32-bit SID includes the node identifier field and the compress function field, and the compressed 16-bit SID includes only the node identifier field or the compress function field (for a compression idea, refer to FIG. 2 to FIG. 5). The compressed 16-bit SID including the node identifier field is an END SID. The SID is allocated from a global identifiers block (global ID block, GIB), and the GIB is equivalent to a node identifier space. The compressed 16-bit SID including the compress function field is an END.X SID or END.DT4 SID. The SID is allocated from a local identifiers block (local ID block, LIB), and the LIB is equivalent to a function identifier space. Each of the GIB and LIB ranges from 0 to 65535, and the GIB and LIB do not overlap. Each of a range of the GIB and a range of the LIB can be adjusted by using a command line. A ratio of the range of the GIB to the range of the LIB is 1:1.

For example, FIG. 25 shows a format diagram of a standard SRv6 SID that supports compression to 16 bits in a compression scenario. A format of the SRv6 SID is the same as the format of the SRv6 SID shown in FIG. 24, and a difference lies in that: In the SRv6 SID shown in FIG. 24, a value range of the node identifier (referred to as a node identifier range for short) may overlap a value range of the compress function identifier (referred to as a compress function identifier range for short), and the SRv6 SID may be compressed to 32 bits. In the SRv6 SID shown in FIG. 25, a node identifier starts with 1000, a compress function identifier starts with 0000, the node identifier range does not overlap the compress function identifier range, the node identifier range is a GIB or a subset of the GIB, and the compress function identifier range is a LIB or a subset of the LIB.

The foregoing describes the application scenario of this application, and the following describes embodiments of a packet forwarding method in this application.

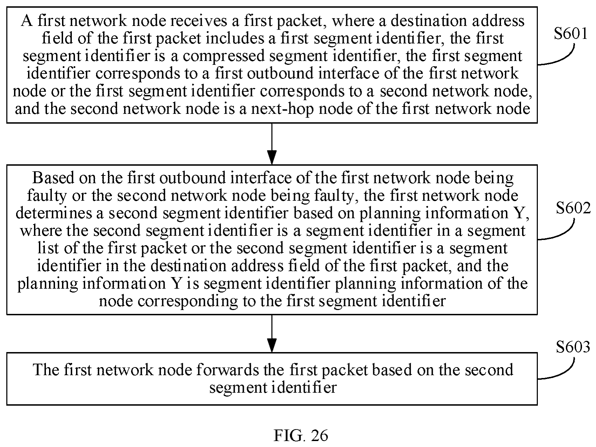

FIG. 26 is a flowchart of a packet forwarding method according to an embodiment of this application. The packet forwarding method is applied to a first network node in a segment routing network. The first network node is a transit node on a first forwarding path in the segment routing network, and the first forwarding path is a forwarding path (for example, an active forwarding path) of a first packet. The segment routing network may be an SR network, an SRv6 network, an SR-MPLS network, or another segment routing network. In embodiments of this application, an example in which the segment routing network is an SRv6 network is used for description. For example, the segment routing network is the SRv6 network 1 in FIG. 23, the first forwarding path is the forwarding path S1, and the first network node is P1. As shown in FIG. 26, the method includes step S601 to step S603.

S601: The first network node receives a first packet, where a destination address field of the first packet includes a first segment identifier, the first segment identifier is a compressed segment identifier, the first segment identifier corresponds to a first outbound interface of the first network node or the first segment identifier corresponds to a second network node, and the second network node is a next-hop node of the first network node.

The first network node receives the first packet from a previous-hop node of the first network node, where the previous-hop node is a transit node or an ingress node on the first forwarding path, and the first forwarding path is a forwarding path of the first packet. As shown in FIG. 23, the first forwarding path is the forwarding path S1, the first network node is P1, the previous-hop node is PE1, and P1 receives the first packet from PE1.

In this embodiment of this application, the destination address field of the first packet includes the first segment identifier, the first segment identifier corresponds to the first outbound interface of the first network node or the first segment identifier corresponds to the second network node, and the second network node is the next-hop node of the first network node. If the first segment identifier corresponds to the first outbound interface, the first segment identifier may be an END.X SID representing the first outbound interface. If the first segment identifier corresponds to the second network node, the first segment identifier may be an END SID representing the second network node. The first segment identifier is the compressed segment identifier, and the compressed segment identifier is obtained by compressing a standard segment identifier. The standard segment identifier has a length of 128 bits, and the compressed segment identifier has a length less than 128 bits. For example, the standard segment identifier is a standard SRv6 SID, and the compressed segment identifier has a length of 32 bits or 16 bits. The compressed segment identifier with a length of 32 bits includes a node identifier and a compress function identifier, and the compressed segment identifier with a length of 16 bits is the node identifier or the compress function identifier. For example, the first segment identifier is a GSID with a length of 32 bits, a GSID with a length of 16 bits, a USID with a length of 32 bits, or a USID with a length of 16 bits.

In an optional embodiment, the destination address field of the first packet includes a block (block) field and a target field, the target field is located after the block field, the block field is used to carry block (block) information, and the first segment identifier is located in the target field. In an embodiment, 48 most significant bits in the destination address field are the block field, the target field is located after the block field and adjacent to the block field, and the target field has a length of 32 bits or 16 bits. The target field with a length of 32 bits includes a node identifier field and a compress function field, and the target field with a length of 16 bits is the node identifier field or the compress function field. Optionally, the first packet includes an IPv6 header, and the destination address field is located in the IPv6 header.

In an optional embodiment, the first packet further includes a segment list and an SL field. For example, the first packet includes an SRH, and the SRH includes the segment list and the SL field. The segment list includes at least one container, and each container is a space with a length of 128 bits. When the segment list includes multiple containers, the multiple containers are arranged in reversed order in the segment list. The SL field is used to carry an SL pointer, and the SL pointer indicates an active container in the segment list. Each container in the segment list is used to carry one standard segment identifier or carry at least one compressed segment identifier. When the segment list carries multiple compressed segment identifiers, lengths of the multiple compressed segment identifiers may be equal or not equal. In an example, a length of each compressed segment identifier in the segment list is 32 bits, and the segment list is encoded by using the compressed segment identifier with a length of 32 bits, or the segment list is hybrid encoded by using the standard segment identifier and the compressed segment identifier with a length of 32 bits. In another example, a length of each compressed segment identifier in the segment list is 16 bits, and the segment list is encoded by using the compressed segment identifier with a length of 16 bits, or the segment list is hybrid encoded by using the standard segment identifier and the compressed segment identifier with a length of 16 bits. In still another example, the compressed segment identifiers in the segment list include a compressed segment identifier with a length of 32 bits and a compressed segment identifier with a length of 16 bits, and the segment list is hybrid encoded by using the compressed segment identifier with a length of 32 bits and the compressed segment identifier with a length of 16 bits; or the segment list is hybrid encoded by using the standard segment identifier, the compressed segment identifier with a length of 32 bits, and the compressed segment identifier with a length of 16 bits.

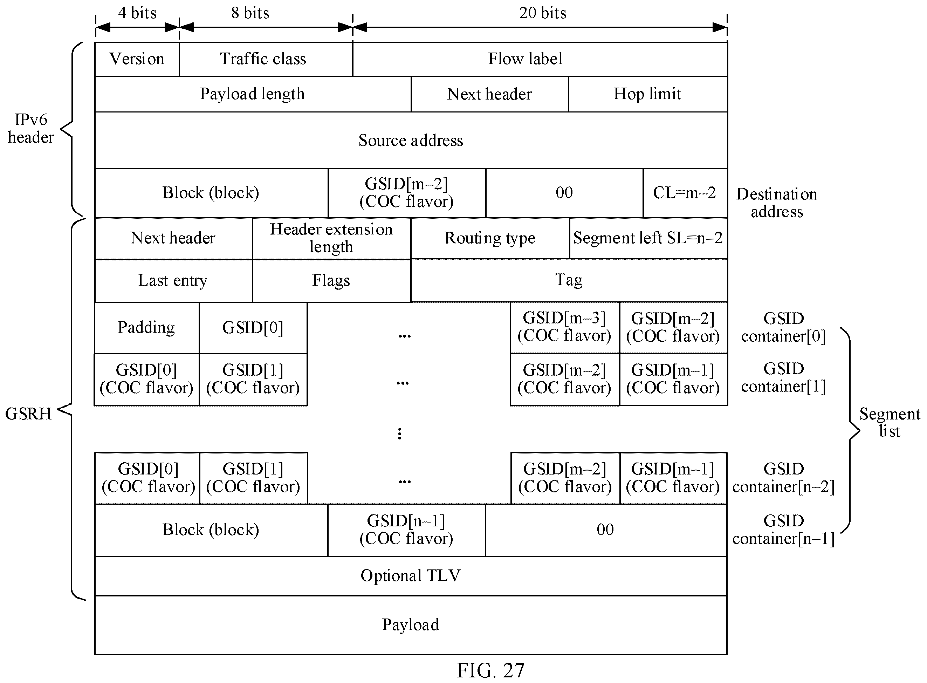

In an embodiment, the segment list of the first packet is encoded by using a GSID, and each container in the segment list is used to carry one standard segment identifier or carry at least one compressed segment identifier. For any container in the segment list, when the container carries the at least one compressed segment identifier, the at least one compressed segment identifier is arranged in the container in an order from a least significant bit to a most significant bit, where the at least one compressed segment identifier has a length of 32 bits or 16 bits; or the at least one compressed segment identifier includes a compressed segment identifier with a length of 32 bits and a compressed segment identifier with a length of 16 bits. The first packet further includes a CL field, the CL field is used to carry a CL pointer, and the CL pointer indicates an active compressed segment identifier in an active container. The CL field is located in the destination address field of the first packet, and the CL field includes at least two least significant bits in the destination address field. For example, the CL field is two least significant bits or three least significant bits in the destination address field. In this embodiment, the first packet may be referred to as a GSRv6 packet, the SRH may be referred to as a GSRH, both the standard segment identifier and the compressed segment identifier are GSIDs, and the container in the segment list may be referred to as a GSID container. In an example, the first packet is shown in FIG. 27, and the first packet includes a payload, a GSRH, and an IPv6 header. The GSRH includes an SL field and a segment list, where the segment list includes n GSID containers, and n is a positive integer. The n GSID containers are arranged in reversed order in the segment list, and a length of each GSID container is 128 bits. GSID container[n-1] carries a 1^{st} GSID of a compressed path. Each GSID container in GSID container[1] to GSID container[n-2] carries m GSIDs, and the m GSIDs are intermediate GSIDs of the compressed path. The m GSIDs in each GSID container in GSID container[1] to GSID container[n-2] are arranged in the GSID container in reversed order from a least significant bit to a most significant bit. GSID container[0] carries m-1 GSIDs, and the m-1 GSIDs are arranged in GSID container[0] in reversed order from a least significant bit to a most significant bit. GSID[0] in the m-1 GSIDs is a last GSID of the compressed path, and other GSIDs are all intermediate GSIDs of the compressed path. A value of the SL field is n-2. Therefore, an SL pointer carried in the SL field indicates GSID container[n-2] (in other words, GSID container[n-2] is a current active container). The IPv6 header includes a destination address field. The destination address field includes a block field, a target field, and an arguments field. The block field is located at most significant bits in the destination address field (for example, 48 most significant bits are the block field). The target field is located after the block field and adjacent to the block field. The arguments field is located at least significant bits in the destination address field (for example, 24 least significant bits are the arguments field). A least significant bit (for example, at least two least significant bits) of the arguments field is the CL field, the target field carries GSID[m-2], and GSID[m-2] is the first segment identifier. The value of the CL field is m-2. Therefore, the CL pointer carried in the CL field indicates GSID[m-2] in GSID container[n-2] (in other words, GSID[m-2] in GSID container[n-2] is a current active GSID), and GSID[m-2] in the destination address field and GSID[m-2] in the GSID container[n-2] are a same GSID. The GSID in the first packet shown in FIG. 27 may have a length of 16 bits or 32 bits. Meanings of other fields in the first packet shown in FIG. 27 are the same as meanings of corresponding fields in the GSRv6 packet shown in FIG. 10. Details are not described herein again.

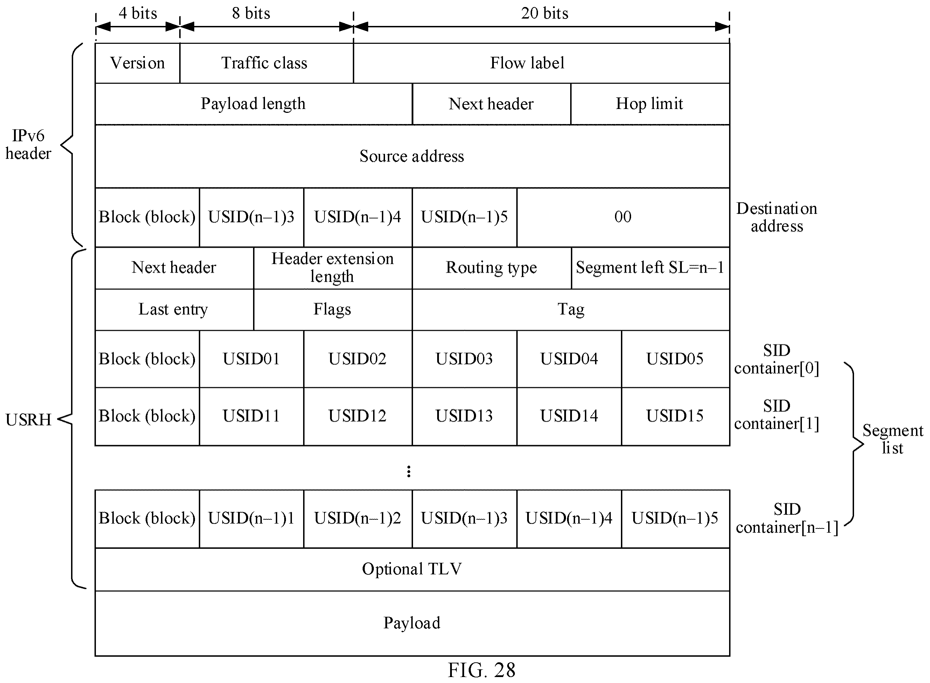

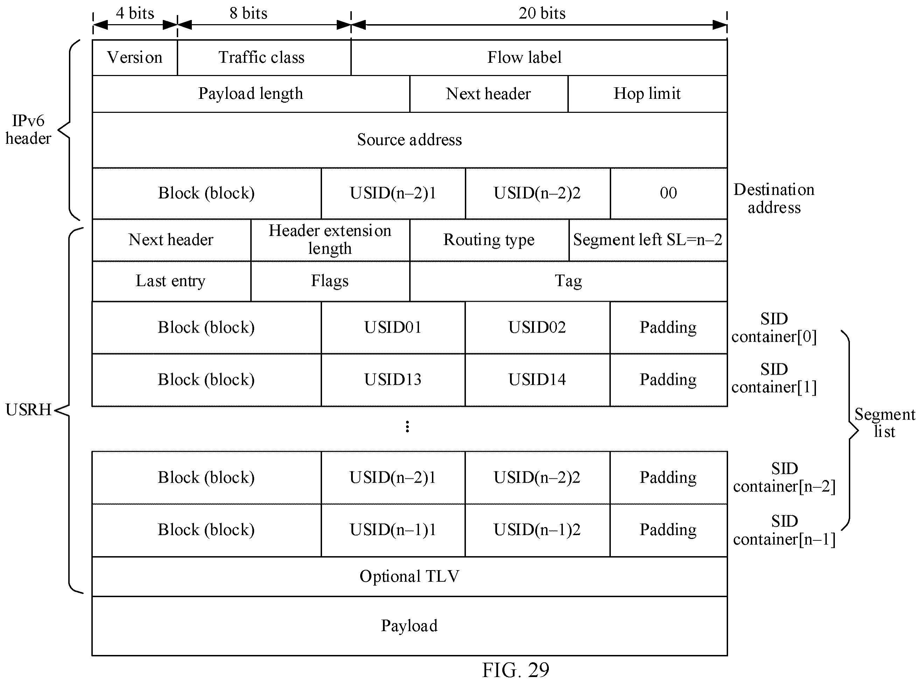

In another embodiment, the segment list of the first packet is encoded by using a USID, and each container in the segment list is used to carry one standard segment identifier or carry one piece of block (block) information and at least one compressed segment identifier. For any container in the segment list, when the container carries the block information and the at least one compressed segment identifier, the block information is located at most significant bits of the container (for example, 48 most significant bits in the container are a block field, and the block information is located in the block field), the at least one compressed segment identifier is arranged in the container in an order from a most significant bit to a least significant bit, and the at least one compressed segment identifier has a length of 32 bits or 16 bits; or the at least one compressed segment identifier includes a compressed segment identifier with a length of 32 bits and a compressed segment identifier with a length of 16 bits. In this embodiment, the first packet may be referred to as a USID packet, the SRH may be referred to as a USRH, the compressed segment identifier is a USID, and the container in the segment list is also referred to as a SID container. In an example, the first packet is shown in FIG. 28, and the first packet includes a payload, a USRH, and an IPv6 header. The USRH includes an SL field and a segment list, where the segment list includes n SID containers, and n is a positive integer. The n SID containers are arranged in reversed order in the segment list, and a length of each SID container is 128 bits. Each SID container carries one piece of block information and five USIDs, a length of each USID is 16 bits, the block information is located at most significant bits (for example, 48 most significant bits) of the SID container, and the five USIDs are arranged in an order from a most significant bit to a least significant bit. A value of the SL field is n-1, and an SL pointer carried in the SL field indicates SID container[n-1] (in other words, SID container[n-1] is a current active container). The IPv6 header includes a destination address field, the destination address field includes a block field and a target field, the block field is located at most significant bits in the destination address field (for example, 48 most significant bits are the block field), the target field is located after the block field and adjacent to the block field, and the destination address field carries USID(n-1)3, USID(n-1)4, and USID(n-1)5. USID(n-1)3 is located in the target field, USID(n-1)3 is a first segment identifier, both USID(n-1)4 and USID(n-1)5 are located in a field after the target field, and block information (carried in the block field) in the destination address field, USID(n-1)3; USID(n-1)4, and USID(n-1)5 are respectively block information, USID(n-1)3, USID(n-1)4, and USID(n-1)5 in SID container[n-1] indicated by the SL pointer. In another example, the first packet is shown in FIG. 29, and the first packet includes a payload, a USRH, and an IPv6 header. The USRH includes an SL field and a segment list, where the segment list includes n SID containers, and n is a positive integer. The n SID containers are arranged in reversed order in the segment list, and a length of each SID container is 128 bits. Each SID container carries one piece of block information and two USIDs, a length of each USID is 32 bits, the block information is located at most significant bits (for example, 48 most significant bits) of the SID container, the two USIDs are arranged in an order from a most significant bit to a least significant bit, and 16 least significant bits in the SID container are padded with 0s. A value of the SL field is n-2. Therefore, an SL pointer carried in the SL field indicates SID container[n-2] (in other words, SID container[n-2] is a current active container). The IPv6 header includes a destination address field, the destination address field includes a block field and a target field, the block field is located at most significant bits in the destination address field (for example, 48 most significant bits are the block field), the target field is located after the block field and adjacent to the block field, and the destination address field carries USID(n-2)1 and USID(n-2)2. USID(n-2)1 is located in the target field, USID(n-2)1 is a first segment identifier, USID(n-2)2 is located in a field after the target field, and content in the destination address field is the same as content in SID container[n-2] indicated by the SL pointer. Meanings of other fields in the first packet shown in FIG. 28 and FIG. 29 are the same as meanings of corresponding fields in the USID packet shown in FIG. 18. Details are not described herein again. In FIG. 28 and FIG. 29, an example in which the first packet includes the segment list is used for description. When a quantity of nodes and a quantity of links that are specified in a USID packet are small, for example, a quantity of hops of a forwarding path is small, the USID packet carries a small quantity of USIDs, a destination address field of the USID packet can carry all the USIDs, and the USID packet may not include a segment list. For example, the USID packet does not include a USRH. In this way, encapsulation efficiency and forwarding efficiency of the USID packet can be improved.

In this embodiment of this application, the first packet is generated by the ingress node of the first forwarding path. For example, the ingress node performs segment routing encapsulation on an original packet from a transmit end device to obtain the first packet. Optionally, the ingress node encapsulates an SRH and an IPv6 header outside the original packet, so that a destination address field in the IPv6 header includes the first segment identifier, to obtain the first packet. In an example, the ingress node encapsulates a GSRH and an IPv6 header in the original packet to obtain the first packet. A structure of the first packet is shown in FIG. 10. In a process of forwarding the first packet, a network node between the ingress node and the first network node processes the first packet, for example, executes SL--, executes CL--, and updates a destination address of the first packet, so that the first packet forwarded to the first network node is shown in FIG. 27. In another example, the ingress node encapsulates a USRH and an IPv6 header o the original packet to obtain the first packet. A structure of the first packet is shown in FIG. 17 or FIG. 18. In a process of forwarding the first packet, a network node between the ingress node and the first network node processes the first packet, for example, executes SL--, or updates a destination address of the first packet, so that the first packet forwarded to the first network node is shown in FIG. 28 or FIG. 29.

S602: Based on the first outbound interface of the first network node being faulty or the second network node being faulty, the first network node determines a second segment identifier based on planning information Y, where the second segment identifier is a segment identifier in the segment list of the first packet or the second segment identifier is a segment identifier in the destination address field of the first packet, and the planning information Y is segment identifier planning information of the node corresponding to the first segment identifier.

The first network node determines the first outbound interface of the first network node and/or the second network node by searching a table based on the destination address of the first packet received by the first network node. The first network node determines, based on various fault sensing technologies, whether the first outbound interface and/or the second network node are/is faulty. After the first network node determines that the first outbound interface or the second network node is faulty, based on the case in which the first outbound interface is faulty or the second network node is faulty, the first network node determines the second segment identifier based on the planning information Y. The second segment identifier is the segment identifier in the segment list of the first packet or the second segment identifier is the segment identifier in the destination address field of the first packet. The second segment identifier is located after the first segment identifier. For example, the second segment identifier is a next segment identifier of the first segment identifier.

In an embodiment, the first segment identifier corresponds to the first outbound interface of the first network node, and that the first network node determines the first outbound interface of the first network node and/or the second network node by searching the table based on the destination address of the first packet includes: The first network node searches my local segment identifier table (my local SID table) of the first network node based on the destination address of the first packet, and determines that the first segment identifier in the destination address field of the first packet hits the local segment identifier table (for example, information including block information and the first segment identifier in the destination address field hits the local segment identifier table); and the first network node determines, based on a segment endpoint behavior indicated by the first segment identifier, that the first segment identifier indicates the first outbound interface of the first network node. For example, the first network node determines that the first segment identifier is the END.X SID indicating the first outbound interface of the first network node.

In another embodiment, the first segment identifier corresponds to the second network node, and that the first network node determines the first outbound interface of the first network node and/or the second network node by searching the table based on the destination address of the first packet includes: The first network node searches a routing table of the first network node through longest mask matching based on the destination address of the first packet, the first network node determines that the first segment identifier in the destination address field of the first packet hits a first routing table entry in the routing table (in other words, the destination address of the first packet hits the first routing table entry), and the first network node determines the first outbound interface of the first network node and/or the second network node based on the first routing table entry. The first routing table entry may include a correspondence between the standard segment identifier corresponding to the first segment identifier, indication information of the first outbound interface, and indication information of the second network node. The first routing table entry is generated by the first network node based on first routing information advertised by the second network node and an interface (namely, the first outbound interface) for receiving the first routing information by the first network node. The first routing information is locator (locator) routing information or block (block) routing information. Correspondingly, the first routing table entry is a locator routing table entry or a block routing table entry. That the first segment identifier in the destination address field of the first packet hits the first routing table entry includes any one of the following: When the first segment identifier is a compressed segment identifier with a length of 32 bits, locator information including block information and a node identifier in the first segment identifier in the destination address field hits the first routing table entry; when the first segment identifier is a compressed segment identifier with a length of 16 bits and the first segment identifier is a node identifier, locator information including block information and the first segment identifier in the destination address field hits the first routing table entry; or when the first segment identifier is a compressed segment identifier with a length of 16 bits and the first segment identifier is a compress function identifier, information including block information and the first segment identifier in the destination address field hits the first routing table entry.

In this embodiment of this application, the planning information Y is the segment identifier planning information of the node corresponding to the first segment identifier, and the planning information Y is planning information of a standard segment identifier in a compression scenario. When the first segment identifier corresponds to the first outbound interface of the first network node, the node corresponding to the first segment identifier is the first network node, and the planning information Y is segment identifier planning information of the first network node. When the first segment identifier corresponds to the second network node, the node corresponding to the first segment identifier is the second network node, and the planning information Y is segment identifier planning information of the second network node. Optionally, the planning information Y includes at least one of the following: a length of a block field, a length of a node identifier field, a length of a compress function field, a length of an uncompress function field, a length of an arguments field, and a node identifier range. For example, the length of the block field is 48 bits, the length of the node identifier field is 16 bits, the length of the compress function field is 16 bits, the length of the uncompress function field is 24 bits, the length of the arguments field is 24 bits, and the node identifier range is a GIB or a subset of the GIB. When the planning information Y includes the node identifier range, and the second segment identifier includes a node identifier, the node identifier included in the second segment identifier may be in the node identifier range.

In this embodiment of this application, the second segment identifier is a compressed segment identifier or a standard segment identifier, the standard segment identifier has a length of 128 bits, and the compressed segment identifier has a length less than 128 bits. In an embodiment, the second segment identifier is a standard segment identifier, the second segment identifier is a segment identifier in the segment list of the first packet, the segment list further includes the first segment identifier, the first segment identifier and the second segment identifier are sequentially arranged in the segment list, and the second segment identifier is arranged after the first segment identifier. In another embodiment, the second segment identifier is a compressed segment identifier, and the second segment identifier is a segment identifier in the segment list of the first packet or the second segment identifier is a segment identifier in the destination address field of the first packet. When the second segment identifier is the segment identifier in the segment list of the first packet, the segment list may further include the first segment identifier, the first segment identifier and the second segment identifier are sequentially arranged in the segment list, and the second segment identifier is arranged after the first segment identifier. When the second segment identifier is the segment identifier in the destination address field of the first packet, the first segment identifier and the second segment identifier are sequentially arranged in the destination address field, and the second segment identifier is arranged after the first segment identifier.

In this embodiment of this application, the second segment identifier corresponds to an outbound interface or a network node. For example, the second segment identifier is an END.X SID representing an interface or an END SID representing a node. When the second segment identifier corresponds to the outbound interface, the outbound interface corresponding to the second segment identifier is located downstream of the first network node. When the second segment identifier corresponds to the network node, the network node corresponding to the second segment identifier is located downstream of the first network node. In an embodiment, the first segment identifier corresponds to the first outbound interface of the first network node, and the second segment identifier corresponds to any one of the following: the second network node, an outbound interface of the second network node, a next-hop node of the second network node, an outbound interface of the next-hop node of the second network node, a downstream network node of the next-hop node of the second network node, or an outbound interface of the downstream network node of the next-hop node of the second network node. In another embodiment, the first segment identifier corresponds to the second network node, and the second segment identifier corresponds to any one of the following: a next-hop node of the second network node, an outbound interface of the next-hop node of the second network node, a downstream network node of the next-hop node of the second network node, or an outbound interface of the downstream network node of the next-hop node of the second network node.

In an optional embodiment, based on the case in which the first outbound interface of the first network node is faulty or the second network node is faulty, the first network node determines that the first segment identifier in the destination address field of the first packet is the compressed segment identifier (in other words, the first network node determines that a type of the first segment identifier is the compressed segment identifier), and based on the first segment identifier being the compressed segment identifier, the first network node determines the second segment identifier based on the planning information Y. Based on a different object (the first outbound interface of the first network node or the second network node) corresponding to the first segment identifier, implementations in which the first network node determines that the first segment identifier is the compressed segment identifier are different. The following describes, by using two embodiments, the implementations in which the first network node determines that the first segment identifier is the compressed segment identifier.

**First embodiment:** The first segment identifier corresponds to the first outbound interface of the first network node, and the first segment identifier is a segment identifier advertised by the first network node. In an embodiment, a compressed segment identifier and an uncompressed segment identifier that are advertised by the first network node carry different flavors (flavors). After the first network node determines that the first segment identifier in the destination address field of the first packet hits the local segment identifier table of the first network node, the first network node determines, based on a flavor carried in the first segment identifier, that the first segment identifier is the compressed segment identifier. In another embodiment, a standard segment identifier supporting compression and a standard segment identifier not supporting compression that are advertised by the first network node carry different flavors, the first segment identifier in the destination address field of the first packet is obtained by a head node by compressing a first standard segment identifier supporting compression that is advertised by the first network node, and the first segment identifier and the first standard segment identifier carry a same flavor. After the first network node determines that the first segment identifier in the destination address field of the first packet hits the local segment identifier table of the first network node, the first network node determines, based on the flavor carried in the first segment identifier, that the first segment identifier is the compressed segment identifier. Optionally, the first network node determines whether the first segment identifier carries a COC flavor, and based on the first segment identifier carrying the COC flavor, the first network node determines that the first segment identifier is the compressed segment identifier.

Second embodiment: The first segment identifier corresponds to the second network node, the planning information Y is the segment identifier planning information of the second network node, and the first network node determines, based on the planning information Y, that the first segment identifier in the destination address field of the first packet is the compressed segment identifier.

Optionally, the first routing information advertised by the second network node includes the planning information Y, the first routing table entry generated by the first network node based on the first routing information includes the planning information Y, and after the first network node determines that the first segment identifier in the destination address field of the first packet hits the first routing table entry, the first network node determines the planning information Y based on the first routing table entry, and then the first network node determines, based on the planning information Y, that the first segment identifier is the compressed segment identifier (in other words, the first network node determines that the type of the first segment identifier is the compressed segment identifier). For example, the first routing table entry includes a correspondence between the standard segment identifier corresponding to the first segment identifier and the planning information Y, and the first network node determines the planning information Y based on the correspondence.

Optionally, the first network node determines the compress function field in the destination address field of the first packet based on the planning information Y, and the first network node determines, based on a value of the compress function field, that the first segment identifier is the compressed segment identifier. For example, the first network node determines that the value of the compress function field is a non-null value, and the first network node determines, based on the value of the compress function field being the non-null value, that the first segment identifier is the compressed segment identifier. In this embodiment of this application, an example in which the value of the compress function field is the non-null value is used for description. In another embodiment, the first segment identifier is the standard segment identifier (namely, the uncompressed segment identifier), the value of the compress function field is a null value, the first network node determines, based on the value of the compress function field being the null value, that the first segment identifier is the uncompressed segment identifier. The null value may be 0, and the non-null value may be not 0.

Optionally, the planning information Y includes the length of the block field, the length of the node identifier field, and the length of the compress function field. In a standard segment identifier supporting compression, the block field, the node identifier field, and the compress function field are sequentially adjacent. The destination address field of the first packet includes the block field, the first segment identifier in the destination address field may include the node identifier field, and the block field and the node identifier field in the destination address field form a locator field. In a process of searching the routing table of the first network node through longest mask matching based on the destination address of the first packet, the first network node determines that locator information carried in the locator field in the destination address field of the first packet matches the first routing table entry in the routing table, and the first network node determines the compress function field in the destination address field based on a length and a position of the locator field and the length of the compress function field, where the length of the locator field is equal to a sum of the length of the block field and the length of the node identifier field. For example, the length of the locator field is 64 bits, and the planning information Y indicates that the length of the compress function field is 16 bits. The first network node determines that 16 bits after 64 bits (namely, the locator field) that match the first routing table entry of the first network node and that are in the destination address field of the first packet is the compress function field. The first network node determines that a value of the compress function field is not 0, to determine that the first segment identifier is the compressed segment identifier. In this embodiment, the length of the first segment identifier may be 32 bits, and the segment list of the first packet is encoded by using a compressed segment identifier with a length of 32 bits, or the segment list of the first packet is hybrid encoded by using a compressed segment identifier with a length of 32 bits and a standard segment identifier with a length of 128 bits. In an example, the first segment identifier is a GSID with a length of 32 bits, and the segment list of the first packet is encoded by using a GSID with a length of 32 bits (the corresponding first packet may be shown in FIG. 27), or the segment list of the first packet is hybrid encoded by using a GSID with a length of 32 bits and a GSID with a length of 128 bits. In another example, the first segment identifier is a USID with a length of 32 bits, and the segment list of the first packet is encoded by using a USID with a length of 32 bits (the corresponding first packet may be shown in FIG. 29), or the segment list of the first packet is hybrid encoded by using a USID with a length of 32 bits and a standard SID with a length of 128 bits.

In this embodiment of this application, the first packet includes the SL field, and the value of the SL field is the SL pointer. When the segment list of the first packet is encoded by using the GSID, the first packet further includes the CL field, and the value of the CL field is the CL pointer. The first network node may determine the second segment identifier by updating the value of the SL field in the first packet, or the first network node may determine the second segment identifier by updating the value of the CL field in the first packet. Alternatively, the first network node may determine the second segment identifier by traversing the destination address field of the first packet. Alternatively, the first network node may determine the second segment identifier by updating a value of the target field in the first packet, where the target field is located in the destination address field of the first packet, the target field is located after the block field in the destination address field, and the target field may be adjacent to the block field. Therefore, that the first network node determines the second segment identifier based on the planning information Y includes any one of the following four cases.

**First case:** The first network node updates the value of the SL field in the first packet, and the first network node determines the second segment identifier based on an updated value of the SL field.

The segment list of the first packet includes multiple containers, each container is used to carry one standard segment identifier or carry at least one compressed segment identifier, the value of the SL field in the first packet is the SL pointer, the SL pointer indicates an active container in the segment list, the multiple containers include a first container, the first container carries the first segment identifier, and the active container currently indicated by the SL pointer is the first container. The first network node determines, based on the planning information Y, whether the first segment identifier is a last segment identifier in the first container. If the first segment identifier is the last segment identifier in the first container, the first network node updates the value of the SL field (for example, executes SL--) to offset the SL pointer, and the first network node determines the second segment identifier based on an updated value of the SL field.

In an embodiment, the segment list of the first packet is encoded by using a GSID, and the first segment identifier carries a first COC flavor to indicate that a next segment identifier of the first segment identifier is a compressed segment identifier with a length of 32 bits. The first network node updates the value of the SL field in the first packet to offset the SL pointer to a next container of the first container (for example, the next container of the first container is referred to as a second container), the first network node initializes the value of the CL field in the first packet to 3, the first network node determines, based on the CL pointer carried in the CL field, that a compressed segment identifier that is at least significant bits of the second container and with a length of 32 bits is the second segment identifier, and the first network node updates the second segment identifier to the target field in the destination address field of the first packet. For example, the first network node replaces the first segment identifier in the target field with the second segment identifier. The target field is located in the destination address field of the first packet, and the target field is located after the block field in the destination address field. For example, the target field is adjacent to the block field. In this embodiment, the length of the target field is 32 bits.

In another embodiment, the segment list of the first packet is encoded by using a GSID, and the first segment identifier carries a second COC flavor to indicate that a next segment identifier of the first segment identifier is a compressed segment identifier with a length of 16 bits. The first network node updates the value of the SL field in the first packet to offset the SL pointer to a next container of the first container (for example, the second container), and the first network node performs a first traversal operation on the second container, to determine the second segment identifier in the second container. That the first network node performs the first traversal operation on the second container includes: The first network node initializes the value of the CL field in the first packet to 7, and the first network node continuously updates the value of the CL field (for example, continuously executes CL--), to traverse content in the second container 16 bits at a time; each time traversing 16-bit content, the first network node determines whether the 16-bit content is in the node identifier range included in the planning information Y; if the 16-bit content is in the node identifier range, the first network node stops traversing, and the first network node determines that the 16-bit content is the second segment identifier; or if the 16-bit content is not in the node identifier range, the first network node continues traversing until determining that specific 16-bit content in the second container is in the node identifier range, and the first network node determines that the 16-bit content is the second segment identifier. If the first network node does not determine, in the second container, 16-bit content that is in the node identifier range, the first network node updates the value of the SL field again, to offset the SL pointer to a next container of the second container (for example, the next container of the second container is referred to as a third container), and the first network node performs the first traversal operation on the third container, to determine the second segment identifier in the third container. If the first network node does not determine, in the third container, 16-bit content that is in the node identifier range, the first network node continues to update the value of the SL field to offset the SL pointer to a next container of the third container (for example, the next container of the third container is referred to as a fourth container), and the first network node performs the first traversal operation on the fourth container, to determine the second segment identifier in the fourth container. This process is repeated until the first network node determines that specific 16-bit content is in the node identifier range, or until the first network node traverses all containers that are in the segment list of the first packet and that are located after the first container. After the first network node determines the second segment identifier, the first network node updates the second segment identifier to the target field in the destination address field of the first packet. For example, the first network node replaces the first segment identifier in the target field with the second segment identifier. The target field is located after the block field in the destination address field. For example, the target field is adjacent to the block field. In this embodiment, the length of the target field is 16 bits. It should be noted that, in a process in which the first network node traverses the content in the second container 16 bits at a time, two pieces of 16-bit content that are obtained through any two adjacent traversals are adjacent and do not overlap. For example, in a 1^{st} traversal process, the first network node traverses a 1^{st} piece of 16-bit content in the second container, and in a second traversal process, the first network node traverses a 2^{nd} piece of 16-bit content in the second container, where the 2^{nd} piece of 16-bit content and the 1^{st} piece of 16-bit content are adjacent and do not overlap. For a process in which the first network node performs the first traversal operation on each container that is located after the second container, for example, the third container and the fourth container, refer to the process in which the first network node performs the first traversal operation on the second container. Details are not described herein again.

In still another embodiment, the segment list of the first packet is encoded by using a GSID, and the first segment identifier carries no COC flavor. Based on the first segment identifier carrying no COC flavor, the first network node determines that a next segment identifier of the first segment identifier is a standard segment identifier, and the first network node updates the value of the SL field in the first packet to offset the SL pointer to a next container of the first container (for example, the next container of the first container is referred to as a second container). The first network node determines that entire content in the second container is the second segment identifier, and the first network node updates the entire content in the second container to the destination address field of the first packet. For example, the first network node replaces the content in the destination address field with the entire content in the second container.

In yet another embodiment, the segment list of the first packet is encoded by using a USID with a length of 32 bits, or is hybrid encoded by using a USID with a length of 32 bits and a standard segment identifier. The first network node updates the value of the SL field in the first packet to offset the SL pointer to a next container of the first container (for example, the next container of the first container is referred to as a second container). The first network node updates entire content in the second container to the destination address field of the first packet. For example, the first network node replaces content in the destination address field with the entire content in the second container. When the second container carries the standard segment identifier, the standard segment identifier is the second segment identifier. When the second container includes a block field and at least one 32-bit USID, a 1^{st} 32-bit USID after the block field is the second segment identifier.

In yet another embodiment, the segment list of the first packet is encoded by using a 16-bit USID, or is hybrid encoded by using a 16-bit USID and a 32-bit USID. The first network node updates the value of the SL field in the first packet to offset the SL pointer to a next container (for example, a second container) of the first container, and the first network node performs a second traversal operation on the second container, to determine the second segment identifier in the second container. That the first network node performs the second traversal operation on the second container includes: The first network node traverses, starting from an end position of a block field in the second container, content in the second container 16 bits at a time; each time traversing 16-bit content, the first network node determines whether the 16-bit content is in the node identifier range included in the planning information Y; if the 16-bit content is in the node identifier range, the first network node stops traversing, and the first network node determines that the 16-bit content is the second segment identifier; or if the 16-bit content is not in the node identifier range, the first network node continues traversing until determining that specific 16-bit content in the second container is in the node identifier range, and the first network node determines that the 16-bit content is the second segment identifier. If the first network node does not determine, in the second container, 16-bit content that is in the node identifier range, the first network node updates the value of the SL field again, to offset the SL pointer to a next container of the second container (for example, a third container), and the first network node performs the second traversal operation on the third container, to determine the second segment identifier in the third container. If the first network node does not determine, in the third container, 16-bit content that is in the node identifier range, the first network node continues to update the value of the SL field to offset the SL pointer to a next container of the third container (for example, a fourth container), and the first network node performs the second traversal operation on the fourth container, to determine the second segment identifier in the fourth container. This process is repeated until the first network node determines that specific 16-bit content is in the node identifier range, or until the first network node traverses all containers that are in the segment list of the first packet and that are located after the first container. After the first network node determines the second segment identifier, the first network node updates entire content in a container in which the second segment identifier is located to the destination address field of the first packet, and the first network node offsets updated content between the block field and the second segment identifier in the destination address field, and offsets the second segment identifier to the target field in the destination address field. The target field is located after the block field in the destination address field. For example, the target field is adjacent to the block field. In this embodiment, the length of the target field is 16 bits. It should be noted that, in a process in which the first network node traverses the content in the second container 16 bits at a time, two pieces of 16-bit content that are obtained through any two traversals are adjacent and do not overlap. For a process in which the first network node performs the second traversal operation on each container that is located after the second container, for example, the third container and the fourth container, refer to the process in which the first network node performs the second traversal operation on the second container. Details are not described herein again.

In an optional embodiment, the first segment identifier in the destination address field of the first packet is located in the target field in the destination address field. The first network node determines, based on the planning information Y, a field that is in the destination address field and that is located after the target field. The first network node determines, based on a value of the field that is in the destination address field and that is located after the target field, whether the first segment identifier is the last segment identifier in the first container. In an embodiment, the first segment identifier is a GSID, and at least two least significant bits in the destination address field of the first packet are the CL field. The first network node determines, depending on whether the value of the CL field is a null-value, whether the first segment identifier is the last segment identifier in the first container. If the value of the CL field is the null-value, the first network node determines that the first segment identifier is the last segment identifier in the first container. If the value of the CL field is not the null-value, the first network node determines that the first segment identifier is not the last segment identifier in the first container. In another embodiment, the first segment identifier is a GSID or a USID. The first network node determines, depending on whether values of all fields that are in the destination address field of the first packet and that are after the first segment identifier are null-values, whether the first segment identifier is the last segment identifier in the first container. If the values of all the fields that are in the destination address field and that are after the first segment identifier are the null-values, the first network node determines that the first segment identifier is the last segment identifier in the first container. If the values of the field that are in the destination address field and that are after the first segment identifier are not the null-values, the first network node determines that the first segment identifier is not the last segment identifier in the first container.

In an optional embodiment, the first network node determines, based on the planning information Y, a field that is in the destination address field of the first packet and that is located after the compress function field, and the first network node determines, based on a value of the field that is in the destination address field and that is located after the compress function field, whether the first segment identifier is the last segment identifier in the first container. For example, if values of all fields that are in the destination address field and that are after the compress function field are null-values, the first network node determines that the first segment identifier is the last segment identifier in the first container; or if values of fields that are in the destination address field and that are after the compress function field are not null, the first network node determines that the first segment identifier is not the last segment identifier in the first container.

**Second** case: The first network node updates the value of the CL field in the first packet, and the first network node determines the second segment identifier based on an updated value of the CL field.

The first packet includes a segment list, an SL field, and a CL field. The segment list includes multiple containers. Each container is used to carry one standard segment identifier or carry at least one compressed segment identifier. A value of the SL field is an SL pointer, and the SL pointer indicates an active container in the segment list. A value of the CL field is a CL pointer, and the CL pointer indicates an active compressed segment identifier in the active container. The multiple containers include a first container, where the first container carries the first segment identifier, the active container currently indicated by the SL pointer is the first container, and the active compressed segment identifier currently indicated by the CL pointer is the first segment identifier in the first container. The first network node determines, based on the planning information Y, whether the first segment identifier is a last segment identifier in the first container. If the first segment identifier is the last segment identifier in the first container, the first network node updates the value of the CL field to offset the CL pointer, and the first network node determines the second segment identifier based on an updated value of the CL field.

In an embodiment, the segment list of the first packet is encoded by using a GSID, and the first segment identifier carries a first COC flavor to indicate that a next segment identifier of the first segment identifier is a compressed segment identifier with a length of 32 bits. The first network node updates the value of the CL field in the first packet (for example, executes CL--) to offset the CL pointer to a next segment identifier of the first segment identifier in the first container. The first network node determines that the next segment identifier is the second segment identifier, and the first network node updates the second segment identifier to the target field in the destination address field of the first packet. For example, the first network node replaces the first segment identifier in the target field with the second segment identifier. The target field is located after the block field in the destination address field. For example, the target field is adjacent to the block field. In this embodiment, the next segment identifier has a length of 32 bits, and the target field has a length of 32 bits.

In another embodiment, the segment list of the first packet is encoded by using a GSID, and the first segment identifier carries a second COC flavor to indicate that a next segment identifier of the first segment identifier is a compressed segment identifier with a length of 16 bits. The first network node continuously updates the value of the CL field in the first packet (for example, continuously executes CL--), to traverse, 16 bits at a time, content that is in the first container and that is after the first segment identifier; each time traversing 16-bit content, the first network node determines whether the 16-bit content is in the node identifier range included in the planning information Y; if the 16-bit content is in the node identifier range, the first network node stops traversing, and the first network node determines that the 16-bit content is the second segment identifier; or if the 16-bit content is not in the node identifier range, the first network node continues traversing until determining, in the first container, that specific 16-bit content is in the node identifier range, and the first network node determines that the 16-bit content is the second segment identifier. If the first network node does not determine, in the first container, 16-bit content that is in the node identifier range, the first network node updates the value of the SL field in the first packet (for example, executes SL--), to offset the SL pointer to a next container of the first container (for example, a second container), and the first network node performs a first traversal operation on the second container, to determine the second segment identifier in the second container. If the first network node does not determine, in the second container, 16-bit content that is in the node identifier range, the first network node updates the value of the SL field again, to offset the SL pointer to a next container of the second container (for example, a third container), and the first network node performs the first traversal operation on the third container, to determine the second segment identifier in the third container. This process is repeated until the first network node determines that specific 16-bit content is in the node identifier range, or until the first network node traverses all containers that are in the segment list of the first packet and that are located after the first container. After the first network node determines the second segment identifier, the first network node updates the second segment identifier to the target field in the destination address field of the first packet. For example, the first network node replaces the first segment identifier in the target field with the second segment identifier. The target field is located after the block field in the destination address field. For example, the target field is adjacent to the block field. In this embodiment, the target field has a length of 16 bits. In this embodiment, for a process in which the first network node performs the first traversal operation on the second container, the third container, and the like, refer to the process in which the first network node performs the first traversal operation on the second container in the first case. Details are not described herein again.

**Third case:** The first network node traverses the destination address field of the first packet to determine the second segment identifier.

The destination address field of the first packet may include multiple segment identifiers, and the multiple segment identifiers include a compressed segment identifier with a length of 16 bits. For example, the multiple segment identifiers are all USIDs each with a length of 16 bits, or the multiple segment identifiers include a USID with a length of 16 bits and a USID with a length of 32 bits. The multiple segment identifiers include the first segment identifier, the first segment identifier is located in the target field in the destination address field, the target field is located after the block field in the destination address field, and the target field may be adjacent to the block field. The first network node may traverse, 16 bits at a time, content that is in the destination address field and that is after the first segment identifier; each time traversing 16-bit content, the first network node determines whether the 16-bit content is in the node identifier range included in the planning information Y; if the 16-bit content is in the node identifier range, the first network node stops traversing, and the first network node determines that the 16-bit content is the second segment identifier; or if the 16-bit content is not in the node identifier range, the first network node continues traversing until determining that specific 16-bit content in the destination address field is in the node identifier range, and the first network node determines that the 16-bit content is the second segment identifier. If the first network node determines the second segment identifier in the destination address field, the first network node offsets content between the block field and the second segment identifier in the destination address field, and offsets the second segment identifier to the target field in the destination address field. Optionally, the first packet includes a segment list and an SL field, the segment list includes multiple containers, each container is used to carry one standard segment identifier or carry at least one compressed segment identifier, a value of the SL field is an SL pointer, the SL pointer indicates an active container in the segment list, the multiple containers include a first container, the first container carries the first segment identifier, the active container currently indicated by the SL pointer is the first container, and current content in the destination address field of the first packet is content in the first container. If the first network node does not determine 16-bit content in the node identifier range (in other words, the first network node does not determine the second segment identifier) after traversing the destination address field, the first network node updates a value of the SL field (for example, executes SL--) to offset the SL pointer to a next container of the first container (for example, a second container), the first network node performs a second traversal operation on the second container, to determine the second segment identifier in the second container. If the first network node does not determine, in the second container, 16-bit content that is in the node identifier range, the first network node updates the value of the SL field again, to offset the SL pointer to a next container of the second container (for example, a third container), and the first network node performs the second traversal operation on the third container, to determine the second segment identifier in the third container. This process is repeated until the first network node determines that specific 16-bit content is in the node identifier range, or until the first network node traverses all containers that are in the segment list of the first packet and that are located after the first container. After the first network node determines the second segment identifier in a container that is after the first container, the first network node updates entire content in the container in which the second segment identifier is located to the destination address field of the first packet, and the first network node offsets updated content between the block field and the second segment identifier in the destination address field, and offsets the second segment identifier to the target field in the destination address field. In this embodiment, the target field may have a length of 16 bits.

**Fourth case:** The first network node updates the value of the target field in the first packet to determine the second segment identifier, where the target field is included in the destination address field, and the target field is located after the block field in the destination address field.

The destination address field of the first packet may include multiple segment identifiers. All the multiple segment identifiers are USIDs each with a length of 32 bits. The multiple segment identifiers include the first segment identifier, the first segment identifier is located in the target field in the destination address field, the target field is located after the block field in the destination address field, and the target field may be adjacent to the block field. The first network node offsets content that is located after the block field and that is in the destination address field to the left by 32 bits, and offset content in the target field is the second segment identifier. In this embodiment, the target field may have a length of 32 bits.

S603: The first network node forwards the first packet based on the second segment identifier.

In S602, the first network node may update the destination address of the first packet, where an updated destination address field of the first packet includes the second segment identifier, and the second segment identifier may be located after the block field in the destination address field. The first packet in S603 is the first packet whose destination address is updated, and the destination address field of the first packet includes the second segment identifier. Optionally, the first network node searches the routing table of the first network node through longest mask matching based on the destination address of the first packet, the first network node determines that the destination address hits a second routing table entry in the routing table, the first network node determines a second outbound interface of the first network node and a third network node based on the second routing table entry, and the first network node forwards the first packet to the third network node through the second outbound interface. The second routing table entry includes a correspondence between the second segment identifier in the destination address, indication information (for example, an interface number) of the second outbound interface, and indication information of the third network node.

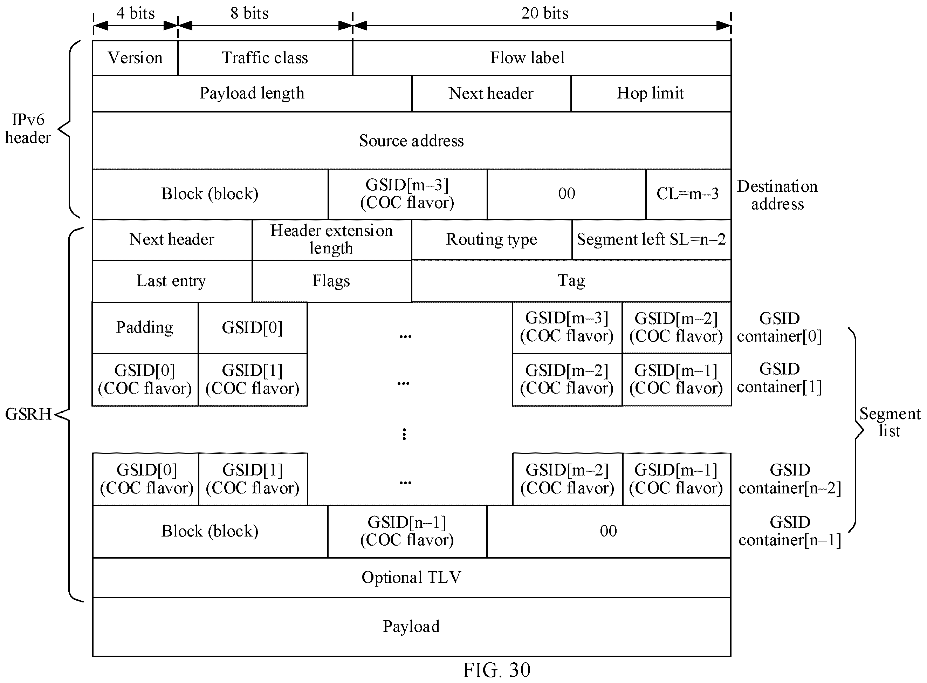

In an example, the first packet received by the first network node is shown in FIG. 27, and a first packet obtained by updating the destination address by the first network node is shown in FIG. 30. After the destination address is updated, the destination address field of the first packet includes a block field, a target field, and an arguments field, the block field is located at most significant bits in the destination address field, the target field is located after the block field and adjacent to the block field, the arguments field is located at least significant bits in the destination address field, least significant bits of the arguments field are a CL field, GSID[m-3] is located in the target field, and GSID[m-3] is the second segment identifier. A value of the SL field in the first packet is n-2, a value of the CL field is m-3, and a CL pointer carried in the CL field indicates GSID[m-3] in GSID container[n-2] (in other words, GSID[m-3] in GSID container[n-2] is a current active GSID). The first network node searches the routing table of the first network node through longest mask matching based on the destination address of the first packet (in this case, the destination address includes block+GSID[m-3]), and determines that the destination address hits the second routing table entry in the routing table (for example, block+GSID[m-3] hits the second routing table entry), the first network node determines the second outbound interface of the first network node and the third network node based on the second routing table entry, and the first network node sends the first packet shown in FIG. 30 to the third network node through the second outbound interface.

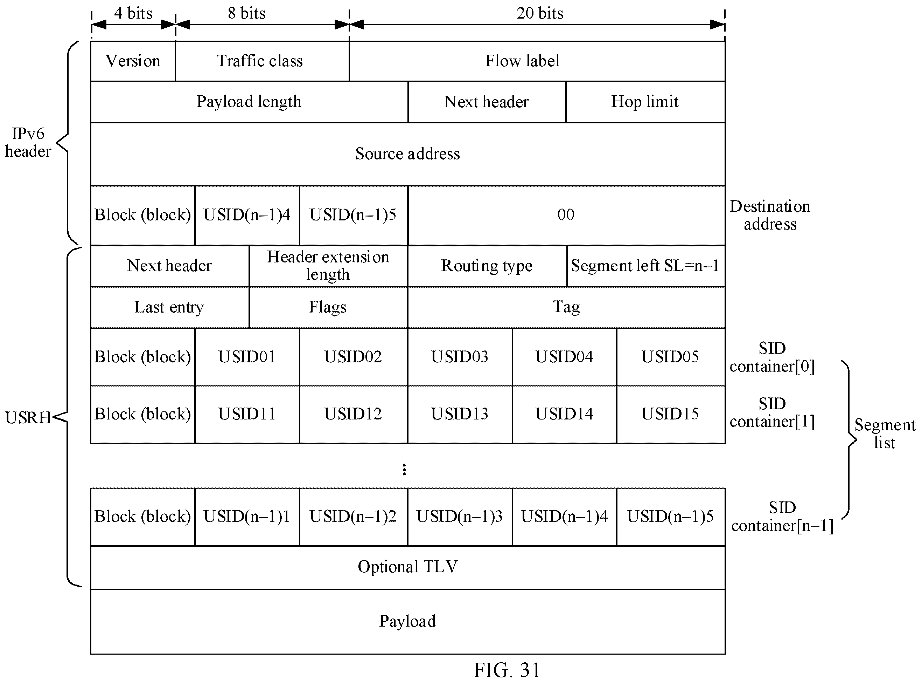

In another example, the first packet received by the first network node is shown in FIG. 28, and a first packet obtained by updating the destination address by the first network node is shown in FIG. 31. After the destination address is updated, the destination address field of the first packet includes a block field and a target field, the block field is located at most significant bits in the destination address field, the target field is located after the block field and adjacent to the block field, the destination address field carries block information, USID(n-1)4, and USID(n-1)5, USID(n-1)4 is located in the target field, and USID(n-1)4 is the second segment identifier. The block information in the block field, USID(n-1)4, and USID(n-1)5 are respectively block information in SID container[n-1] indicated by the SL pointer in the first packet, USID(n-1)4, and USID(n-1)5. The first network node searches the routing table of the first network node through longest mask matching based on the destination address of the first packet (in this case, the destination address includes block+USID(n-1)4+USID(n-1)5), and determines that the destination address hits the second routing table entry in the routing table (for example, block+USID(n-1)4 hits the second routing table entry), the first network node determines the second outbound interface of the first network node and the third network node based on the second routing table entry, and the first network node sends the first packet shown in FIG. 31 to the third network node through the second outbound interface.

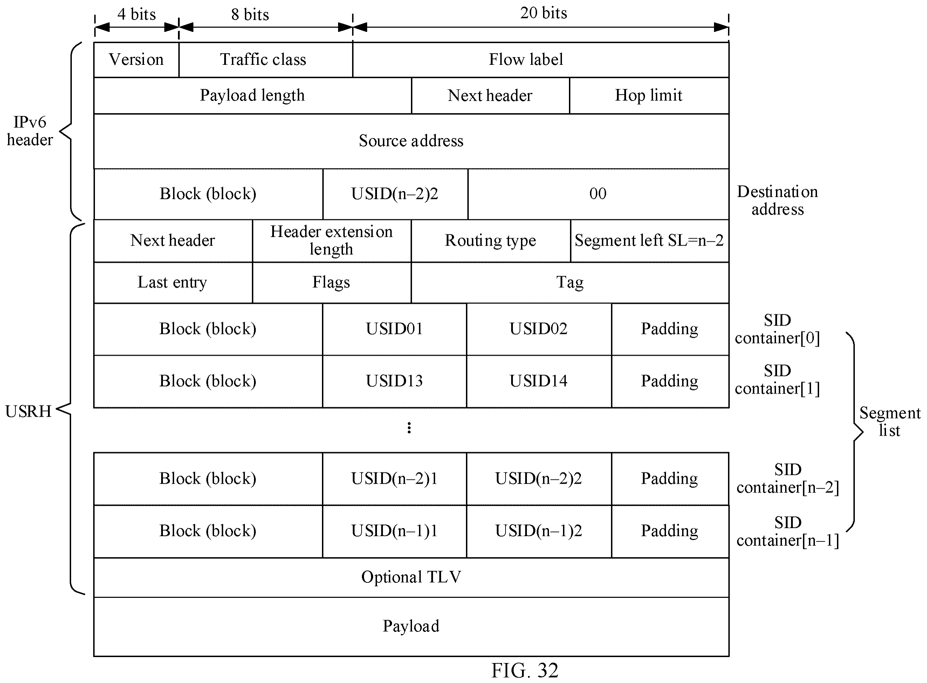

In still another example, the first packet received by the first network node is shown in FIG. 29, and a first packet obtained by updating the destination address by the first network node is shown in FIG. 32. After the destination address is updated, the destination address field of the first packet includes a block field and a target field, the block field is located at most significant bits in the destination address field, the target field is located after the block field and adjacent to the block field, the destination address field carries block information and USID(n-2)2, USID(n-2)2 is located in the target field, and USID(n-2)2 is the second segment identifier. The block information in the block field and USID(n-2)2 are respectively block information in SID container[n-2] indicated by the SL pointer in the first packet and USID(n-2)2. The first network node searches the routing table of the first network node through longest mask matching based on the destination address of the first packet (in this case, the destination address includes block+USID(n-2)2), and determines that the destination address hits the second routing table entry in the routing table (for example, block+USID(n-2)2 hits the second routing table entry), the first network node determines the second outbound interface of the first network node and the third network node based on the second routing table entry, and the first network node sends the first packet shown in FIG. 32 to the third network node through the second outbound interface.

In conclusion, according to the packet forwarding method provided in this embodiment of this application, the destination address field of the first packet received by the first network node includes the first segment identifier, the first segment identifier is the compressed segment identifier, and the first segment identifier corresponds to the first outbound interface of the first network node or the next-hop node of the first network node. When the first outbound interface is faulty or the next-hop node is faulty, the first network node determines the second segment identifier in the segment list of the first packet or determines the second segment identifier in the destination address field of the first packet based on the segment identifier planning information of the node corresponding to the first segment identifier (for example, the first network node determines the next segment identifier of the first segment identifier based on the segment identifier planning information of the node corresponding to the first segment identifier), and the first network node forwards the first packet based on the second segment identifier. Therefore, embodiments of this application provide a packet forwarding solution applied to a compressed segment identifier scenario. When a first segment identifier in a destination address field of a first packet corresponds to a first outbound interface of a first network node and the first outbound interface is faulty, the first network node determines a next segment identifier based on segment identifier planning information of the first network node, and forwards the first packet based on the next segment identifier, so that the first packet is forwarded by bypassing the faulty interface. When the first segment identifier in the destination address field of the first packet corresponds to a next-hop node of the first network node and the next-hop node is faulty, the first network node determines a next segment identifier based on segment identifier planning information of the next-hop node, and forwards the first packet based on the next segment identifier, so that the first packet is forwarded by bypassing the faulty node. According to the packet forwarding method provided in this embodiment of this application, in a compressed segment identifier scenario, endpoint fault protection can be implemented, for example, SRv6 endpoint fault protection can be implemented.

In embodiments of this application, the first segment identifier may be a segment identifier corresponding to the first outbound interface of the first network node, or may be a segment identifier corresponding to the second network node. The following describes the packet forwarding method provided in embodiments of this application with reference to an interaction process between the first network node and the second network node by using an example in which the first segment identifier is the segment identifier corresponding to the second network node.

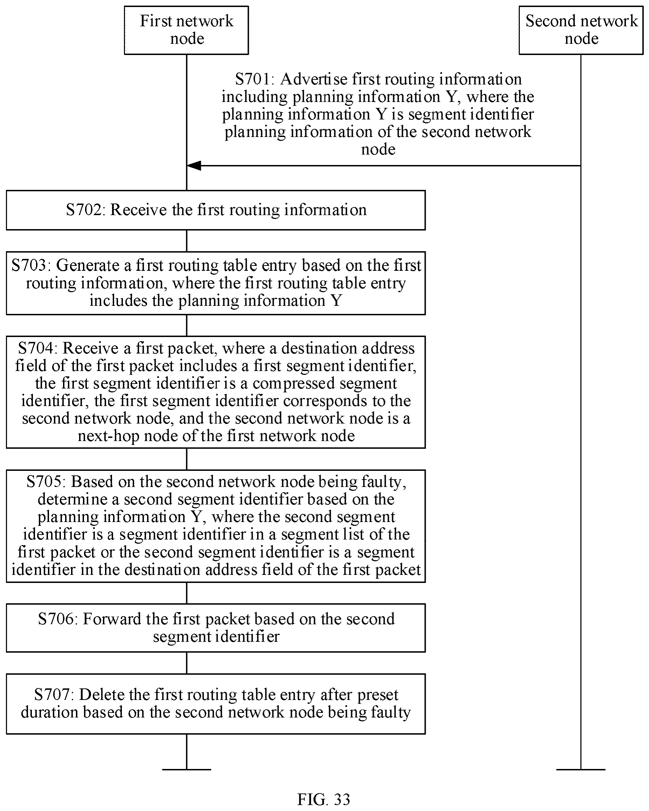

FIG. 33 is a flowchart of another packet forwarding method according to an embodiment of this application. The packet forwarding method is applied to a packet forwarding system including a first network node and a second network node. Both the first network node and the second network node are network nodes on a first forwarding path in a segment routing network, the second network node is a next-hop node of the first network node on the first forwarding path, and the first forwarding path is a forwarding path (for example, an active forwarding path) of the first packet. The segment routing network is an SR network, an SRv6 network, an SR-MPLS network, or another segment routing network. For example, the segment routing network is the SRv6 network 1 in FIG. 23, the first forwarding path is the forwarding path S1, the first network node is P1, and the second network node is P3. As shown in FIG. 33, the method includes step S701 to step S707.

S701: The second network node advertises first routing information including planning information Y, where the planning information Y is segment identifier planning information of the second network node.

In this embodiment, the planning information Y is planning information of a standard segment identifier of the second network node in a compression scenario. The planning information Y includes at least one of the following: a length of a block field, a length of a node identifier field, a length of a compress function field, a length of an uncompress function field, a length of an arguments field, and a node identifier range. In an example, the planning information Y includes the node identifier range. In another example, the planning information Y includes the length of the compress function field. In still another example, the planning information Y includes the length of the compress function field and the length of the uncompress function field. Optionally, the planning information Y alternatively optionally includes at least one of the following: the length of the block field, the length of the node identifier field, and the length of the arguments field. For example, the length of the block field is 48 bits, the length of the node identifier field is 16 bits, the length of the compress function field is 16 bits, the length of the uncompress function field is 24 bits, the length of the arguments field is 24 bits, and the node identifier range is a GIB or a subset of the GIB.

Optionally, the first routing information includes the planning information Y and a segment identifier (for example, a standard segment identifier corresponding to a first segment identifier), the first routing information is carried in a target TLV field including a first sub-TLV field and a second sub-TLV field, the first sub-TLV field and the second sub-TLV field may be sub-TLV fields of a same level of the target TLV, the first sub-TLV field is used to carry the planning information Y, and the second sub-TLV field is used to carry the segment identifier. The first routing information may be locator routing information or block routing information, where the locator routing information includes block information and a node identifier, and the block routing information includes block information but does not include a node identifier. In this embodiment of this application, an example in which the first routing information is locator routing information or block routing information is used for description. In another embodiment, the first routing information may be other routing information. This is not limited in this application.

In this embodiment of this application, the second network node may advertise the first routing information according to various possible routing protocols. The routing protocols include but are not limited to an interior gateway protocol (interior gateway protocol, IGP), an intermediate system to intermediate system (intermediate system to intermediate system, ISIS) protocol, an open shortest path first (open shortest path first, OSPF) protocol, and the like. For example, the second network node advertises a control plane packet, where the control plane packet is an IGP packet, an ISIS packet, or an OSPF packet, and the control plane packet includes the target TLV field.

S702: The first network node receives the first routing information advertised by the second network node.

The first network node may receive, through a first outbound interface, the first routing information advertised by the second network node. For example, the first network node receives, through the first outbound interface, the control plane packet advertised by the second network node, where the control plane packet is an IGP packet, an ISIS packet, or an OSPF packet, the control plane packet includes a target TLV, and the first routing information is carried in the target TLV.

S703: The first network node generates a first routing table entry based on the first routing information, where the first routing table entry includes the planning information Y.

Optionally, the first routing information carries the standard segment identifier corresponding to the first segment identifier and the planning information Y, and the first routing table entry includes a correspondence between the standard segment identifier corresponding to the first segment identifier and the planning information Y.

Optionally, the first network node generates the first routing table entry based on an interface (namely, the first outbound interface) for receiving the first routing information by the first network node and the first routing information. The first routing table entry further includes a correspondence between the standard segment identifier corresponding to the first segment identifier, indication information (for example, an interface number) of the first outbound interface, and indication information of the second network node.

S704: The first network node receives the first packet, where a destination address field of the first packet includes the first segment identifier, the first segment identifier is a compressed segment identifier, the first segment identifier corresponds to the second network node, and the second network node is a next-hop node of the first network node.

For an implementation process of S704, refer to the implementation process of S601. Details are not described herein again.

S705: Based on the second network node being faulty, the first network node determines a second segment identifier based on the planning information Y, where the second segment identifier is a segment identifier in a segment list of the first packet or the second segment identifier is a segment identifier in the destination address field of the first packet.

In an optional embodiment, the first network node searches a routing table of the first network node through longest mask matching based on a destination address of the first packet, the first network node determines that the first segment identifier in the destination address field of the first packet hits the first routing table entry in the routing table (in other words, the destination address of the first packet hits the first routing table entry), and the first network node determines the second network node based on the first routing table entry. The first routing table entry is generated by the first network node based on the first routing information advertised by the second network node, and the first routing information is locator routing information or block routing information. Correspondingly, the first routing table entry is a locator routing table entry or a block routing table entry. That the first segment identifier in the destination address field of the first packet hits the first routing table entry includes any one of the following: When the first segment identifier is a compressed segment identifier with a length of 32 bits, locator information including block information and a node identifier in the first segment identifier in the destination address field hits the first routing table entry; when the first segment identifier is a compressed segment identifier with a length of 16 bits and the first segment identifier is a node identifier, locator information including block information and the first segment identifier in the destination address field hits the first routing table entry; or when the first segment identifier is a compressed segment identifier with a length of 16 bits and the first segment identifier is a compress function identifier, information including block information and the first segment identifier in the destination address field hits the first routing table entry.

The first network node may determine, based on various fault sensing technologies, whether the second network node is faulty, and after determining that the second network node is faulty, the first network node performs a proxy forwarding operation. Optionally, a process in which the first network node performs the proxy forwarding operation includes: The first network node determines the planning information Y based on the first routing table entry; the first network node determines, based on the planning information Y, that the first segment identifier is the compressed segment identifier; and based on the first segment identifier being the compressed segment identifier, the first network node determines the second segment identifier based on the planning information Y. For an implementation process in which the first network node determines, based on the planning information Y, that the first segment identifier is the compressed segment identifier, refer to the second embodiment in S602. For an implementation process in which the first network node determines the second segment identifier based on the planning information Y, refer to the four cases in S602. For other detailed descriptions in S705, refer to related descriptions of the second network node corresponding to the first segment identifier in S602. Details are not described herein again.

S706: The first network node forwards the first packet based on the second segment identifier.

For an implementation process of S706, refer to the implementation process of S603. Details are not described herein again.

S707: The first network node deletes the first routing table entry after preset duration based on the second network node being faulty.

The first network node deletes the first routing table entry after the preset duration after determining that the second network node is faulty. The preset duration may be set based on an actual situation. The behavior of deleting the first routing table entry by the first network node after the preset duration may be referred to as a slow deletion behavior, in other words, the first network node slowly deletes the first routing table entry based on the second network node being faulty.

In this embodiment of this application, after the first network node determines that the second network node is faulty, the first network node needs to perform the proxy forwarding operation. In a process of performing the proxy forwarding operation, the first network node needs to determine the second segment identifier based on the planning information Y in the first routing table entry. If the first network node immediately deletes the first routing table entry after determining that the second network node is faulty, the first network node cannot determine the second segment identifier, and therefore cannot perform the proxy forwarding operation. Therefore, in this embodiment of this application, after determining that the second network node is faulty, the first network node does not immediately delete the first routing table entry, but deletes the first routing table entry after the preset duration, so that after the second network node is faulty and before route convergence, the first network node determines the second segment identifier by using the planning information Y in the first routing table entry, to perform the proxy forwarding operation.

In conclusion, according to the packet forwarding method provided in this embodiment of this application, the destination address field of the first packet received by the first network node includes the first segment identifier, the first segment identifier is the compressed segment identifier, and the first segment identifier corresponds to the next-hop node of the first network node. When the next-hop node is faulty, the first network node determines the second segment identifier in the segment list of the first packet or determines the second segment identifier in the destination address field of the first packet based on the segment identifier planning information of the node corresponding to the first segment identifier (for example, the first network node determines a next segment identifier of the first segment identifier based on the segment identifier planning information of the node corresponding to the first segment identifier), and the first network node forwards the first packet based on the second segment identifier. Therefore, embodiments of this application provide a packet forwarding solution applied to a compressed segment identifier scenario. When a first segment identifier in a destination address field of a first packet corresponds to a next-hop node of a first network node and the next-hop node is faulty, the first network node determines a next segment identifier based on segment identifier planning information of the next-hop node, and forwards the first packet based on the next segment identifier, so that the first packet is forwarded by bypassing the faulty node, and endpoint fault protection is implemented, for example, SRv6 endpoint fault protection is implemented, in the compressed segment identifier scenario.

In the foregoing embodiment, an example in which the first segment identifier is the compressed segment identifier is used for description. In another embodiment, the first segment identifier is a standard segment identifier (namely, an uncompressed segment identifier). The first network node determines, based on a value of the compress function field in the destination address field of the first packet, that the first compressed segment identifier is the standard segment identifier. The first network node updates a value of an SL field in the first packet. The first network node determines the second segment identifier based on an updated value of the SL field. In this embodiment, for an implementation process in which the first network node determines the second segment identifier, refer to the first case in S602. Details are not described herein again.

With reference to the application scenario shown in FIG. 23, the following describes, by using four examples, the packet forwarding method provided in embodiments of this application.

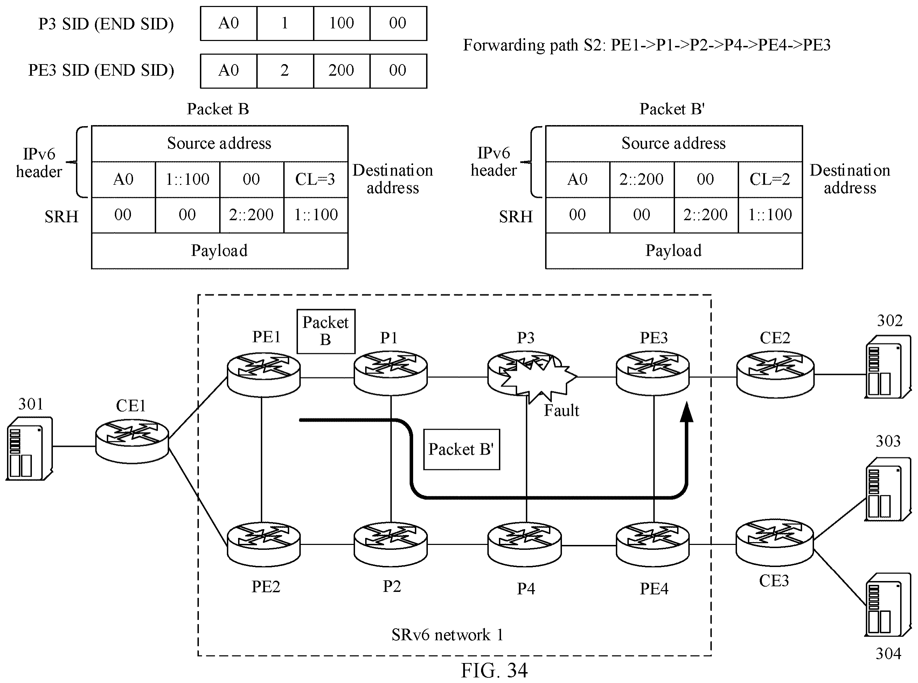

First example: FIG. 34 is a diagram of a packet forwarding method according to an embodiment of this application. In FIG. 34, an example in which a segment list is encoded by using a 32-bit GSID is used for description. As shown in FIG. 34, a standard segment identifier of P3 is A0:1::100, and a compressed 32-bit segment identifier corresponding to the standard segment identifier "A0:1::100" is 1::100; and a standard segment identifier of PE3 is A0:2::200, and a compressed 32-bit segment identifier corresponding to the standard segment identifier "A0:2::200" is 2::200.

When advertising routing information to the SRv6 network 1, each network node in the SRv6 network 1 includes segment identifier planning information of the network node in the routing information, and each network node in the SRv6 network 1 generates, based on the routing information advertised by another network node in the SRv6 network 1, a routing table entry that can reach the another network node, and stores the segment identifier planning information of the another network node in the routing table entry. For example, when advertising routing information X1, P3 includes segment identifier planning information Y1 of P3 in the routing information X1. After receiving the routing information X1, P1 generates a routing table entry Z1 based on the routing information X1. The routing table entry Z1 includes the planning information Y1, and the planning information Y1 includes at least one of the following: a length of a block field, a length of a node identifier field, a length of a compress function field, a length of an uncompress function field, a length of an arguments field, and a node identifier range.

As shown in FIG. 34, PE1 is to send a packet B to PE3, and PE1 specifies that the packet B needs to pass through P3. The packet B generated by PE1 includes a payload, an SRH, and an IPv6 header. A segment list in the SRH includes a first container. The first container carries a compressed segment identifier "1::100" of P3 and a compressed segment identifier "2::200" of PE3. The compressed segment identifier "1::100" and the compressed segment identifier "2::200" are arranged in the first container in an order from a least significant bit to a most significant bit, and 64 least significant bits in the first container are padded with 0s. The IPv6 header includes a destination address field, the destination address field is used to carry a destination address of the packet B, and the destination address of the packet B generated by PE1 is "A0:1::100". The destination address field includes the block field, a target field, and the arguments field. The block field is 48 most significant bits in the destination address field, the target field is 32 bits that are located after the block field and adjacent to the block field, the arguments field is 24 least significant bits in the destination address field, two least significant bits in the arguments field are a CL field, the block field carries block information "A0", the target field carries a compressed segment identifier "1::100", a value of the CL field is 3, an CL pointer carried in the CL field indicates a 1^{st} compressed segment identifier "1::100" in the first container, and other bits in the destination address field are all 0.

After PE1 generates the packet B, PE1 searches a routing table of PE1 through longest mask matching based on the destination address "A0:1::100" of the packet B, and PE1 forwards the packet B to P1 based on a search result. After P1 receives the packet B, P1 searches a routing table of P1 through longest mask matching based on the destination address "A0:1::100" of the packet B, and determines that the destination address "A0:1::100" of the packet B hits the routing table entry Z1 in the routing table of P1. P1 determines, based on the routing table entry Z1, that a next-hop node of P1 is P3. If P1 senses that P3 is faulty, the destination address "A0:1::100" of the packet B is a segment identifier of P3 (P1 is a previous-hop node of the destination address "A0:1::100" of the packet B), and the value of the CL field in the packet B is greater than 0, P1 performs a proxy forwarding operation to replace P3 in to processing the packet B. Specifically, P1 determines the segment identifier planning information Y1 of P3 based on the routing table entry Z1, and P1 determines, based on the planning information Y1, that "1::100" in the destination address "A0:1::100" of the packet B is the compressed segment identifier, and determines that the compressed segment identifier "1::100" is not a last segment identifier in the first container. Therefore, P1 executes CL-- to offset the CL pointer to a next segment identifier "2::200" of the compressed segment identifier "1::100" in the first container. P1 updates the compressed segment identifier "2::200" to the target field in the destination address field of the packet B to obtain a packet B'. P1 searches the routing table of P1 through longest mask matching based on the destination address "A0:2::200" of the packet B', and determines that a next-hop node of P1 is P2. P1 forwards the packet B' to P2. After receiving the packet B', P2 searches a routing table of P2 through longest mask matching based on the destination address "A0:2::200" of the packet B', and determines that a next-hop node of P2 is P4. P2 forwards the packet B' to P4. After receiving the packet B', P4 searches a routing table of P4 through longest mask matching based on the destination address "A0:2::200" of the packet B', and determines that a next-hop node of P4 is PE4. P4 forwards the packet B' to PE4. After receiving the packet B', PE4 searches a routing table of PE4 through longest mask matching based on the destination address "A0:2::200" of the packet B', and determines that a next-hop node of PE4 is PE3. PE4 forwards the packet B' to PE3. Finally, the packet B (including the packet B') is forwarded to PE3 along a forwarding path S2 by bypassing the faulty P3.

A process in which P1 determines, based on the planning information Y1, that "1::100" in the destination address "A0:1::100" of the packet B is the compressed segment identifier includes: When P1 searches the routing table of P1 through longest mask matching based on the destination address "A0:1::100" of the packet B, and determines "A0:1::/64" in the destination address "A0:1::100" of the packet B. ("A0:1::/64" represents 64 most significant bits in "A0:1::100") hits the routing table entry Z1 of P1; P1 determines, based on the planning information Y1 in the routing table entry Z1, that a length of a compress function field in the segment identifier planning of P3 is 16 bits, and P1 determines that 16 bits that are located after "A0:1::/64" and adjacent to "A0:1::/64" and that are in the destination address "A0:1::100" of the packet B are the compress function field in the destination address field of the packet B; and P1 determines whether a value of the compress function field is 0; if the value of the compress function field is not 0, P1 determines that the destination address of the packet B is the compressed segment identifier; or if the value of the compress function field is 0, P1 determines that the destination address of the packet B is the standard segment identifier. In this embodiment, the value of the compress function field is not 0, and P1 determines that "1::100" in the destination address of the packet B is the compressed segment identifier.

A process in which P1 determines, based on the planning information Y1, that the compressed segment identifier "1::100" is not the last segment identifier in the first container includes: P1 determines whether the value of the CL field in the destination address field of the packet B is 0; and if the value of the CL field is 0, P1 determines that the compressed segment identifier "1::100" is the last segment identifier in the first container; or if the value of the CL field is not 0, P1 determines that the compressed segment identifier "1::100" is not the last segment identifier in the first container. In this embodiment, the value of the CL field is not 0. Therefore, P1 determines that the compressed segment identifier "1::100" is not the last segment identifier in the first container.

In this embodiment, an example in which "1::100" in the destination address "A0:1::100" of the packet B is the compressed segment identifier, and the compressed segment identifier "1::100" is not the last segment identifier in the first container is used for description. In some embodiments, the destination address of the packet B is the standard segment identifier, and the segment list of the packet B includes multiple containers. P1 executes SL-- to offset an SL pointer to a next container of a first container, and P1 updates the destination address of the packet B based on the next container, and then forwards the packet B. In some other embodiments, "1::100" in the destination address "A0:1::100" of the packet B is the compressed segment identifier, the compressed segment identifier "1::100" is a last segment identifier in the first container, and the segment list of the packet B includes multiple containers. P1 executes SL-- to offset an SL pointer to a next container of the first container, and P1 updates the destination address of the packet B based on the next container, and then forwards the packet B.

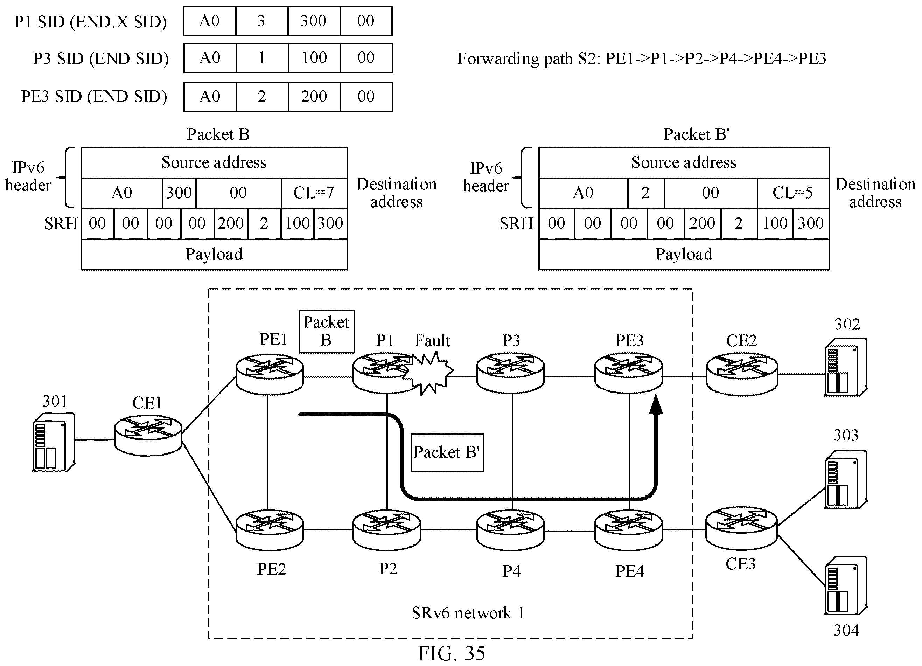

Second example: FIG. 35 is a diagram of another packet forwarding method according to an embodiment of this application. In FIG. 35, an example in which a segment list is hybrid encoded by using a GSID with a length of 16 bits and a GSID with a length of 32 bits is used for description. As shown in FIG. 35, a first outbound interface of P1 corresponds to P3, a standard segment identifier of the first outbound interface of P1 is A0:3::300, and a 16-bit compressed segment identifier corresponding to the standard segment identifier "A0:3::300" is 300. A standard segment identifier of P3 is A0:1::100, and a 16-bit compressed segment identifier corresponding to the standard segment identifier "A0:1::100" is 100. A standard segment identifier of PE3 is A0:2::200, and a 32-bit compressed segment identifier corresponding to the standard segment identifier "A0:2::200" is 2::200. A local segment identifier table of each network node in the SRv6 network 1 stores segment identifier planning information of the network node. For example, a local segment identifier table of P1 stores segment identifier planning information Y2 of P1, and the planning information Y2 includes at least one of the following: a length of a block field, a length of a node identifier field, a length of a compress function field, a length of an uncompress function field, a length of an arguments field, and a node identifier range.

As shown in FIG. 35, PE1 is to send a packet B to PE3, and PE1 specifies that the packet B needs to pass through the first outbound interface of P1 and P3. The packet B generated by PE1 includes a payload, an SRH, and an IPv6 header. A segment list in the SRH includes a first container. The first container carries the compressed segment identifier "300" of the first outbound interface of P1, the compressed segment identifier "100" of P3, and the compressed segment identifier "2::200" of PE3. The compressed segment identifier "300", the compressed segment identifier "100", and the compressed segment identifier "2::200" are arranged in the first container in an order from a least significant bit to a most significant bit, and 64 least significant bits in the first container are padded with 0s. The IPv6 header includes a destination address field, the destination address field is used to carry a destination address of the packet B, and the destination address of the packet B generated by PE1 is "A0:300". The destination address field includes a block field, a target field, and an arguments field. The block field is 48 most significant bits in the destination address field, the target field is 16 bits that are located after the block field and adjacent to the block field, the arguments field is 24 least significant bits in the destination address field, three least significant bits in the arguments field are a CL field, the block field carries block information "A0", the target field carries the compressed segment identifier "300", a value of the CL field is 7, an CL pointer carried in the CL field indicates a 1^{st} compressed segment identifier "300" in the first container, and other bits in the destination address field are all 0.

After PE1 generates the packet B, PE1 searches a routing table of PE1 through longest mask matching based on the destination address " A0:300" of the packet B, and PE1 forwards the packet B to P1 based on a search result. After P1 receives the packet B, P1 searches the local segment identifier table of P1 based on the destination address "A0:300" of the packet B, P1 determines that the destination address "A0:300" hits the local segment identifier table (for example, "A0:300/64" in the destination address "A0:300" hits the local segment identifier table, and "A0:300/64" is 64 most significant bits in "A0:300"), and P1 determines, based on the local segment identifier table, that the destination address "A0:300" indicates the first outbound interface of P1. P1 senses that the first outbound interface is faulty, and P1 determines a next segment identifier based on the planning information Y2 stored in the local segment identifier table of P1. Specifically, P1 determines, based on a flavor carried in the destination address "A0:300", that "300" in the destination address "A0:300" is the compressed segment identifier, and P1 continuously executes CL-- to traverse, 16 bits at a time, content that is in the first container and that is after the compressed segment identifier "300"; each time traversing 16-bit content, P1 determines whether the 16-bit content is in the node identifier range included in the planning information Y2; if the 16-bit content is in the node identifier range, P1 stops traversing, P1 determines that the 16-bit content is the next segment identifier, and P1 updates the 16-bit content to the target field in the destination address field of the packet B; or if the 16-bit content is not in the node identifier range, P1 continues traversing until determining, in the first container, that specific 16-bit content is in the node identifier range, and P1 updates the 16-bit content to the target field in the destination address field of the packet B. In this embodiment of this application, an example in which 16-bit content "2" in the first container is in the node identifier range is used for description. P1 updates the 16-bit content "2" to the target field in the destination address field of the packet B to obtain a packet B'. P1 searches a routing table of P1 through longest mask matching based on a destination address "A0:2" of the packet B', and determines that a next-hop node of P1 is P2, and P1 forwards the packet B' to P2. After receiving the packet B', P2 searches a routing table of P2 through longest mask matching based on the destination address "A0:2" of the packet B', and determines that a next-hop node of P2 is P4. P2 forwards the packet B' to P4. After receiving the packet B', P4 searches a routing table of P4 through longest mask matching based on the destination address "A0:2" of the packet B', and determines that a next-hop node of P4 is PE4. P4 forwards the packet B' to PE4. After receiving the packet B', PE4 searches a routing table of PE4 through longest mask matching based on the destination address "A0:2" of the packet B', and determines that a next-hop node of PE4 is PE3. PE4 forwards the packet B' to PE3. Finally, the packet B (including the packet B') is forwarded to PE3 along a forwarding path S2 by bypassing the faulty interface of P1.

In this embodiment, an example in which P1 determines, in the first container, 16-bit content in the node identifier range is used for example. In some embodiments, the segment list of the packet B includes multiple containers. If P1 does not determine, in the first container, 16-bit content in the node identifier range, P1 executes SL-- to offset an SL pointer to a next container (for example, a second container) of the first container, and P1 initializes CL to 7. Then, P1 continuously executes CL-- to traverse, 16 bits at a time, content in the second container, so as to determine, in the second container, 16-bit content in the node identifier range. If P1 does not determine, in the second container, 16-bit content in the node identifier range, P1 executes SL-- to offset the SL pointer to a next container (for example, a third container) of the second container, and P1 initializes CL to 7. Then, P1 continuously executes CLto traverse content in the third container 16 bits at a time, so as to determine, in the third container, 16-bit content in the node identifier range. This process is repeated until P1 determines that specific 16-bit content is in the node identifier range, or until P1 traverses all containers in the segment list.

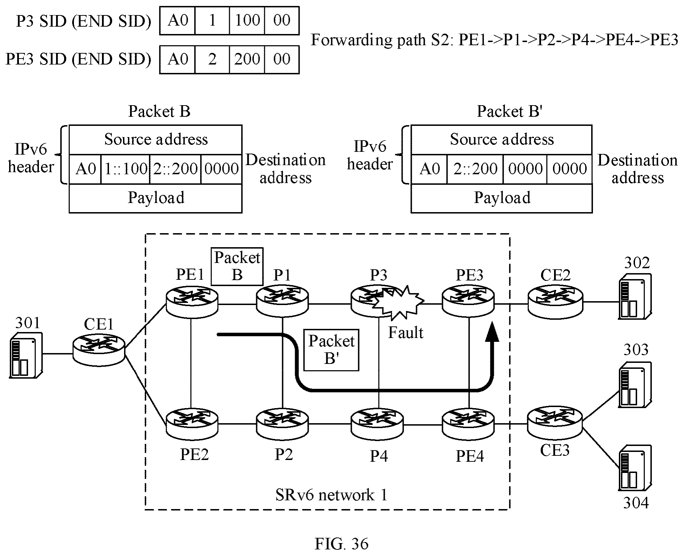

Third example: FIG. 36 is a diagram of still another packet forwarding method according to an embodiment of this application. In FIG. 36, an example in which encoding is performed by using a 32-bit USID is used for description. As shown in FIG. 36, a standard segment identifier of P3 is A0:1::100, and a compressed 32-bit segment identifier corresponding to the standard segment identifier "A0:1::100" is 1::100; and a standard segment identifier of PE3 is A0:2::200, and a compressed 32-bit segment identifier corresponding to the standard segment identifier "A0:2::200" is 2::200. When advertising routing information X1, P3 includes segment identifier planning information Y1 of P3 in the routing information X1. P1 generates a routing table entry Z1 based on the routing information X1. The routing table entry Z1 includes the planning information Y1, and the planning information Y1 includes at least one of the following: a length of a block field, a length of a node identifier field, a length of a compress function field, a length of an uncompress function field, a length of an arguments field, and a node identifier range.

As shown in FIG. 36, PE1 is to send a packet B to PE3, and PE1 specifies that the packet B needs to pass through P3. The packet B generated by PE1 includes a payload and an IPv6 header, the IPv6 header includes a destination address field, the destination address field is used to carry a destination address of the packet B, and the destination address of the packet B generated by PE1 includes "A0:1::100". The destination address field includes a block field and a target field, the block field is most 48 significant bits in the destination address field, the target field is 32 bits that are located after the block field and adjacent to the block field, the block field carries block information "A0", and the target field carries the compressed segment identifier "1::100". 32 bits after the target field carry the compressed segment identifier "2::200", and other bits are all 0.

After PE1 generates the packet B, PE1 searches a routing table of PE1 through longest mask matching based on the destination address of the packet B. PE1 forwards the packet B to P1 based on a search result. After P1 receives the packet B, P1 searches a routing table of P1 through longest mask matching based on the destination address of the packet B, and determines that the destination address of the packet B hits the routing table entry Z1 in the routing table of P1 (for example, "A0:1::/64" in the destination address hits the routing table entry Z1 in the routing table of P1, and "A0:1::/64" indicates 64 most significant bits in the destination address). P1 determines, based on the routing table entry Z1, that a next-hop node of P1 is P3. P1 senses that P3 is faulty, and the destination address of the packet B is a segment identifier of P3. Therefore, P1 performs a proxy forwarding operation to replace P3 in processing the packet B. Specifically, P1 determines the segment identifier planning information Y1 of P3 based on the routing table entry Z1. P1 determines, based on the planning information Y1, that "1::100" in the destination address field of the packet B is the compressed segment identifier, and determines that the compressed segment identifier "1::100" is not a last segment identifier in the destination address field. Therefore, P1 offsets content that is after the block information "A0" and that is in the destination address field to the left by 32 bits, to obtain a packet B'. P1 searches the routing table of P1 through longest mask matching based on a destination address A0:2::200 of the packet B', and determines that a next-hop node of P1 is P2. P1 forwards the packet B' to P2. After P2 receives the packet B', P2 searches a routing table of P2 through longest mask matching based on the destination address "A0:2::200" of the packet B', and determines that a next-hop node of P2 is P4. P2 forwards the packet B' to P4. After receiving the packet B', P4 searches a routing table of P4 through longest mask matching based on the destination address "A0:2::200" of the packet B', and determines that a next-hop node of P4 is PE4. P4 forwards the packet B'to PE4. After receiving the packet B', PE4 searches a routing table of PE4 through longest mask matching based on the destination address "A0:2::200" of the packet B', and determines that a next-hop node of PE4 is PE3. PE4 forwards the packet B' to PE3. Finally, the packet B (including the packet B') is forwarded to PE3 along a forwarding path S2 by bypassing the faulty P3.

In this embodiment, for an implementation process in which P1 determines, based on the planning information Y1, that "1::100" in the destination address of the packet B is the compressed segment identifier, refer to the implementation process in which P1 determines, based on the planning information Y1, that "1::100" in the destination address of the packet B is the compressed segment identifier in the first example. In this embodiment, a process in which P1 determines, based on the planning information Y1, that the compressed segment identifier "1::100" is not the last segment identifier in the destination address of the packet B includes: P1 determines whether a value of a field that is after "1::100" and that is in the destination address field of the packet B is 0; and if the value of the field that is after "1::100" and that is in the destination address field of the packet B is 0, P1 determines that the compressed segment identifier "1::100" is the last segment identifier in the destination address field of the packet B; or if the value of the field that is after "1::100" and that is in the destination address field is not 0, P1 determines that the compressed segment identifier "1::100" is not the last segment identifier in the destination address field of the packet B. In this embodiment, the value of the field that is after the compressed segment identifier "1::100" and that is in the destination address field of the packet B is not 0. Therefore, P1 determines that the compressed segment identifier "1::100" is not the last segment identifier in the destination address field of the packet B.

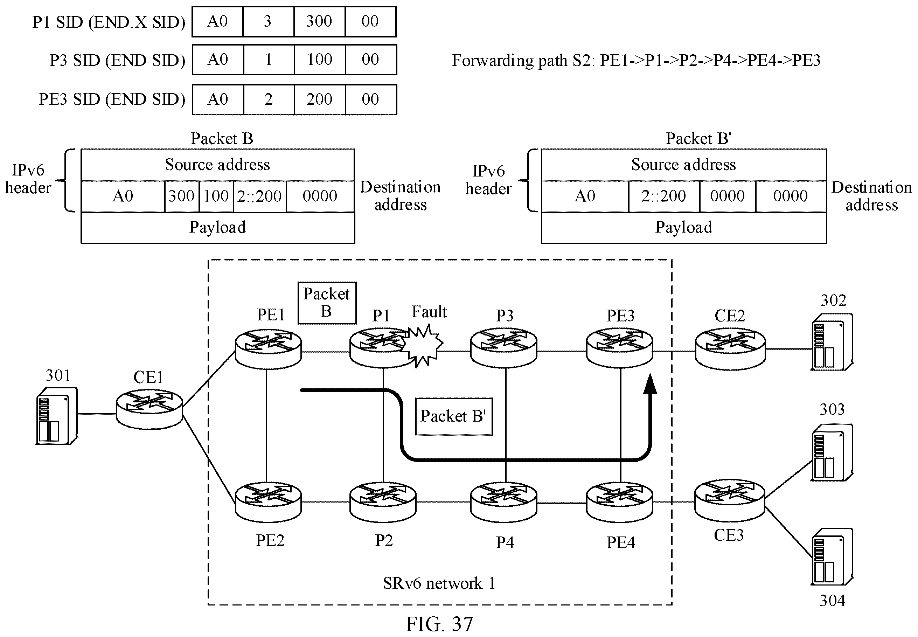

Fourth example: FIG. 37 is a diagram of yet another packet forwarding method according to an embodiment of this application. In FIG. 37, an example in which a segment list is hybrid encoded by using a 16-bit USID and a 32-bit USID is used for description. As shown in FIG. 37, a first outbound interface of P1 corresponds to P3, a standard segment identifier of the first outbound interface of P1 is A0:3::300, and a compressed 16-bit segment identifier corresponding to the standard segment identifier "A0:3::300" is 300. A standard segment identifier of P3 is A0:1::100, and a compressed 16-bit segment identifier corresponding to the standard segment identifier "A0:1::100" is 100. A standard segment identifier of PE3 is A0:2::200, and a compressed 32-bit segment identifier corresponding to the standard segment identifier "A0:2::200" is 2::200. A local segment identifier table of each network node in the SRv6 network 1 stores segment identifier planning information of the network node. For example, a local segment identifier table of P1 stores segment identifier planning information Y2 of P1, and the planning information Y2 includes at least one of the following: a length of a block field, a length of a node identifier field, a length of a compress function field, a length of an uncompress function field, a length of an arguments field, and a node identifier range.

As shown in FIG. 37, PE1 is to send a packet B to PE3, and PE1 specifies that the packet B needs to pass through the first outbound interface of P1 and P3. The packet B generated by PE1 includes a payload and an IPv6 header. The IPv6 header includes a destination address field, the destination address field is used to carry a destination address of the packet B, and the destination address of the packet B generated by PE1 includes "A0:300". The destination address field includes a block field and a target field, the block field is 48 most significant bits in the destination address field, the target field is 16 bits that are located after the block field and adjacent to the block field, the block field carries block information "A0", and the target field carries the compressed segment identifier "300". Fields after the target field sequentially carry a compressed segment identifier "100" with a length of 16 bits and a compressed segment identifier "2::200" with a length of 32 bits.

After PE1 generates the packet B, PE1 searches a routing table of PE1 through longest mask matching based on the destination address of the packet B. PE1 forwards the packet B to P1 based on a search result. After P1 receives the packet B, P1 searches the local segment identifier table of P1 based on the destination address of the packet B, and P1 determines that the destination address hits the local segment identifier table (for example, "A0:300/64" in the destination address hits the local segment identifier table, and "A0:300/64" is 64 most significant bits in the destination address), and P1 determines, based on the local segment identifier table, that "A0:300/64" in the destination address indicates the first outbound interface of P1. P1 senses that the first outbound interface is faulty, and P1 determines a next segment identifier based on the planning information Y2 stored in the local segment identifier table of P1. Specifically, P1 determines, based on a flavor carried in "A0:300/64" in the destination address, that "300" in the destination address is the compressed segment identifier, and P1 traverses, starting from an end position of "A0:300/64" in the destination address, content that is in the destination address field of the packet B and that is after "A0:300/64" 16 bits at a time; each time traversing 16-bit content, P1 determines whether the 16-bit content is in a node identifier range included in the planning information Y2; and if the 16-bit content is in the node identifier range, P1 stops traversing, P1 determines that the 16-bit content is the next segment identifier, and P1 offsets content that is after the block field and that is in the destination address field of the packet B to the left, to offset the 16-bit content to the target field in the destination address field; or if the 16-bit content is not in the node identifier range, P1 continues traversing until determining, in the destination address field of the packet B, that specific 16-bit content is in the node identifier range, and P1 offsets content that is after the block field and that is in the destination address field of the packet B to the left, to offset the 16-bit content to the target field in the destination address field. In this embodiment of this application, an example in which 16-bit content "2" in the destination address field of the packet B is in the node identifier range is used for description. P1 offsets the content that is after the block field and that is in the destination address field of the packet B to the left, to offset the 16-bit content "2" to the target field in the destination address field to obtain a packet B'. P1 searches a routing table of P1 through longest mask matching based on a destination address "A0:2::200" of the packet B', and determines that a next-hop node of P1 is P2. P1 forwards the packet B' to P2. After receiving the packet B', P2 searches a routing table of P2 through longest mask matching based on the destination address "A0:2::200" of the packet B', and determines that a next-hop node of P2 is P4. P2 forwards the packet B' to P4. After receiving the packet B', P4 searches a routing table of P4 through longest mask matching based on the destination address "A0:2::200" of the packet B', and determines that a next-hop node of P4 is PE4. P4 forwards the packet B' to PE4. After receiving the packet B', PE4 searches a routing table of PE4 through longest mask matching based on the destination address "A0:2::200" of the packet B', and determines that a next-hop node of PE4 is PE3. PE4 forwards the packet B' to PE3. Finally, the packet B (including the packet B') is forwarded to PE3 along a forwarding path S2 by bypassing the faulty interface of P1.

In this embodiment, an example in which P1 determines, in the destination address field of the packet B, 16-bit content in the node identifier range is used for description. In some embodiments, the packet B includes an SRH, a segment list in the SRH includes multiple containers, the multiple containers include a first container, and current content in the destination address field of the packet B is content in the first container. If P1 does not determine, in the destination address field of the packet B, 16-bit content in the node identifier range, P1 executes SL-- to offset an SL pointer to a next container (for example, a second container) of the first container, and P1 traverses, starting from an end position of a block field in the second container, content in the second container 16 bits at a time, to determine, in the second container, 16-bit content in the node identifier range. If P1 does not determine, in the second container, the 16-bit content in the node identifier range, P1 executes the SL-- to offset an SL pointer to a next container of the second container (for example, a third container), and P1 traverses, starting from an end position of a block field in the third container, content in the third container 16 bits at a time, to determine, in the third container, 16-bit content in the node identifier range. This process is repeated until P1 determines that specific 16-bit content is in the node identifier range, or until P1 traverses all containers in the segment list. After P1 determines the 16-bit content in the node identifier range, P1 updates entire content in a container in which the 16-bit content is located to the destination address field of the packet B, offsets updated content between the block field and the 16-bit content in the destination address field, and offsets the 16-bit content to the target field in the destination address field.

It should be noted that "updating the destination address field" in the descriptions of the foregoing embodiments is updating a value of the destination address field. Because the value of the destination address field is the destination address, "updating the destination address field" is also updating the destination address. Meanings of "updating the destination address" and "updating the destination address field" in the descriptions of the foregoing embodiments are the same.

The foregoing describes the method embodiments of this application, and the following describes apparatus embodiments of this application. The apparatus in this application may be configured to perform the method in this application. For details that are not disclosed in the apparatus embodiments of this application, refer to the method embodiments.

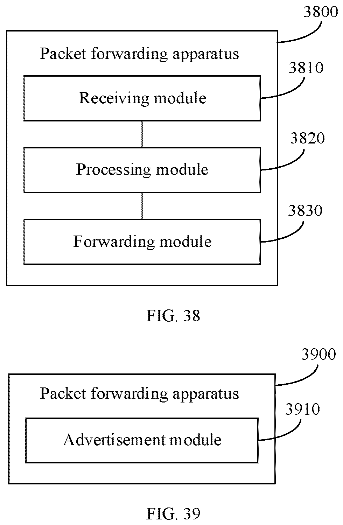

FIG. 38 is a diagram of a packet forwarding apparatus 3800 according to an embodiment of this application. The packet forwarding apparatus 3800 is used in a first network node. For example, the packet forwarding apparatus 3800 is the first network node or a functional component in the first network node. The packet forwarding apparatus 3800 may implement the packet forwarding method provided in the embodiment shown in FIG. 26, or implement the steps performed by the first network node in packet forwarding provided in the embodiment shown in FIG. 33. As shown in FIG. 38, the packet forwarding apparatus 3800 includes a receiving module 3810, a processing module 3820, and a forwarding module 3830.

The receiving module 3810 is configured to receive a first packet, where a destination address field of the first packet includes a first segment identifier, the first segment identifier is a compressed segment identifier, the first segment identifier corresponds to a first outbound interface of the first network node or the first segment identifier corresponds to a second network node, and the second network node is a next-hop node of the first network node. For a function implementation of the receiving module 3810, refer to related descriptions in S601 and S704.

The processing module 3820 is configured to: based on the first outbound interface being faulty or the second network node being faulty, determine a second segment identifier based on planning information, where the second segment identifier is a segment identifier in a segment list of the first packet or the second segment identifier is a segment identifier in the destination address field, and the planning information is segment identifier planning information of the node corresponding to the first segment identifier. For a function implementation of the processing module 3820, refer to related descriptions in S602 and S705.

The forwarding module 3830 is configured to forward the first packet based on the second segment identifier. For a function implementation of the forwarding module 3830, refer to related descriptions in S603 and S706.

Optionally, the planning information includes at least one of the following: a length of a block field, a length of a node identifier field, a length of a compress function field, a length of an uncompress function field, a length of an arguments field, and a node identifier range.

Optionally, the second segment identifier is a compressed segment identifier or a standard segment identifier, the compressed segment identifier has a length less than 128 bits, and the standard segment identifier has a length of 128 bits.

Optionally, the first segment identifier and the second segment identifier are sequentially arranged in the segment list, or the first segment identifier and the second segment identifier are sequentially arranged in the destination address field.

Optionally, an outbound interface or a network node corresponding to the second segment identifier is located downstream of the first network node.

Optionally, when the first segment identifier corresponds to the first outbound interface of the first network node, the node corresponding to the first segment identifier is the first network node; or when the first segment identifier corresponds to the second network node, the node corresponding to the first segment identifier is the second network node.

Optionally, the processing module 3820 is configured to determine, based on the planning information, that the first segment identifier is the compressed segment identifier.

Optionally, the processing module 3820 is configured to: determine the compress function field in the destination address field based on the planning information; and determine, based on a value of the compress function field, that the first segment identifier is the compressed segment identifier.

Optionally, the processing module 3820 is configured to determine, based on the value of the compress function field being a non-null value, that the first segment identifier is the compressed segment identifier.

Optionally, the processing module 3820 is configured to: update a value of a segment left SL field in the first packet, and determine the second segment identifier based on an updated value of the SL field; update a value of a compression left CL field in the first packet, and determine the second segment identifier based on an updated value of the CL field; traverse the destination address field to determine the second segment identifier; or update a value of a target field in the first packet to determine the second segment identifier, where the target field is included in the destination address field, and the target field is located after the block field in the destination address field.

Optionally, the planning information includes a node identifier range, and the processing module 3820 is configured to determine, based on the planning information, that a node identifier included in the second segment identifier is in the node identifier range.

Optionally, the destination address field is located in an IPv6 header of the first packet.

Optionally, the receiving module 3810 is further configured to receive first routing information including the planning information. For a function implementation of the receiving module 3810, refer to related descriptions in S702.

Optionally, the processing module 3820 is further configured to generate a first routing table entry based on the first routing information, where the first routing table entry includes the planning information. For a function implementation of the processing module 3820, refer to related descriptions in S703.

Optionally, the processing module 3820 is further configured to delete the first routing table entry after preset duration based on the second network node being faulty. For a function implementation of the processing module 3820, refer to related descriptions in S707.

Optionally, the first routing information is locator routing information or block routing information.

Optionally, the first routing information is carried in a target TLV field including a first sub-TLV field and a second sub-TLV field, the first sub-TLV field is used to carry the planning information, and the second sub-TLV field is used to carry a segment identifier.

In conclusion, according to the technical solution provided in this embodiment of this application, the destination address field of the first packet received by the first network node includes the first segment identifier, the first segment identifier is the compressed segment identifier, and the first segment identifier corresponds to the first outbound interface of the first network node or the next-hop node of the first network node. When the first outbound interface is faulty or the next-hop node is faulty, the first network node determines the second segment identifier in the segment list of the first packet or determines the second segment identifier (for example, a next segment identifier of the first segment identifier) in the destination address field of the first packet based on the segment identifier planning information of the node corresponding to the first segment identifier, and the first network node forwards the first packet based on the second segment identifier. Therefore, embodiments of this application provide a packet forwarding solution applied to a compressed segment identifier scenario. When a first segment identifier in a destination address field of a first packet corresponds to a first outbound interface of a first network node and the first outbound interface is faulty, the first network node determines a next segment identifier based on segment identifier planning information of the first network node, and forwards the first packet based on the next segment identifier, so that the first packet is forwarded by bypassing the faulty interface. When the first segment identifier in the destination address field of the first packet corresponds to a next-hop node of the first network node and the next-hop node is faulty, the first network node determines a next segment identifier based on segment identifier planning information of the next-hop node, and forwards the first packet based on the next segment identifier, so that the first packet is forwarded by bypassing the faulty node. According to the packet forwarding method provided in this embodiment of this application, in a compressed segment identifier scenario, endpoint fault protection can be implemented, for example, SRv6 endpoint fault protection can be implemented.

FIG. 39 is a diagram of another packet forwarding apparatus 3900 according to an embodiment of this application. The packet forwarding apparatus 3900 is used in a second network node. For example, the packet forwarding apparatus 3900 is the second network node or a functional component in the second network node. The packet forwarding apparatus 3900 may implement the steps performed by the second network node in packet forwarding provided in the embodiment shown in FIG. 33. As shown in FIG. 39, the packet forwarding apparatus 3900 includes an advertisement module 3910.

The advertisement module 3910 is configured to advertise first routing information including planning information, where the planning information is segment identifier planning information of the second network node.

Optionally, the planning information includes a node identifier range.

Optionally, the planning information includes a length of a compress function field.

Optionally, the planning information includes a length of a compress function field and a length of an uncompress function field.

Optionally, the planning information further includes at least one of the following: a length of a block field, a length of a node identifier field, and a length of an arguments field.

Optionally, the first routing information is locator routing information or block routing information.

Optionally, the first routing information is carried in a target TLV field, the target TLV field includes a first sub-TLV field and a second sub-TLV field, the first sub-TLV field is used to carry the planning information, and the second sub-TLV field is used to carry a segment identifier.

The packet forwarding apparatus provided in this embodiment of this application may alternatively be implemented by using an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), generic array logic (generic array logic, GAL), or any combination thereof. Alternatively, the method provided in the foregoing method embodiments may be implemented by using software. When the method provided in the foregoing method embodiments is implemented by using software, each module in the foregoing packet forwarding apparatus may alternatively be a software module.

An embodiment of this application provides a packet forwarding apparatus, including a main control board and an interface board. The main control board and the interface board are configured to implement all or some of the steps of the packet forwarding method provided in the foregoing embodiments.

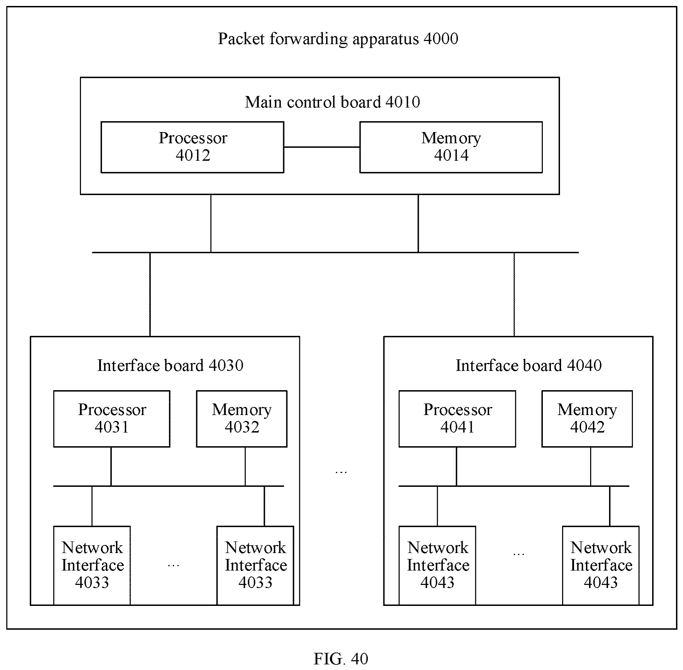

FIG. 40 is a diagram of still another packet forwarding apparatus 4000 according to an embodiment of this application. The packet forwarding apparatus 4000 is a network node or a functional component in the network node. The packet forwarding apparatus 4000 is configured to perform the packet forwarding method provided in the embodiment shown in FIG. 26 or FIG. 33. As shown in FIG. 40, the packet forwarding apparatus 4000 includes a main control board 4010, an interface board 4030, and an interface board 4040. In a case of multiple interface boards, a switching board (not shown in FIG. 40) is further included. The switching board is configured to complete data exchange between the interface boards (the interface board is also referred to as a line card or a service board).

The main control board 4010 is configured to complete functions such as system management, node maintenance, and protocol processing. The interface board 4030 and the interface board 4040 are configured to: provide various service interfaces (for example, a POS interface, a GE interface, and an ATM interface), and implement packet forwarding. The main control board 4010 mainly has three types of functional units: a system management and control unit, a system clock unit, and a system maintenance unit. The main control board 4010, the interface board 4030, and the interface board 4040 are connected to a system backboard through a system bus to implement interworking. The interface board 4030 includes one or more processors 4031. The processor 4031 is configured to: control and manage the interface board 4030 and communicate with the processor 4012 on the main control board 4010. The memory 4032 on the interface board 4030 is configured to store segment identifier planning information, a routing table entry, and the like. The interface board 4030 includes one or more network interfaces 4033, configured to send and receive a packet. A specific implementation process is not described herein again. As shown in FIG. 40, the main control board 4010 further includes a memory 4014. The memory 4014 is configured to store system management information, a protocol, and the like. This is not limited in this application.

As shown in FIG. 40, this embodiment includes multiple interface boards and uses a distributed forwarding mechanism. In this mechanism, an operation on the interface board 4040 is basically similar to an operation on the interface board 4030. For example, the interface board 4040 includes one or more network interfaces 4043, configured to send and receive a packet; includes a memory 4042, configured to store segment identifier planning information, a routing table entry, and the like; and includes a processor 4041, configured to control and manage the interface board 4040 and communicate with the processor 4012 on the main control board 4010. For brevity, the interface board 4040 is not described herein again.

The processor 4031 in the interface board 4030 and/or the processor 4041 in the interface board 4040 in FIG. 40 may be dedicated hardware or a chip, for example, a network processor or an application-specific integrated circuit, to implement the foregoing functions. This implementation is usually referred to as a manner of using dedicated hardware or a chip for processing on a forwarding plane. In another implementation, the processor 4031 in the interface board 4030 and/or the processor 4041 in the interface board 4040 may alternatively use a general-purpose processor, for example, a central processing unit (central processing unit, CPU).

In addition, it should be noted that there may be one or more main control boards. When there are multiple main control boards, the main control boards may include an active main control board and a standby main control board. There may be one or more interface boards. A network node with a stronger data processing capability provides a larger quantity of interface boards. In a case of multiple interface boards, the multiple interface boards may communicate with each other through one or more switching boards, and load sharing and redundancy backup may be implemented by the multiple interface boards together. In a centralized forwarding architecture, the network node may not need a switching board, and the interface board provides a function of processing service data of an entire system. In a distributed forwarding architecture, the network node includes multiple interface boards, data exchange between the multiple interface boards may be implemented through a switching board, and a large-capacity data exchange and processing capability is provided. Therefore, a data access and processing capability of the network node in the distributed architecture is greater than that of the network node in the centralized architecture. A specific architecture to be used depends on a networking deployment scenario, and is not limited herein.

In an optional implementation, the memory 4032 and/or the memory 4042 are/is a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, optical disc storage (including a compressed optical disc, a laser disc, an optical disc, a digital versatile optical disc, a Blu-ray disc, and the like), a magnetic disk or another magnetic storage device, or any other medium that can be used to carry or store expected program code in a form of instructions or a data structure and that can be accessed by a computer, but are/is not limited thereto. The memory 4032 may exist independently, and is connected to the processor 4031 through a communication bus, or may be integrated with the processor 4031. The memory 4042 may exist independently, and is connected to the processor 4041 through a communication bus, or may be integrated with the processor 4041.

The memory 4032 is configured to store program code, and the processor 4031 controls execution of the program code, to perform some or all of the steps of the method provided in the foregoing embodiments. The processor 4031 is configured to execute the program code stored in the memory 4032. The program code may include one or more software modules. The one or more software modules may be the functional modules provided in the embodiment in FIG. 38 or FIG. 39. The memory 4042 may also be configured to store the program code, and the processor 4041 controls execution of the program code, to perform some or all of the steps of the method provided in the foregoing embodiments. Similarly, the memory 4014 may also be configured to store program code, and the processor 4012 controls execution of the program code, to perform some or all of the steps of the method provided in the foregoing embodiments.

In an optional implementation, the network interface 4033 and the network interface 4043 may be apparatuses using any transceiver, and are configured to communicate with another node or a communication network, for example, an ethernet, a radio access network (radio access network, RAN), or a wireless local area network (wireless local area network, WLAN).

An embodiment of this application provides a packet forwarding apparatus, including a memory and a processor. The memory is configured to store a computer program. The processor is configured to execute the computer program stored in the memory, to cause the packet forwarding apparatus to perform all or some of the steps of the packet forwarding method provided in the foregoing embodiments.

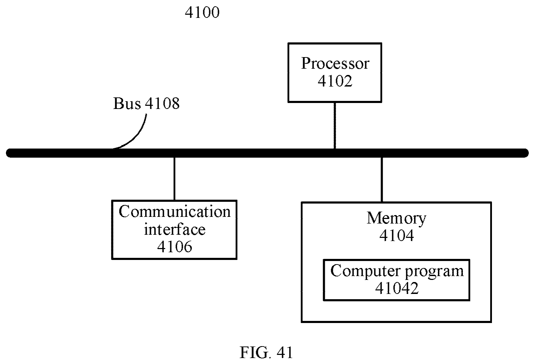

FIG. 41 is a diagram of yet another packet forwarding apparatus 4100 according to an embodiment of this application. The packet forwarding apparatus 4100 may be a network node or a functional component in the network node. The packet forwarding apparatus 4100 may implement the packet forwarding method provided in the embodiment shown in FIG. 26 or FIG. 33. Refer to FIG. 41. The packet forwarding apparatus 4100 includes a processor 4102, a memory 4104, a communication interface 4106, and a bus 4108. The processor 4102, the memory 4104, and the communication interface 4106 are communicatively connected through the bus 4108. The processor 4102, the memory 4104, and the communication interface 4106 may alternatively be connected in a connection manner other than a bus. A connection manner of the processor 4102, the memory 4104, and the communication interface 4106 is not limited in this embodiment of this application.

The memory 4104 is configured to store a computer program 41042, and the computer program 41042 includes instructions and data. The memory 4104 is various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 4102 may be a general-purpose processor. The general-purpose processor is a processor that reads and executes a computer program stored in a memory (for example, the memory 4104) to perform a specific step and/or operation. In a process of performing the step and/or operation, the general-purpose processor may use data stored in the memory (for example, the memory 4104). For example, the stored computer program may be executed, to implement a related function of the foregoing processing module 3820 and the like. The general-purpose processor may be a central processing unit (central processing unit, CPU). The processor 4102 may alternatively be a dedicated processor. The dedicated processor is a processor specially designed to perform a specific step and/or operation. The dedicated processor may be a digital signal processor (digital signal processor, DSP), an application-specific integrated circuit (application-specific integrated circuit, ASIC), a field-programmable gate array (field-programmable gate array, FPGA), a network processor (network processor, NP), or the like. The processor 4102 may alternatively be a combination of multiple processors, for example, a multi-core processor. The processor 4102 includes at least one circuit, to perform all or some of the steps in the packet forwarding method provided in the foregoing embodiments.

The communication interface 4106 includes interfaces such as an input/output (input/output, I/O) interface, a physical interface, and a logical interface that are configured to implement interconnection between components in the packet forwarding apparatus 4100, and an interface that is configured to implement interconnection between the packet forwarding apparatus 4100 and another apparatus (for example, a network node or a terminal-side device). The physical interface may be a gigabit ethernet (gigabit ethernet, GE) interface, and is configured to implement interconnection between the packet forwarding apparatus 4100 and the another device. The logical interface is an internal interface of the packet forwarding apparatus 4100, and is configured to implement interconnection between the components in the packet forwarding apparatus 4100. It is easily understood that the communication interface 4106 is used by the packet forwarding apparatus 4100 to communicate with the another device. For example, the communication interface 4106 is configured to send and receive information, a packet, and the like between the packet forwarding apparatus 4100 and the another device. The communication interface 4106 can implement related functions of the receiving module, the forwarding module, the advertisement module, and the like. In some embodiments, the packet forwarding apparatus 4100 includes a transceiver. The transceiver may also be configured to send and receive information, a packet, and the like between the packet forwarding apparatus 4100 and the another device. The communication interface 4106 can implement related functions of the receiving module, the forwarding module, the advertisement module, and the like.

The bus 4108 may be any type of communication bus, for example, a system bus, configured to implement interconnection between the processor 4102, the memory 4104, and the communication interface 4106.

The foregoing components may be separately disposed on chips that are independent of each other, or at least some or all of the components may be disposed on a same chip. Whether the components are separately disposed on different chips or integrated and disposed on one or more chips usually depends on a requirement of a product design. Embodiments of this application impose no limitation on specific implementations of the foregoing components.

The packet forwarding apparatus 4100 shown in FIG. 41 is merely an example. In an implementation process, the packet forwarding apparatus 4100 may further include other components, which are not listed one by one in this specification. The packet forwarding apparatus 4100 shown in FIG. 41 performs all or some of the steps of the packet forwarding method provided in the foregoing method embodiments to perform operations related to packet forwarding.

An embodiment of this application provides a packet forwarding system. The packet forwarding system includes a first network node and a second network node. The first network node includes the packet forwarding apparatus 3800 shown in FIG. 38, and the second network node includes the packet forwarding apparatus 3900 shown in FIG. 39. Alternatively, at least one of the first network node and the second network node includes the packet forwarding apparatus shown in FIG. 40 or FIG. 41. For example, the packet forwarding system is shown in FIG. 23.

An embodiment of this application provides a computer-readable storage medium. The computer-readable storage medium stores a computer program. When the computer program is executed (for example, executed by a network node or one or more processors), all or some of the steps of the method provided in the foregoing method embodiments are implemented.

An embodiment of this application provides a computer program product. The computer program product includes a program or code. When the program or the code is executed (for example, executed by a network node or one or more processors), all or some of the steps of the method provided in the foregoing method embodiments are implemented.

An embodiment of this application provides a chip. The chip includes a programmable logic circuit and/or program instructions. When the chip runs, the chip is configured to implement all or some of the steps of the method provided in the foregoing method embodiments.

All or some of the foregoing embodiments may be implemented by using software, hardware, firmware, or any combination thereof. When embodiments are implemented by using the software, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a computer, or includes a data storage apparatus, for example, a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that in this application, the term "at least one" means one or more, and the term "multiple" means two or more. The term "and/or" in this application describes only an association relationship for describing associated objects and represents that three relationships may exist. For example, A and/or B may represent the following three cases: Only A exists, both A and B exist, and only B exists. In addition, for ease of clear description, in this application, words such as "first", "second", and "third" are used to distinguish between same items or similar items whose functions and purposes are basically the same. A person skilled in the art may understand that the words such as "first", "second", and "third" do not limit a quantity and an execution order.

Different types of embodiments such as the method embodiments and the apparatus embodiments provided in embodiments of this application may be cross-referenced. This is not limited in embodiments of this application. An order of operations in the method embodiments provided in embodiments of this application can be properly adjusted, and the operations can be correspondingly added or deleted based on a situation. Any variation method that can be readily figured out by a person skilled in the art within the technical scope disclosed in this application shall fall within the protection scope of this application. Therefore, details are not described again.

In the corresponding embodiments provided in this application, it should be understood that the disclosed apparatus and the like may be implemented in other composition manners. For example, the apparatus embodiments described above are merely examples. For example, division of modules is merely division of logical functions and there may be other division manners in actual applications. For example, multiple modules or components may be combined or may be integrated to another system, or some features may be ignored or not executed.

The modules described as separate parts may or may not be physically separate, and the parts described as modules may or may not be physical modules, may be located in one position, or may be distributed on multiple devices. Some or all the modules may be selected based on actual requirements to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A packet forwarding method, wherein the method comprises:
receiving, by a first network node, a first packet, wherein a destination address field of the first packet comprises a first segment identifier, the first segment identifier is a compressed segment identifier, the first segment identifier corresponds to a first outbound interface of the first network node or the first segment identifier corresponds to a second network node, and the second network node is a next-hop node of the first network node;
based on the first outbound interface being faulty or the second network node being faulty, determining, by the first network node, a second segment identifier based on planning information, wherein the second segment identifier is a segment identifier in a segment list of the first packet or the second segment identifier is a segment identifier in the destination address field, and the planning information is segment identifier planning information of the node corresponding to the first segment identifier; and
forwarding, by the first network node, the first packet based on the second segment identifier.

2. The method according to claim 1, wherein the planning information comprises at least one of the following:
a length of a block field, a length of a node identifier field, a length of a compress function field, a length of an uncompress function field, a length of an arguments field, and a node identifier range.

3. The method according to claim 1 or 2, wherein the second segment identifier is a compressed segment identifier or a standard segment identifier, the compressed segment identifier has a length less than 128 bits, and the standard segment identifier has a length of 128 bits.

4. The method according to any one of claims 1 to 3, wherein the first segment identifier and the second segment identifier are sequentially arranged in the segment list; or
the first segment identifier and the second segment identifier are sequentially arranged in the destination address field.

5. The method according to any one of claims 1 to 4, wherein an outbound interface or a network node corresponding to the second segment identifier is located downstream of the first network node.

6. The method according to any one of claims 1 to 5, wherein when the first segment identifier corresponds to the first outbound interface of the first network node, the node corresponding to the first segment identifier is the first network node; or when the first segment identifier corresponds to the second network node, the node corresponding to the first segment identifier is the second network node.

7. The method according to any one of claims 1 to 6, wherein determining, by the first network node, the second segment identifier based on the planning information comprises:
determining, by the first network node based on the planning information, that the first segment identifier is the compressed segment identifier.

8. The method according to claim 7, wherein determining, by the first network node based on the planning information, that the first segment identifier is the compressed segment identifier comprises:
determining, by the first network node, the compress function field in the destination address field based on the planning information; and
determining, by the first network node based on a value of the compress function field, that the first segment identifier is the compressed segment identifier.

9. The method according to claim 8, wherein determining, by the first network node based on the value of the compress function field, that the first segment identifier is the compressed segment identifier comprises: determining, by the first network node based on the value of the compress function field being a non-null value, that the first segment identifier is the compressed segment identifier.

10. The method according to any one of claims 1 to 9, wherein determining, by the first network node, the second segment identifier based on the planning information comprises:
updating, by the first network node, a value of a segment left SL field in the first packet; and determining, by the first network node, the second segment identifier based on an updated value of the SL field;
updating, by the first network node, a value of a compression left CL field in the first packet; and determining, by the first network node, the second segment identifier based on an updated value of the CL field;
traversing, by the first network node, the destination address field to determine the second segment identifier; or
updating, by the first network node, a value of a target field in the first packet to determine the second segment identifier, wherein the target field is comprised in the destination address field, and the target field is located after the block field in the destination address field.

11. The method according to any one of claims 1 to 10, wherein the planning information comprises the node identifier range, and determining, by the first network node, the second segment identifier based on the planning information comprises:
determining, by the first network node based on the node identifier range, that a node identifier comprised in the second segment identifier is in the node identifier range.

12. The method according to any one of claims 1 to 11, wherein the destination address field is located in an internet protocol version 6 IPv6 header of the first packet.

13. The method according to any one of claims 1 to 12, wherein the method further comprises:
receiving, by the first network node, first routing information comprising the planning information.

14. The method according to claim 13, wherein the method further comprises: generating, by the first network node, a first routing table entry based on the first routing information, wherein the first routing table entry comprises the planning information.

15. The method according to claim 14, wherein the method further comprises:
deleting, by the first network node, the first routing table entry after preset duration based on the second network node being faulty.

16. The method according to any one of claims 13 to 15, wherein the first routing information is locator routing information or block routing information.

17. The method according to any one of claims 13 to 16, wherein the first routing information is carried in a target type-length-value TLV field comprising a first sub-TLV field and a second sub-TLV field, the first sub-TLV field is used to carry the planning information, and the second sub-TLV field is used to carry a segment identifier.

18. A packet forwarding method, wherein the method comprises:
advertising, by a second network node, first routing information comprising planning information, and the planning information is segment identifier planning information of the second network node.

19. The method according to claim 18, wherein the planning information comprises a node identifier range.

20. The method according to claim 18, wherein the planning information comprises a length of a compress function field.

21. The method according to claim 18, wherein the planning information comprises a length of a compress function field and a length of an uncompress function field.

22. The method according to any one of claims 19 to 21, wherein the planning information further comprises at least one of the following: a length of a block field, a length of a node identifier field, and a length of an arguments field.

23. The method according to any one of claims 18 to 22, wherein the first routing information is locator routing information or block routing information.

24. The method according to any one of claims 18 to 23, wherein the first routing information is carried in a target type-length-value TLV field comprising a first sub-TLV field and a second sub-TLV field, the first sub-TLV field is used to carry the planning information, and the second sub-TLV field is used to carry a segment identifier.

25. A packet forwarding apparatus, comprising a memory and a processor, wherein
the memory is configured to store a computer program; and
the processor is configured to execute the computer program stored in the memory, to cause the packet forwarding apparatus to perform the method according to any one of claims 1 to 17.

26. A packet forwarding apparatus, comprising a memory and a processor, wherein
the memory is configured to store a computer program; and
the processor is configured to execute the computer program stored in the memory, to enable the packet forwarding apparatus to perform the method according to any one of claims 18 to 24.

27. A packet forwarding system, comprising a first network node and a second network node, wherein
the first network node comprises the packet forwarding apparatus according to claim 25; and
the second network node comprises the packet forwarding apparatus according to claim 26.

28. A computer-readable storage medium, wherein the computer-readable storage medium stores a computer program; and when the computer program is executed, the method according to any one of claims 1 to 24 is implemented.

29. A computer program product, wherein the computer program product comprises a program or code; and when the program or the code is executed, the method according to any one of claims 1 to 24 is implemented.

30. A chip, wherein when the chip runs, the method according to any one of claims 1 to 24 is implemented.
